# EUROPÄISCHE PATENTSCHRIFT

(11) **EP 1 263 992 B1**
(45) Veröffentlichungstag und Bekanntmachung des Hinweises auf die Patenterteilung: **22.10.2003**
(21) Anmeldenummer: 01909626.2
(22) Anmeldetag: 15.01.2001
(51) Int. Cl.: C14C 9/00, D06M 15/643, D21H 17/59, C08G 77/388, C09D 183/08, C08L 83/08

(54) **POLYSILOXANE ZUR HYDROPHOBIERUNG**
POLYSILOXANES USED FOR HYDROPHOBING
POLYSILOXANES UTILISES POUR L'IMPERMEABILISATION

(30) Priorität: 27.01.2000 DE 10003322
(43) Veröffentlichungstag der Anmeldung: 11.12.2002
(73) Patentinhaber: Bayer Aktiengesellschaft, 51368 Leverkusen (DE)
(72) Erfinder: SCHÄFER, Walter, 42799 Leichlingen (DE); SACKMANN, Günter, 51379 Leverkusen (DE); REINERS, Jürgen, 51373 Leverkusen (DE); HASSEL, Tillmann, 50259 Pulheim (DE); SCHNEE, Manfred, 51381 Leverkusen (DE); NOVOTNY, Fritz, 51467 Bergisch Gladbach (DE)
(86) Internationale Anmeldenummer: EP0100400
(87) Internationale Veröffentlichungsnummer: WO01055456

(56) Entgegenhaltungen:
- WO-A-98/21369
- US-A- 3 754 971
- US-A- 4 931 062
- US-A- 5 702 490

## Beschreibung

Die Erfindung betrifft Cyanharnstoffgruppen-haltige Polysiloxane zur Hydrophobierung von Substraten, insbesondere Papier, Textilien, Leder oder Pelzen, insbesondere von Leder und Pelzfellen, sowie ein Verfahren zu ihrer Herstellung, ein Hydrophobiermittelsystem, enthaltend dieses Polysiloxan sowie ein Verfahren zur Herstellung hydrophober Substrate.

Schuhoberleder, Täschnerleder, Bekleidungsleder oder auch Automobil- und Möbelleder können durch weichmachende Nachgerbstoffe und Hydrophobiermittel so ausgerüstet werden, dass ein geschmeidiges, wasserabweisendes Leder (Waterproof-Leder) resultiert, das auch unter dynamischer Beanspruchung keine Penetration von Wasser zulässt. Zur Erzielung eines hohen Tragekomforts werden Leder mit hoher Wasserdampfpermeabilität verlangt. Dies ist zum Beispiel für Schuhe oder Bekleidungsleder erforderlich.

Aus DE-A-35 29 869, EP-A-324 345 (= DE-A-38 00 629) und WO 95/22627 sind carboxylgruppenhaltige Silicone bekannt, deren COOH-Gruppen über eine Alkylengruppe mit der Siliconhauptkette verbunden sind. Die Verfügbarkeit dieser Verbindungen im industriellen Maßstab ist jedoch begrenzt: Die Synthese könnte z.B. durch Platin-katalysierte Addition von endständig ungesättigten Säuren an SiH-funktionelle Siliconöle erfolgen, wobei Nebenreaktionen durch Einsatz von. Schutzgruppen vermieden werden müssen. Zuletzt muss die Schutzgruppe noch durch Basen oder Säuren hydrolytisch entfernt werden. Solche Verfahren sind darüber hinaus auch teuer. Auch der hydrophobierende Effekt solcher Emulsionen ist noch verbesserungsbedürftig.

Gemäß DE-A-44 04 890 wird ein Verfahren zur Hydrophobierung von Leder mit carboxylgruppenhaltigen Polysiloxanen in einer wässrigen Emulsion in Gegenwart von Emulgatoren beschrieben, das dadurch gekennzeichnet ist, dass man kammartig carboxylfunktionalisierte Polysiloxane einsetzt, bei denen die Carboxylgruppen über Spacergruppen in Form von linearen oder verzweigten C₂ bis C₄₀-Alkylengruppen, die durch bestimmte Substituenten unterbrochen sein können, an die Polymerhauptkette gebunden sind. In den Beispielen wird Leder mit Polysiloxanen hydrophobiert, deren Carboxylgruppe über einen (CH₂)₁₀-Spacer mit der Polysiloxan-Hauptkette verbunden sind. Mit einer Mineralsalzfixierung wurden Maeser-Werte von 15000-30000 bzw. 20000 bis >100000 Flexe erzielt. Nachteilig bei diesen Produkten ist die Verwendung von Emulgatoren, die die Hydrophobie beeinträchtigen, sowie der Einsatz von Metallsalzen zur Fixierung.

DE-C-196 46 916 betrifft die Verwendung von Carboxyamid-Polysiloxanen, die durch Umsetzung von aminofunktionellen Polysiloxanen mit Dicarbonsäureanhydriden erhältlich sind, zur Hydrophobierung von Materialien faseriger Struktur, insbesondere von Leder und Lederpelzen. Die Carboxyamid-Polysiloxane weisen einen Carboxylgruppengehalt von 0,02 bis 1,0 mMol/g sowie eine Molmasse Mn im Bereich von 2000 bis 60000 g/mol auf. Bei Einsatz dieser Verbindungen kann die Lederbehandlung in der wässrigen Flotte durchgeführt werden. Außerdem soll eine Nachbehandlung mit Metallsalzen und der Einsatz von Emulgatoren und Lösungsmitteln nicht nötig sein. Die in der DE-C-196 46 916 aufgeführten Verbindungen sind gemäß EP-A-95 676 herstellbar. Nachteilig ist, dass mit dem in der DE-C 196 46 916 beschriebenen Verfahren nur Silicon-Emulsionen mit einer Konzentration < 25 Gew.-% bereitgestellt werden können und eine Homogenisierung in einem zusätzlichen Schritt erforderlich ist. Sie erreichen jedoch, wie den Anwendungsbeispielen der DE-A-196 46 916 zu entnehmen ist, nicht die Hydrophobwerte, die für Waterproof-Leder verlangt werden. In der Regel werden im Maeser-Test (in Anlehnung an ASTM D 2099-70) mehr als 50000 Flexe verlangt. Das ist die Anzahl der Knickungen, die das Leder im Wasserbad unter mechanischer Stauchung ohne Wasserdurchtritt überstehen muss. Die in der DE-C-196 46 916 genannten Leder werden erst nach einer gegenüber der Kontrolle (14600 Stauchungen) um 50 % erhöhten Stauchungszahl wasserdurchlässig (Seite 14, Zeile 45 bis 47). Daher ist trotz dieses Fortschritts der erreichbare Hydrophobiereffekt noch nicht ausreichend. In der Beschreibung wird auf die übliche Fixierung mit Ameisensäure verwiesen. Die Wirkung der Hydrophobierung kann durch eine Nachbehandlung mit einem in der Gerberei üblichen zwei-, drei- oder vierwertigen Metallsalz, insbesondere mit einem basischen Chromsulfat, mit Aluminiumsulfat, Zirkonsulfat, Titansulfat, Calciumchlorid oder Magnesiumsulfat verstärkt werden (Seite 9, Zeilen 25 bis 27). In den Beispielen wird von einer Fixierung mit Chromitan (einem Chromsalz) auch Gebrauch gemacht. Trotzdem sind die Maeser-Werte noch zu niedrig für viele Anforderungen. Umgekehrt heißt das aber, dass die metallsalzfreie Fixierung immer noch verbesserungsbedürftig ist.

Bei der Verwendung von Carboxyamido-Polysiloxanen, carboxylgruppenhaltigen Polysiloxanen und insbesondere Polysiloxanen, die freie Aminogruppen enthalten, können jedoch noch weitere Nachteile auftreten. Die mit üblichen Farbstoffen gefärbten Leder weisen dann eine ungleichmäßige Farbintensität auf, die sich vor allem in einer Zweiseitigkeit des Leder äußern kann. Damit ist ein Farbunterschied zwischen Narbenseite und Fleischseite des Leders gemeint, wobei die Fleischseite wesentlich intensiver gefärbt erscheint als die Narbenseite. Auch der Griff des Leders ist bei Einsatz der bekannten Silicone oft seidig, unerwünscht siliconartig oder fettig.

DE-A-196 29 986 betrifft ein Verfahren zum Hydrophobieren von Leder, welche in Abwesenheit von vegetabilen, synthetischen und mineralischen Gerbstoffen nur mit Polymergerbstoffen und gegebenenfalls zur Vorgerbung mit Aldehyden oder reaktiven Carbonylverbinbdungen gegerbt worden sind, bei dem man als Hydrophobiermittel Polysiloxane gemäß WO 95/22627 (kammartig carboxylfunktionalisierte Polysiloxane) einsetzt Auch für diese Produkte wird eine Fixierung mit Zirkoniumsalzen beschrieben, um ausreichende Hydrophobiereffekte zu erzielen.

DE-A-196 39 782 beschreibt organopolysiloxanhaltige Zusammensetzungen auf Wasser-Basis, die beim Verdünnen mit Wasser im wesentlichen keine Alkohole freisetzen und als funktionelle Gruppen Glycidetheralkyl- und/oder (Meth)Acryloxyalkyl-Gruppen enthalten, wobei jedes Silicium im Organopolysiloxan eine funktionelle Gruppe trägt. Darüber hinaus werden auch Aminoalkylreste als weitere funktionelle Gruppe beansprucht. Die Produkte werden durch Cohydrolyse wasserlöslicher Organosilane hergestellt und unter anderem zur Hydrophobierung von Textil, Leder, Cellulose- und Stärkeprodukten empfohlen.

DE-A-196 51 287 A1 betrifft ionische Organosiliciumverbindungen, deren Herstellung und Verwendung. Die beanspruchten Verbindungen werden bevorzugt durch Addition der Doppelbindung funktioneller Acrylester oder Acrylamide an Aminopolysiloxane erhalten. Die beanspruchten ionischen Organosiliciumverbindungen wirken komplexierend auf Übergangsmetalle und können so in der Lederausrüstung (Chrom-gegerbte Leder) dauerhaft anbinden und zu einer permanenten hydrophilen Ausrüstung mit erwünschtem Weichgriff führen. Ebenso haben sie in der Textilausrüstung den Vorteil, neben sehr guten hydrophilen Eigenschaften und sehr guter Antistatik zu einem flauschigen Weichgriff zu führen (Seite 20, Zeilen 21 bis 27). Es handelt sich im Prinzip um Polysiloxane mit Betain-Charakter. Solche Produkte sind jedoch für eine Lederhydrophobierung, die auch unter dynamischen Belastungen einer Wasserpenetration standhalten muss, weniger geeignet, da die eingebauten Betain-Gruppen ihre Hydrophilie nicht verlieren (was nach den Ausführungen der DE-A 196 51 287 aber erwünscht ist) und somit den Hydrophobeffekt ungünstig beeinflussen.

DE-A-197 07 970 betrifft polycarbonsäure-funktionelle Polyorganosiloxane. Deren Herstellung erfolgt bevorzugt durch Umsetzung von aminofunktionellen Polysiloxanen mit Polycarbonsäureanhydriden, wobei Tricarbonsäureanhydride und Tetracarbonsäureanhydride eingesetzt werden. An jede Aminogruppe des Silicons werden somit über eine Amidgruppe mindestens zwei Carboxylgruppen gebunden. Durch diese besondere Anordnung von mindestens zwei Carboxylgruppen pro polycarbonsäurefunktionellem Rest wird aufgrund des Chelateffekts eine hohe Affinität der polycarbonsäurefunktionellen Polyorganosiloxane zu kationischen Substraten, insbesondere Metallionen angeführt. Daher eignen sie sich besonders zur Behandlung von gegerbtem Leder (Seite 3, Zeilen 2 bis 5). In den Beispielen wird jedoch eine Arbeitsweise in organischen Lösemitteln vorgeschlagen, die in der Lederindustrie nicht mehr praxisrelevant ist: So liegen die Silicone als Lösungen in Petrolether bzw. Methylisobutylketon (MiBK) vor. Die angegebenen Hydrophobwerte (statische Wasseraufnahme und Bally-Penetrometer) reichen in der Regel nicht aus.

Aus DE-A-43 30 378 sind anionische Cyanamidgruppen enthaltende Urethane mit längeren Kohlenwasserstoffresten bekannt, die sich als Nachgerbstoffe für Leder und Textilien und Emulgatoren eignen. Als Emulgatoren haben die beanspruchten Verbindungen den Vorteil, dass sie nach der Anwendung dimerisieren oder oligomerisieren und dabei ihren ionischen Charakter und damit ihre hydrophilen Eigenschaften verlieren. Die Produkte sind jedoch in ihrer Hydrophobwirkung ebenfalls nicht ausreichend, wenn sie allein eingesetzt werden.

EP-A-757 108 offenbart ein Verfahren zur Herstellung von hydrophobierten Ledern mit Silicon-Ölen, die in einem Copolymer aus einem ungesättigten wasserlöslichen sauren oder basischen Monomer und einem hydrophoben Comonomer dispergiert sind. Sehr gute Hydrophobeffekte können mit den eingesetzten Produkten nur in Verbindung mit einer Chromsalz-Fixierung erreicht werden.

Es sind also bereits zahlreiche Hydrophobiermittel vorgeschlagen worden. Die bekannten Produkte erfüllen die verschiedenen, hohen Anforderungen an die Hydrophobie des fertigen Leders, die Anforderungen hinsichtlich der Griffeigenschaften, der Reißfestigkeit, der Farbegalität, der Zurichtbarkeit und Wasserdampfdurchlässigkeit - meistens werden auch Kombination von mehreren dieser Eigenschaften verlangt - nur unzureichend. Darüber hinaus müssen sie mit Mineralsalzen fixiert werden, um das Optimum hinsichtlich der Hydrophobie zu erzielen. Mit Ameisensäure fixierte Hydrophobiermittel ergeben Leder, die bereits einen gewissen hydrophoben Charakter aufweisen, die sich jedoch für die Anwendung als Schuhoberleder nicht optimal eignen: Hydrophobe Leder sollen eine verminderte statische Wasseraufnahme und einen wasserabstoßenden Effekt aufweisen und zusätzlich auch unter hoher dynamischer Beanspruchung wasserdicht sein, einen weichen Griff haben und darüber hinaus auch für Wasserdampf durchlässig sein, um einen hohen Tragekomfort zu gewährleisten. Sie dürfen aber auch bei weichen Ledern die mechanische Festigkeit des Lederartikels nicht verändern, was für Schuhoberleder besonders wichtig ist. Darüber hinaus darf die Lederoberfläche nicht kleben oder den typischen Silicongriff aufweisen. Außerdem sollte die Fülle des Leders positiv beeinflusst werden. Weitere Anforderungen bestehen in der Lichtechtheit und Hitzestabilität des Leders. Wichtig ist außerdem die Permanenz der Hydrophobierung. Nass- und Farbechtheit sind für Bekleidungsleder besonders wichtige Eigenschaften. Von der Applikation her müssen auch Anforderungen erfüllt sein, die dem Kunden den bequemen Einsatz ermöglichen: Die Produkte sollen dünnflüssig und mit Wasser verdünnbar sein. Darüber hinaus sollten sie die erforderliche Lagerstabilität aufweisen. Besonders Silicon-Produkte sind in dieser Hinsicht kritisch, da sie entweder zu grobteilig sind und dann zur Phasentrennung neigen oder zusätzliche Emulgatoren enthalten, die die Hydrophobie verschlechtern und benetzend wirken. Die mit Hydrophobiermitteln ausgerüsteten Leder dürfen auch keine unerwünschte Losnarbigkeit zeigen. Auch die Zurichtbarkeit hydrophober Leder ist ein großes Problem, da die Haftung wässriger Beschichtungen auf dem hydrophoben Untergrund unbefriedigend ist bzw. bei zu oberflächlichem Sitz des Silicons ein wässriges Beschichtungsmittel für die Lederzurichtung schon beim Versuch der Applikation abperlen würde.

Ein anwendungstechnisches Problem besteht weiter darin, den hydrophoben Wirkstoff in eine stabile und feinteilige Emulsion zu überführen, um bei der Anwendung in der Gerberei eine rasche und gleichmäßige Verteilung des Wirkstoffs in der Fassflotte zu erreichen. Die bisher verwendeten Emulgatoren verbleiben im Leder und wirken dem Hydrophobeffekt entgegen. Sie sollten daher in Hydrophobiermitteln vermieden werden. Darüber hinaus besteht die Anforderung, eine vollständige Flottenauszehrung zu erreichen. Denn nicht aufgezogenes Produkt verursacht hohe Kosten für den Lederhersteller und belastet die Umwelt.

Die nach dem Stand der Technik eingesetzten Hydrophobiermittel bedürfen also weiterhin einiger Verbesserungen. Es sind Produkte erwünscht, die ausschließlich mit einer Ameisensäurefixierung vorzugsweise die gleiche Wirksamkeit zeigen wie mit der bisher in der Praxis üblichen Fixierung unter Verwendung von Chromsalzen oder anderen Mineralsalzen, und die oben genannten Anforderungen erfüllen. Es ist für den Anwender vorteilhaft, den zeitlichen Aufwand durch Verkürzung der einzelnen Schritte bei der Lederherstellung oder durch Zusammenfassung bestimmter Behandlungsschritte zu reduzieren. In diesem Sinne müssen Flottenwechsel und Waschvorgänge in der Praxis minimiert werden. Der Gerber erwartet weiterhin Produkte, die mit den üblichen Hilfsmitteln, die in der Nachgerbung, Färbung und Fettung eingesetzt werden, gut verträglich sind.

Die Aufgabe der vorliegenden Erfindung ist die Bereitstellung eines neuen Polysiloxans und eines wässrigen Hydrophobiermittelsystems für Leder oder Pelze, das mit einer einfachen Säurefixierung ebenso hohe Wasserdichtigkeit erreicht wie mit einer klassischen Mineralsalzfixierung und darüber hinaus auch die Anforderungen an Permanenz, Weichheit, Farbegalität, Zurichtbarkeit, Wasserdampfdurchlässigkeit und Nass- und Farbechtheit der damit hergestellten Leder erfüllt. Aufgabe der Erfindung ist es auch, verbesserte anionisch stabilisierte Hydrophobiermittel auf Basis von Polysiloxanen bereitzustellen, die beim physikalischen Auftrocknen ihre Hydrophilie, die durch Einbau anionischer Gruppen vorhanden ist, verlieren und ohne Zusatz externer Vernetzer mit sich selbst vernetzen. Aufgabe der Erfindung ist es weiter, Emulgatoren für Silicone bereitzustellen, die selbstinhibierend sind und mit dem Silicon stabile Emulsionen bilden.

Es wurden überraschend neue Cyanharnstoffgruppen-haltige Polysiloxane als Hydrophobiermittel gefunden, die die oben beschriebenen Nachteile der aus dem Stand der Technik bekannten Hydrophobiermittel vermeiden.

Die vorliegende Erfindung betrifft daher ein Cyanharnstoffgruppen-haltiges Polysiloxan, das dadurch gekennzeichnet ist, dass die Polysiloxankette mindestens eine Struktureinheit der Formel (1)

[BR_{b}SiO_{(3-b)/2}]ₘ (1)

und gegebenenfalls mindestens eine Struktureinheit der Formel

[ARₐSi O_{(3-a)/2}]ₖ (2)

und/oder mindestens eine Struktureinheit der Formel (3)

[R_{c}SiO_{(4-c)/2}]ₙ (3)

und gegebenenfalls mindestens eine Endgruppe ausgewählt aus den Formeln

R₃SiO_{1/2} (4a)

BR₂SiO_{1/2} (4b)

und

AR₂SiO_{1/2} (4c)

enthält, wobei
- B: für einen cyanhamstoffgmppenhaltigen Rest der Formel 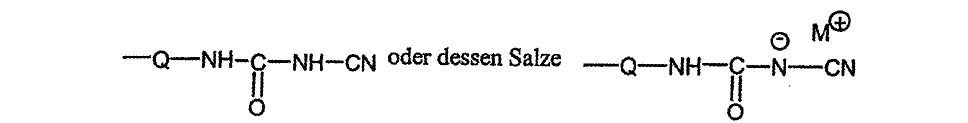 steht, in der
Q einen bivalenten, Kohlenwasserstoffrest bedeutet, der bevorzugt 2 bis 60 C-Atome besitzt und gegebenenfalls eine oder mehrere Ether-, Imino-, Ester-, Amid-, Urethan-, Harnstoff- oder Carbonatgruppen, Biuret-, Isocyanurat-, Uretdion-, Allophanat-, 2,4,6-Trioxo-tetrahydro-1,3,5-oxadiazin-Struktureinheiten oder Kombinationen daraus enthält und der gegebenenfalls durch eine oder 2 weitere Cyanharnstoffgruppen substituiert ist,
wobei
M für Na⁺, K⁺, Li⁺, NH⁺₄ oder 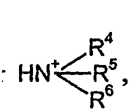 bevorzugt für NH₄^{⊕} oder HN^{⊕}(C₂H₅)₃ steht,
wobei R⁴, R⁵ und R⁶ unabhängig voneinander für C₁-C₁₈-Alkyl, insbesondere C₁-C₄-Alkyl oder substituiertes C₁-C₁₈-Alkyl, insbesondere Hydroxyalkyl, oder Aralkyl, insbesondere Benzyl, stehen,
- A: für einen C₁-C₇₀-Kohlenwasserstoffrest steht, der gegebenenfalls durch Hydroxy-, Carboxy-, Epoxy-, (Meth)Acrylat- oder Aminogruppen substituiert ist und der gegebenenfalls durch nicht benachbarte Ether-, Ester-, Amid-, Imino-, Urethan-, Harnstoff- oder Carbonatgruppen unterbrochen ist,
- R: für einen C₁ bis C₁₂-Alkylrest oder einen Phenylrest steht,
- a: für 0 oder 1 steht,
- b: für 0 oder 1 steht,
- k: für 0 bis 50 steht
- c: für 1 oder 2 steht,
- m: für 0 bis 50 steht, und
- n: für 10 bis 1000 steht,
mit der Maßgabe, dass mindestens eine Endgruppe der Formel (4b) vorhanden ist für den Fall, dass die Polysiloxankette nur Struktureinheiten der Formel (2) und/oder (3) enthält.

Im Sinne der Erfindung handelt es sich bei den genannten Cyanharnstoffgruppen um Gruppen der Struktur 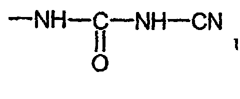 und deren Salze.

Bei dem in der allgemeinen und bevorzugten Definition von Q genannten bivalenten Kohlenwasserstoffrest handelt es sich um einen jeweils geradkettigen oder verzweigten, aliphatischen, araliphatischen oder aromatischen Rest, wobei die aliphatischen Reste gesättigt oder ein- oder mehrfach ungesättigt sein können und wobei der bivalente Kohlenwasserstoffrest auch eine Kombination der genannten aliphatischen, araliphatischen und/oder aromatischen Reste darstellen kann.

Bevorzugte erfindungsgemäße Polysiloxane weisen beispielsweise die folgenden Strukturen auf:

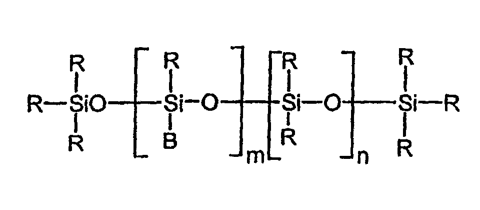

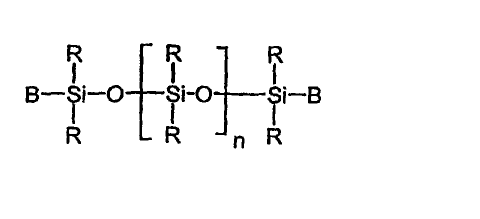

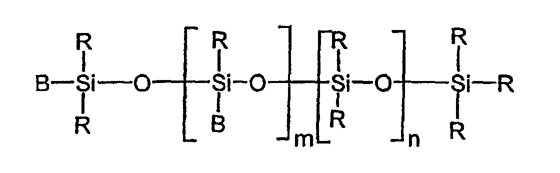

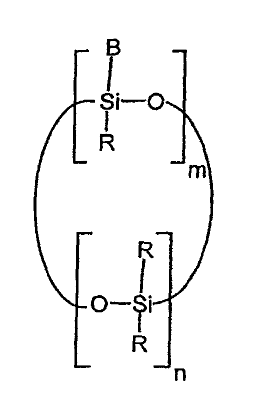

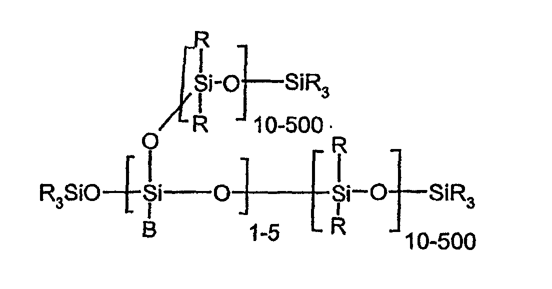

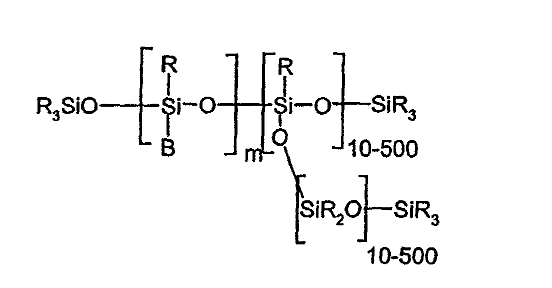

Lineare Polysiloxane sind besonders bevorzugt.

Besonders bevorzugt sind Polysiloxane, bei denen in der Definition von B Q für einen bivalenten Kohlenwasserstoffrest steht, der 2 bis 40 C-Atome besitzt und der gegebenenfalls eine oder mehrere Ether, Imino-, Ester-, Amid-, Urethan-, Harnstoff- oder Carbonatgruppen, Biuret-, Uretdion-, Isocyanurat-, Allophanatgruppen, 2,4,6-Trioxo-tetrahydro-1,3,5-oxadiazin-Struktureinheiten oder Kombinationen daraus enthält, wobei M^{⊕} für NH₄^{⊕} oder 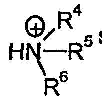 steht, wobei R⁴ bis R⁶ unabhängig voneinander für C₁-C₄-Alkyl stehen.

Bevorzugte Substituenten B sind: 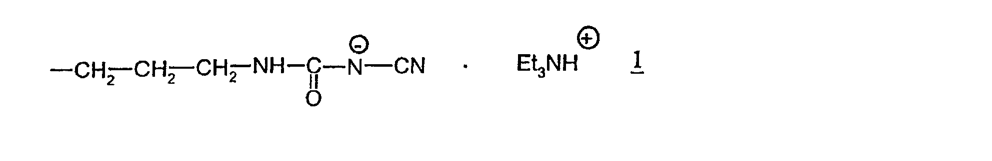 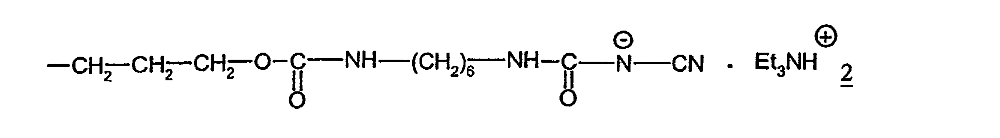 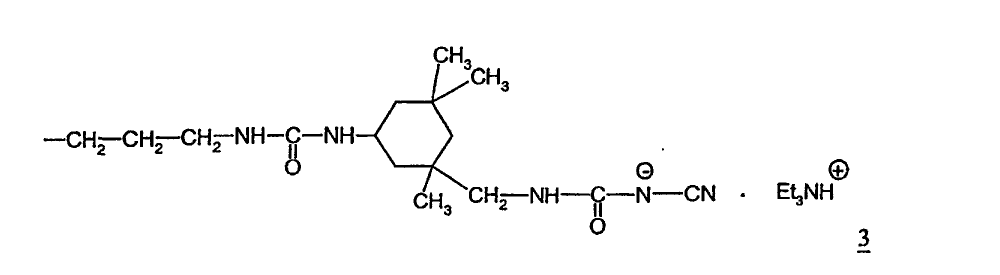 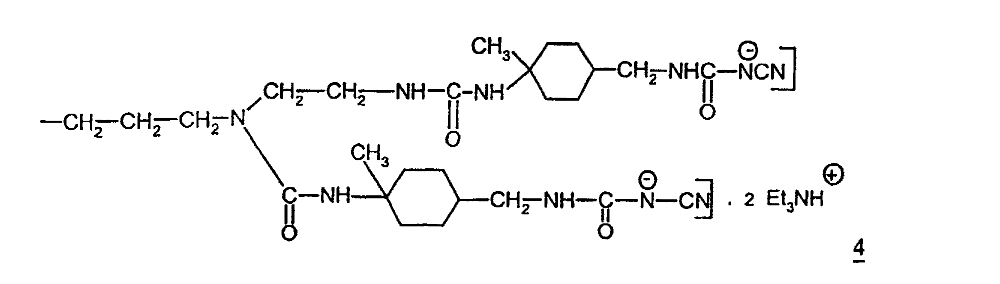 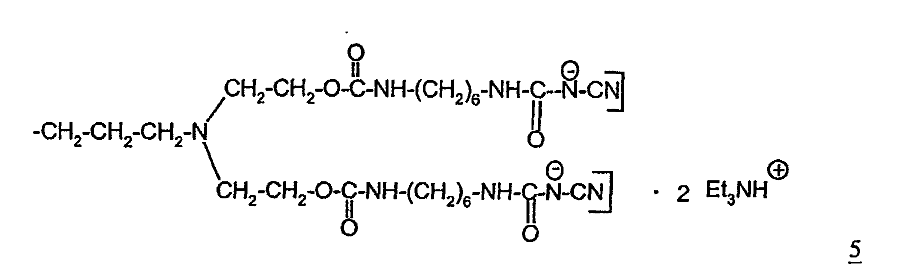 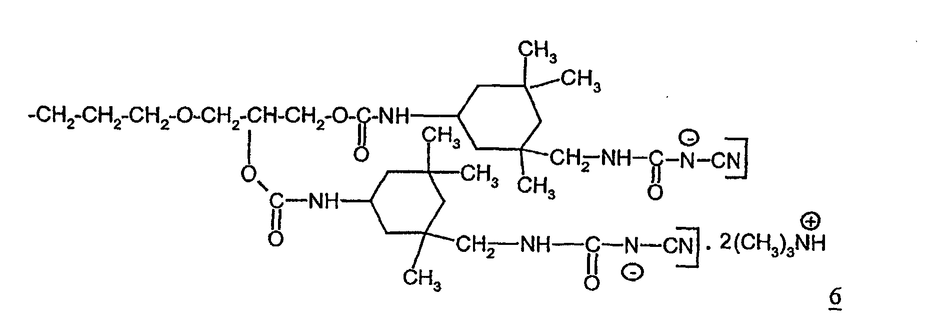 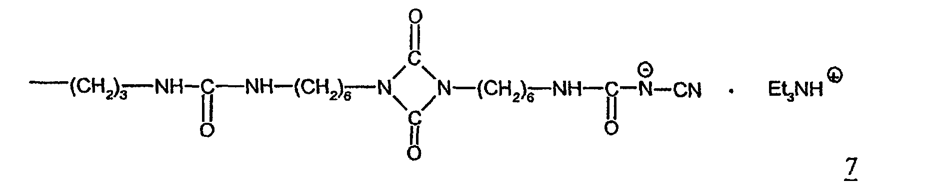 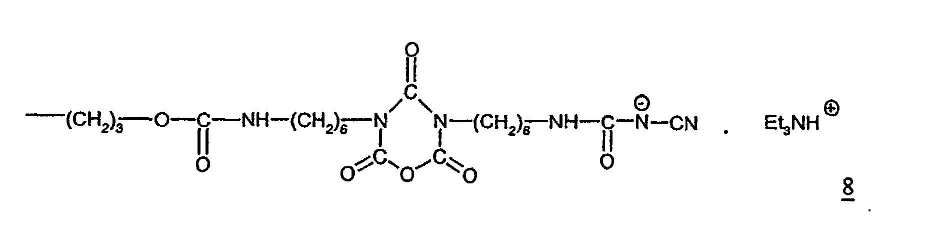 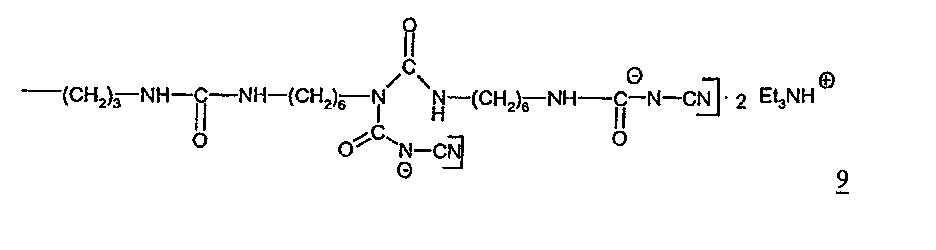 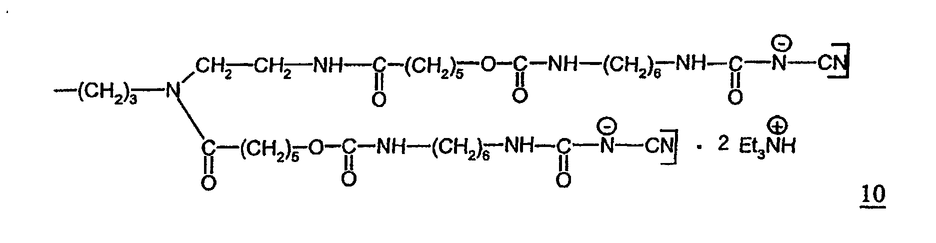 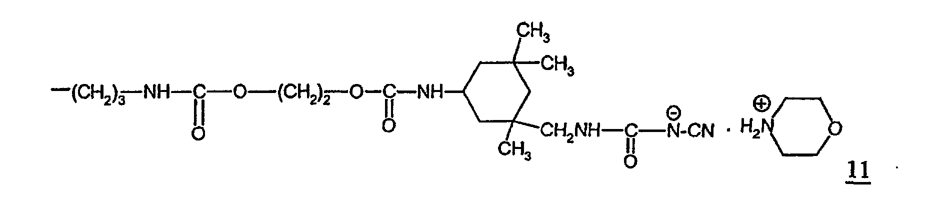 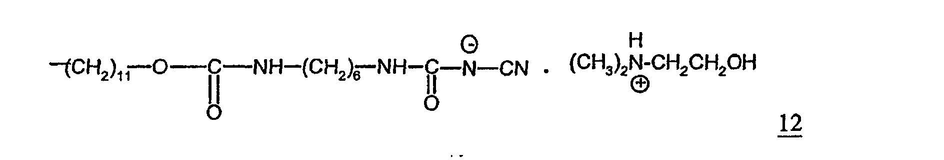 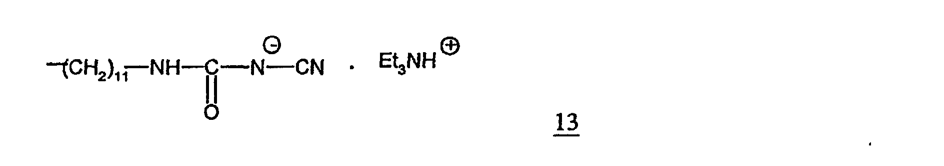 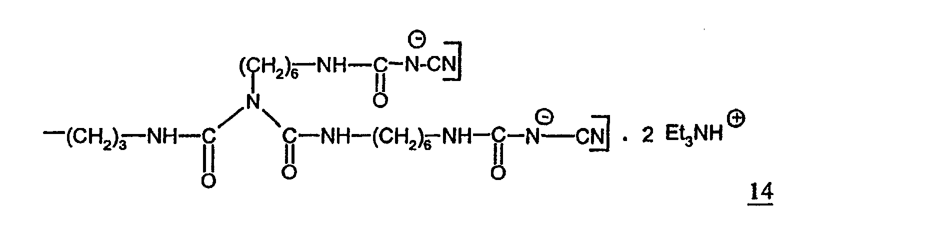 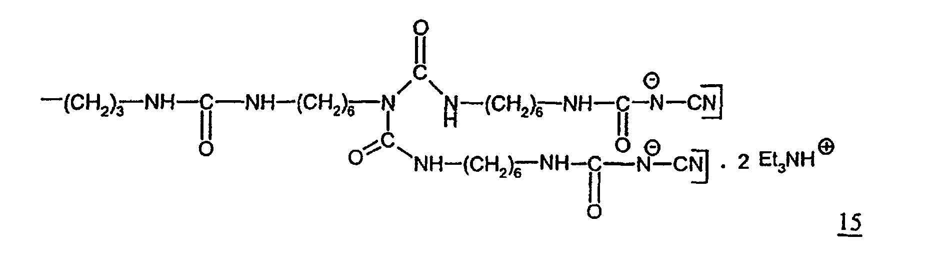 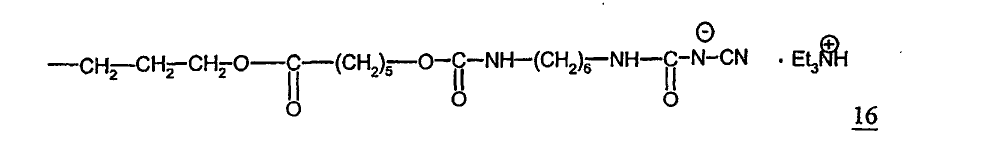 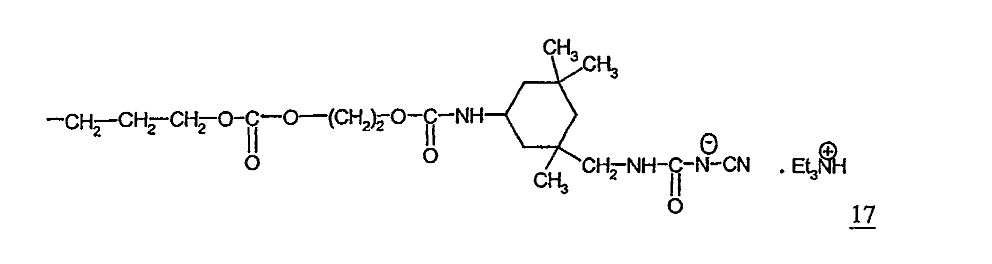 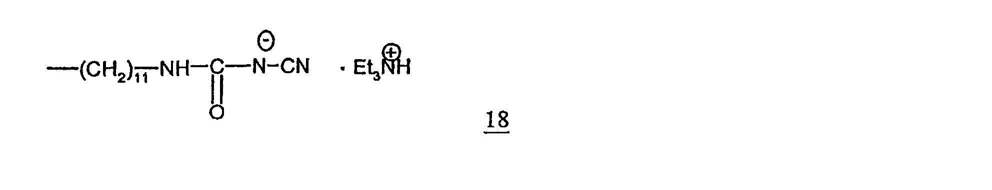 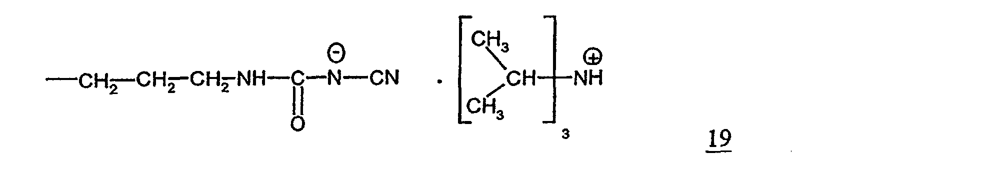 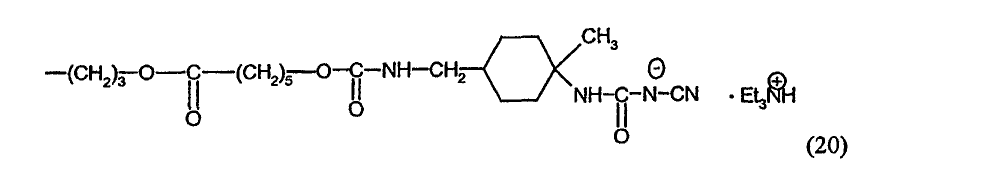 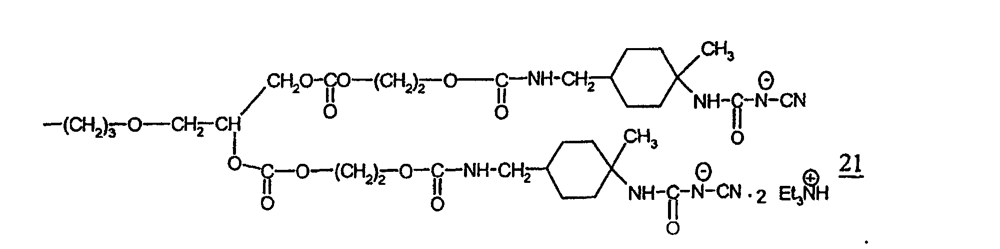 wobei Et jeweils für-C₂H₅ steht.

Bevorzugt steht A für einen Rest der Formel 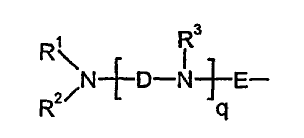 worin
- R¹ bis R³: unabhängig voneinander für Wasserstoff oder für einen einwertigen C₂-C₆₀-Kohlenwasserstoffrest stehen, der gegebenenfalls eine oder mehrere nicht benachbarte Ether-, Imino-, Amid-, Harnstoff-, Urethan-, Ester-, oder Carbonatgruppen enthält und gegebenenfalls mit einer oder zwei Carboxylgruppen -COOH bzw. deren Salze COO^{⊖}M₁^{⊕} und/oder einer oder zwei Hydroxylgruppen substituiert ist,
wobei
R¹ und R² nicht gleichzeitig über eine Carbonylgruppe mit dem Stickstoffatom verknüpft sind,
D und E unabhängig voneinander für einen zweiwertigen C₂-C₂₀-Kohlenwasserstoffrest stehen, der durch Hydroxyl substituiert oder durch nicht benachbarte O-Atome unterbrochen sein kann, wobei
- M₁^{⊕}: das Gegenion der neutralisierten Carboxylgruppen (-COO^{⊖}M₁^{⊕}) bedeutet und für Na⁺, K⁺, Li⁺, NH⁺₄, 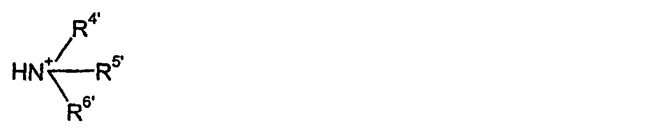 steht, wobei R^{4'} bis R^{6'} unabhängig voneinander für gegebenenfalls durch Hydroxy substituiertes C₁-C₁₈-Alkyl stehen,
und
- q: für 0 bis 3 steht.

Bei dem in der Definition von A in der Bedeutung von R¹ bis R³ genannten einwertigen C₂-C₆₀-Kohlenwasserstoffrest handelt es sich um einen jeweils geradkettigen oder verzweigten aliphatischen, araliphatischen oder aromatischen Rest, wobei die genannten aliphatischen Reste gesättigt oder ein- oder mehrfach ungesättigt sein können und der einwertige C₂-C₆₀-Kohlenwasserstoffrest auch eine Kombination der genannten aliphatischen, araliphatischen und/oder aromatischen Reste darstellen kann.

Als bevorzugte Substituenten A an der Polysiloxan-Hauptkette seien beispielsweise genannt:

-CH₂-CH₂-CH₂-NH-CO-CH=CH-COO^{⊖}M₁^{⊕}

-CH₂-CH₂-COOM₁,

-CH₂-(CH₂)₉-COOM₁,

-CH₂-(CH₂)₁₀-OH,

-CH₂-CH₂-CH₂-OH,

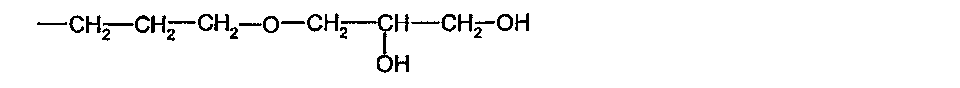

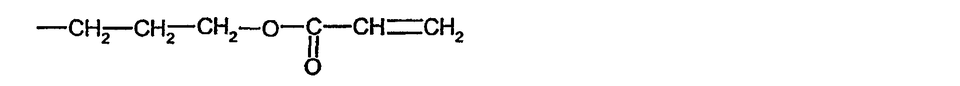

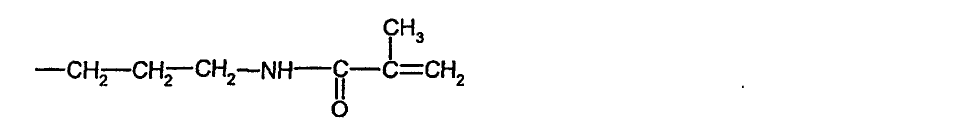

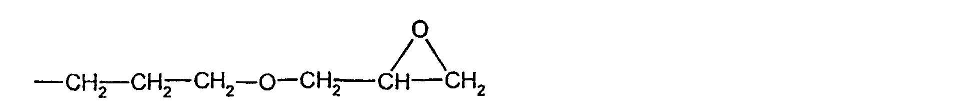

-CH₂-CH₂-CH₂-CH₂-CH=CH₂

-CH₂-CH₂-CH₂-NH-CH₂-CH₂-NH₂

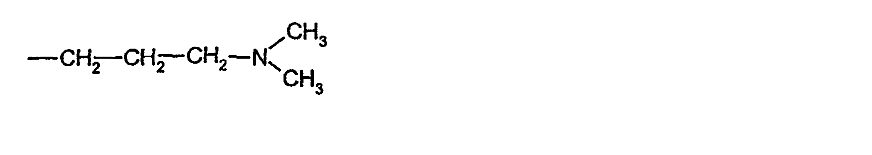

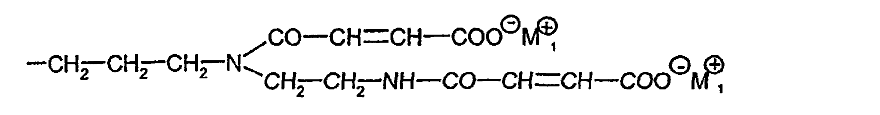

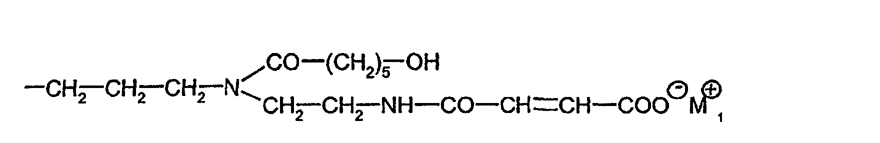

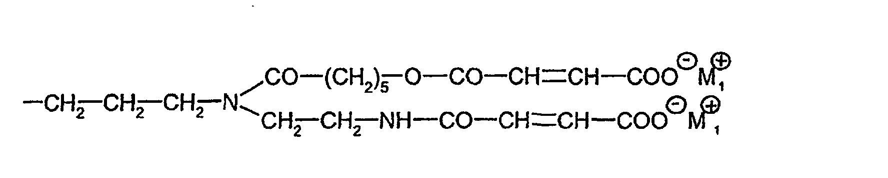

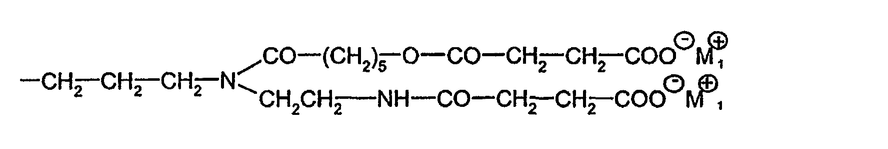

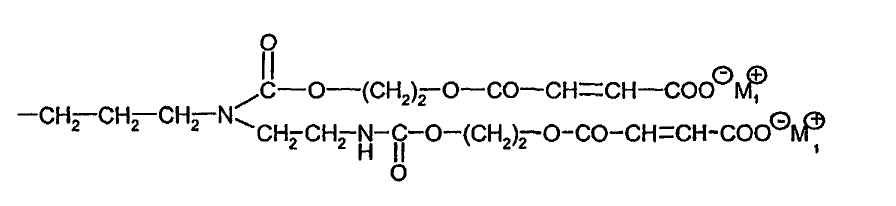

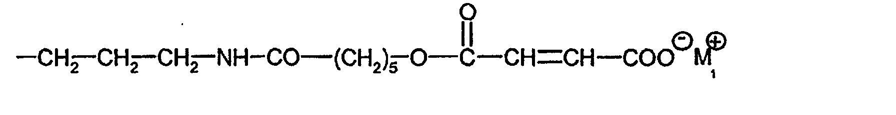

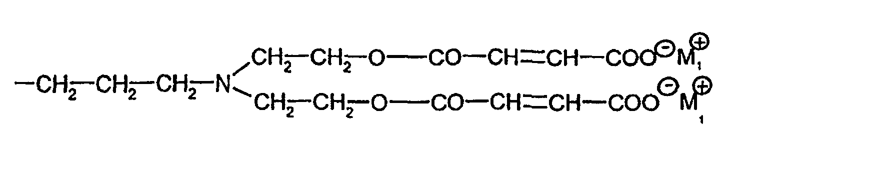

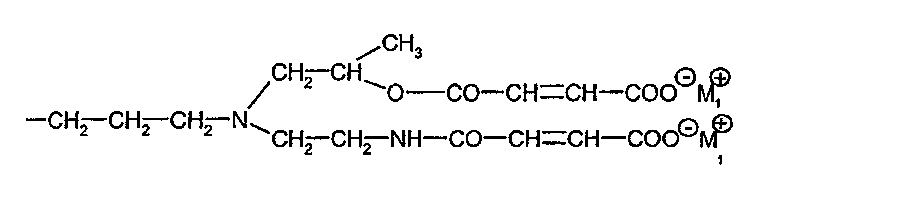

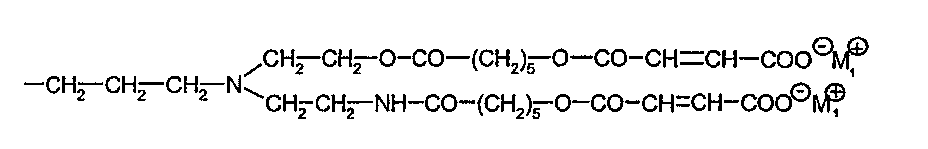

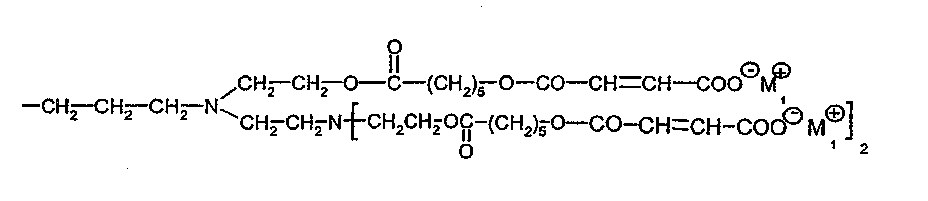

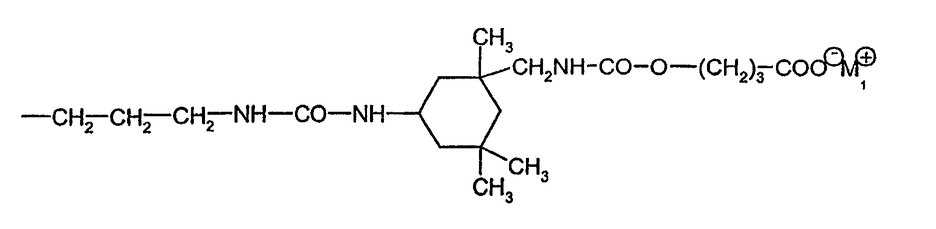

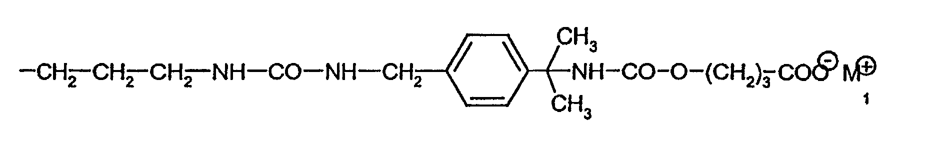

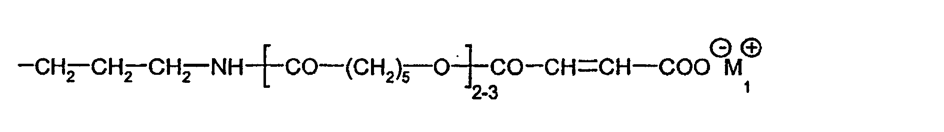

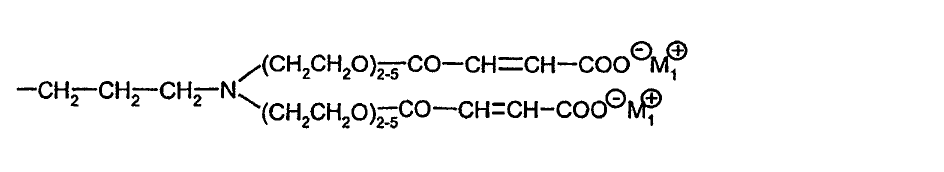

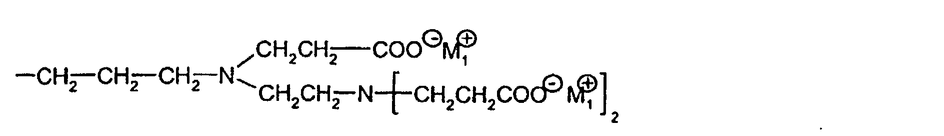

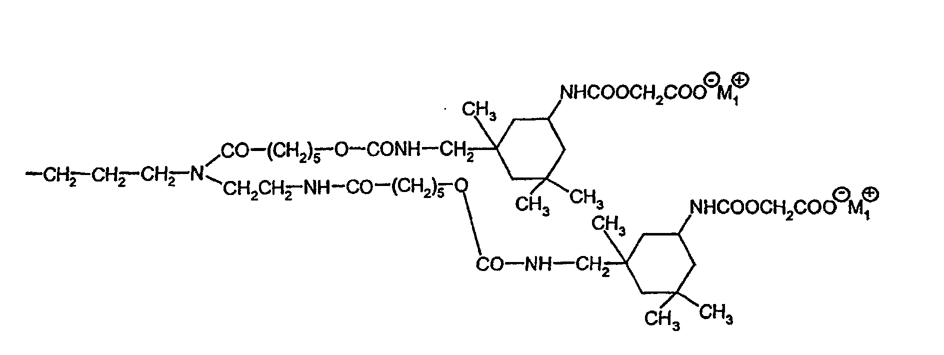

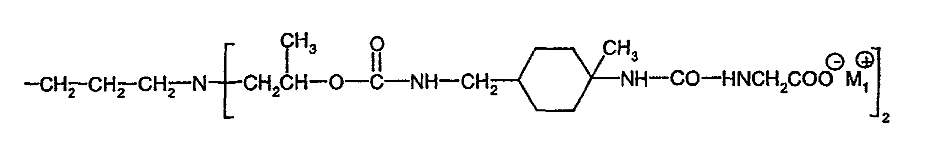

-CH₂―CH₂―CH₂―NH―CO―O―(CH₂)₃―O―CO―CH₂CH₂COO^{⊖}M^{⊕}₁

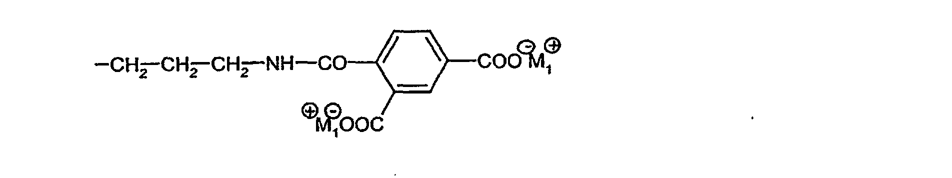

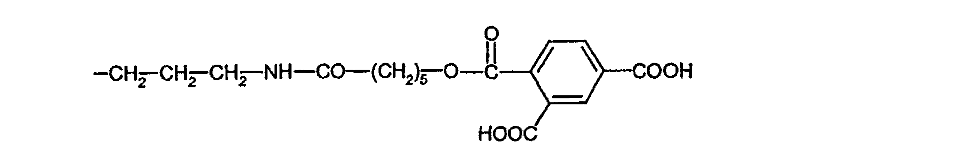

bzw. deren Salze 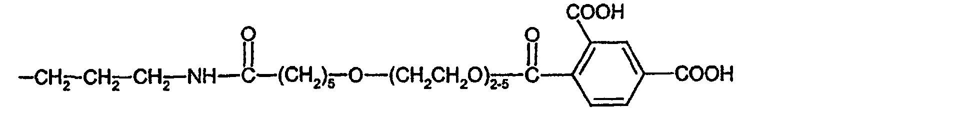 bzw. deren Salze.

Die erfindungsgemäßen Polysiloxane sind beispielsweise aus funktionalisierten Siloxaneinheiten, der Formel (1) und gegebenenfalls der Formel (2) und gegebenenfalls Endgruppen der Endgruppen (4b) und/oder (4c) und nicht funktionalisierten Siloxaneinheiten, wie die der Formel (3) und gegebenenfalls Endgruppen der Formel (4a) aufgebaut, mit der Maßgabe, dass das Polysiloxan für den Fall, dass es keine Einheiten der Formel (1) enthält, mindestens eine Endgruppe der Formel (4b) enthalten muss. Bevorzugte lineare Polysiloxane enthalten im statistischen Mittel 50 bis 1000, besonders bevorzugt 50 bis 400 nicht funktionalisierte Siloxaneinheiten (3) und 1 bis 50, besonders bevorzugt 1 bis 20 funktionalisierte Siloxaneinheiten (1) sowie mindestens zwei Endgruppen aus der Gruppe der Formeln (4a) bis (4c). Die Siloxaneinheiten können innerhalb der Polysiloxankette in beliebiger Reihenfolge angeordnet sein. Eine Polysiloxankette kann auch verschiedene Substituenten B und gegebenenfalls A enthalten. Es ist auch möglich, dass Polysiloxane mit unterschiedlichen Substituenten B und gegebenenfalls A gemischt werden. Vorzugsweise enthalten die linearen Polysiloxane zwei Endgruppen aus der Gruppe der Formeln (4a) und (4b), besonders bevorzugt Endgruppen der Formel (4a). Es ist auch möglich, dass die Polysiloxane eine an sich bekannte cyclische Struktur aufweisen, wobei sie nur aus Struktureinheiten der Formeln (1) und (3) und gegebenenfalls (2), bestehen. In diesem Fall weisen die Polysiloxane keine Endgruppen auf. Es ist weiterhin möglich, dass die Polysiloxane eine verzweigte Struktur aufweisen. Das ist der Fall, wenn b in Formel (1) beziehungsweise a in Formel (2) für Null stehen und/oder c in Formel (3) für 1 steht. Verzweigte Polysiloxane enthalten entsprechend dem Verzweigungsgrad am Ende jeder abzweigenden Kette eine Endgruppe aus der Gruppe der Formeln (4a) bis (4c). Jede vom Verzweigungspunkt ausgehende Kette kann dabei eine unterschiedliche Zahl an Siloxaneinheiten der Formel (1) und/oder (3) und gegebenenfalls der Formel (2) enthalten, wobei die Gesamtzahl der Siloxaneinheiten des Polysiloxans durch die Definition von k, m und n gegeben ist. Die erfindungsgemäßen Polysiloxane enthalten vorzugsweise funktionalisierte Siloxaneinheiten in folgendem Verhältnis, jeweils bezogen auf die Gesamtheit aller funktionalisierten Siloxaneinheiten:
80-100 Mol-%, bevorzugt 90-100 Mol-% durch Cyanharnstoffgruppen Siloxaneinheiten (1) und
0-20 Mol-%, bevorzugt 0-10 Mol-% Siloxaneinheiten (2).

Bevorzugte Polysiloxane sind solche, die
- eine mittlere Molmasse (Mw) von 1000 bis 100000 g/Mol, besonders bevorzugt 2000 bis 50000 g/Mol aufweisen, und
- einen Gehalt an Cyanharnstoffgruppen in Formel (1) von 0,05 bis 5 mMol pro Gramm Polysiloxan-Wirkstoff aufweisen und
- einen Gehalt an funktionellen Gruppen in Formel (2) von 0 bis 2 mMol pro Gramm Polysiloxan-Wirkstoff aufweisen, wobei unter "funktionellen Gruppen" bevorzugt Hydroxy und/oder Carboxygruppen zu verstehen sind.

Bevorzugt sind erfindungsgemäße Polysiloxane, die in neutralisierter Form eine Viskosität von 1000 bis 100000 mPas bei 20° und 100 sec⁻¹, vzw von 2000 bis 80000 mPas aufweisen.

Ganz besonders bevorzugt sind Polysiloxane, die nur Struktureinheiten der Formeln (1) und (3) und gegebenenfalls (4a) und/oder (4b) enthalten.

Die Erfindung betrifft weiterhin ein Verfahren zur Herstellung der erfindungsgemäßen Polysiloxane, das dadurch gekennzeichnet ist, dass man ein Polysiloxan, das Struktureinheiten der Formel (5)

[B' R_{b} SiO_{(3-b)/2}]ₘ (5)

und gegebenenfalls der Formel (2)

[ARₐSiO_{(3-a)/2}]ₖ (2)

und/oder der Formel (3)

[R_{c}SiO_{(4-c)/2}]ₙ (3)

und gegebenenfalls mindestens eine Endgruppen ausgewählt aus den Formeln

R₃SiO_{1/2} (4a),

B'R₂SiO_{1/2} (4b')

und

AR₂SiO_{1/2} (4c)

enthält, in der
- A, R, a, b, c, k, m und n: die oben genannte Bedeutung haben und
- B': für einen Rest der Formel

-Q-NCO

steht, worin
- Q: die oben angegebene Bedeutung hat,
mit Cyanamid und einem Neutralisationsmittel für die Cyanamidgruppen, vorzugsweise mit einem aus Cyanamid und Neutralisationsmittel gebildeten Salz umsetzt.

Im allgemeinen stellt man zunächst ein isocyanatgruppenhaltiges Polysiloxan her, das dann in Wasser oder in einem inerten Lösemittel in Gegenwart von Cyanamid und Neutralisationsmittel oder in Gegenwart eines aus Neutralisationsmittel und Cyanamid gebildeten Cyanamid-Salzes zum gewünschten Endprodukt umgesetzt wird.

Geeignete Neutralisationsmittel für die Cyanamid- und gegebenenfalls vorhandenen Carboxylgruppen des Polysiloxans, die somit das oben genannte Gegenion M^{⊕} bzw. M₁^{⊕} bilden, sind beispielsweise Natronlauge, Kalilauge, Ammoniak sowie Alkanolamine und Amine. Bevorzugt sind Ammoniak, Triethylamin, Trimethylamin, Tributylamin, Triisopropylamin, Ethanolamin, Diethanolamin, Methyldiethanolamin, Triethanolamin, Morpholin, Dibutylamin, Cyclohexylamin, Isopropanolamin, Diethylamin, Piperidin, N-Methylpiperidin, 2,2',6,6'-Tetramethylpiperidin-4-ol, Pyridin, N-Methylmorpholin, N,N-Dimethylaminoethanol.

Besonders bevorzugt sind flüchtige tertiäre Amine und Ammoniak, insbesondere tertiäre Trialkylamine mit 1 bis 4 C-Atomen pro Alkyl-Rest. Ganz besonders bevorzugt sind Ammoniak, Triisopropylamin, Triethylamin.

Die Reaktionstemperatur für diese Umsetzung mit Cyanamid/Neutralisationsmittel wird im allgemeinen zwischen 5 und 80°C, vorzugsweise zwischen 20 und 60°C gehalten.

Die Reaktionszeit beträgt zwischen wenigen Minuten und einigen Stunden. Die Reaktion ist abgeschlossen, wenn kein freies Isocyanat mehr nachweisbar ist.

Nach einer bevorzugten Ausführungsform werden isocyanatgruppenhaltiges Polysiloxan und ein Salz aus Cyanamid und Neutralisationsmittel in Gegenwart eines Lösemittels umgesetzt.

Geeignete Lösemittel sind inerte Lösemittel wie Tetrahydrofuran, Aceton, Ester wie Ethylacetat, Propylenglykoldiacetat oder Methoxypropylacetat oder Ethoxyethylpropionat, N-Methylpyrrolidon, Methylethylketon, Toluol, Pyrrolidon oder reaktionsträge Alkohole wie Isopropanol und n-Butanol.

Die zur Herstellung der erfindungsgemäßen Polysiloxane eingesetzten isocyanatgruppenhaltigen Polysiloxane mit Struktureinheiten (5) sind an sich bekannt und können z.B. in bekannter Weise hergestellt werden durch Umsetzung von Polyisocyanaten mit Polysiloxanen, die gegenüber NCO-Gruppen reaktive fimktionelle Gruppen aufweisen, d.h. Struktureinheiten der weiter unten angegebenen Formel (6) und/oder (7) enthalten.

Ein weiteres Verfahren zur Herstellung der als Ausgangsstoffe eingesetzen isocyanatgruppenhaltigen Polysiloxane mit Struktureinheiten (5) ist die Umsetzung von Aminogruppen-haltigen Polysiloxanen mit Struktureinheiten (6) 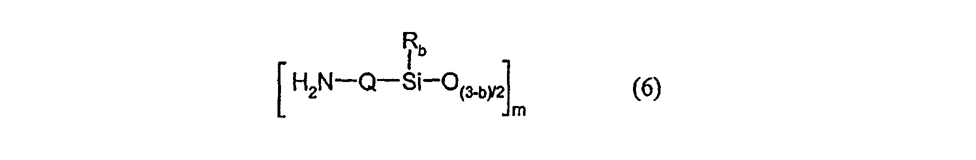 worin
Q b und m die oben angegebenen Bedeutung haben,
mit Phosgen oder mit Bis(t-butyl)-pyrocarbonat (=Bis-tert.-butyl-tricarbonat). An sich bekannt ist auch die Platin-katalysierte Addition von ungesättigten Isocyanaten wie Allylisocyanat an SiH-funktionelle Polysiloxane.

Zur Herstellung der isocyanathaltigen Polysiloxane mit Struktureinheiten der Formel (5) sind außer den bekannten aminogruppenhaltigen Polysiloxanen mit Struktureinheiten (6) auch hydroxygruppenhaltige Polysiloxane mit Struktureinheiten (7) 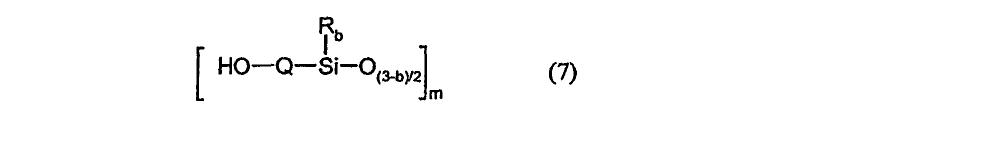 worin Q, m und b die oben angegebene Bedeutung haben
geeignet.

Struktureinheiten (6) bzw. (7) sind beispielsweise endständige oder seitenständige, Amino- oder Hydroxyl-Substituenten aufweisende Siloxan-Struktureinheiten.

Geeignete Amino- oder Hydroxylsubstituenten

-Q-NH₂ bzw. -Q-OH

sind beispielsweise:

-CH₂-CH₂-CH₂-NH₂

-CH₂-CH₂-CH₂-NH-CH₂-CH₂-NH₂

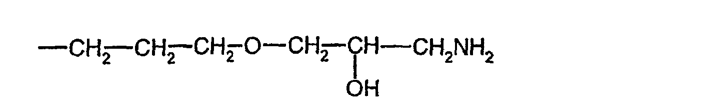

-CH₂-CH₂-CH₂-OH

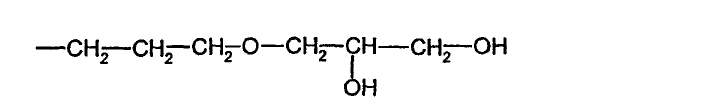

-(CH₂)₁₁-NH₂

-(CH₂)₁₁-OH

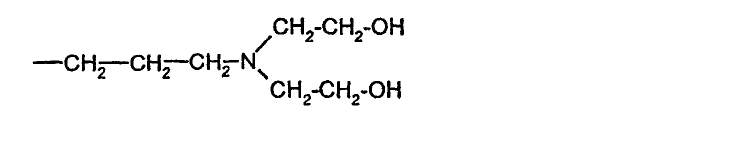

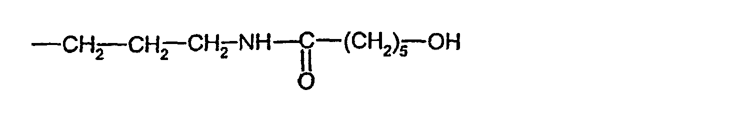

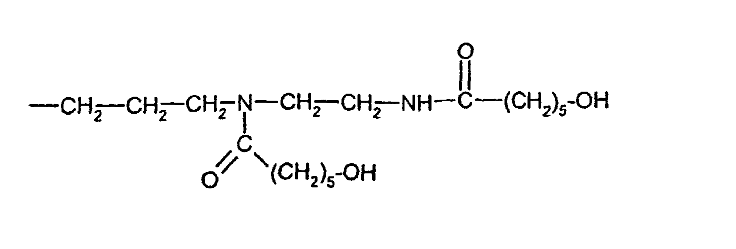

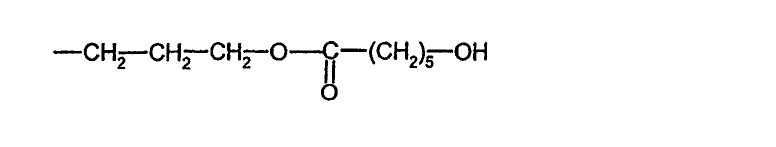

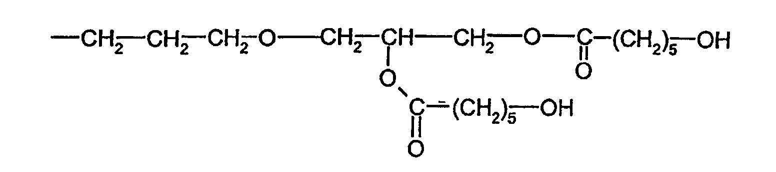

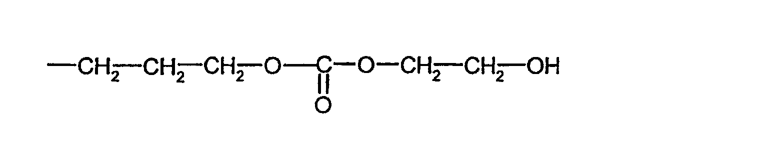

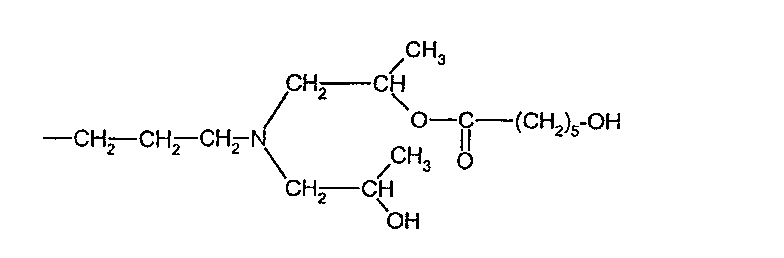

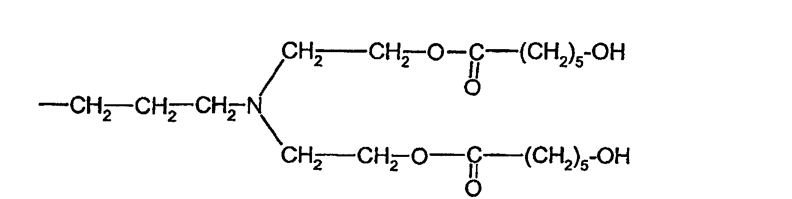

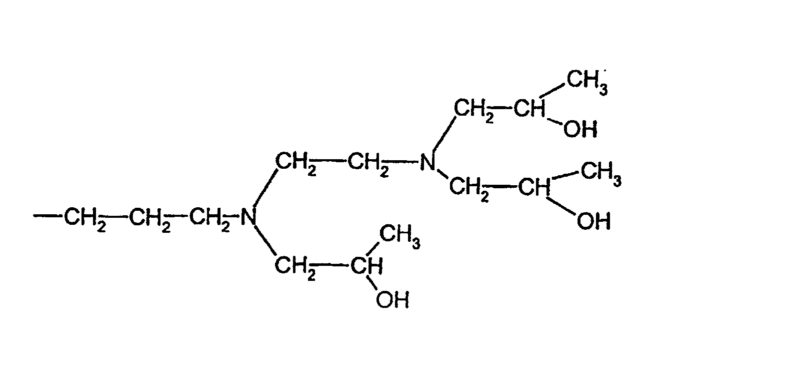

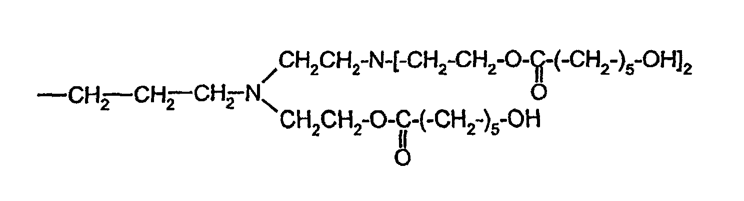

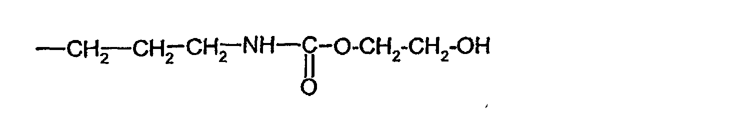

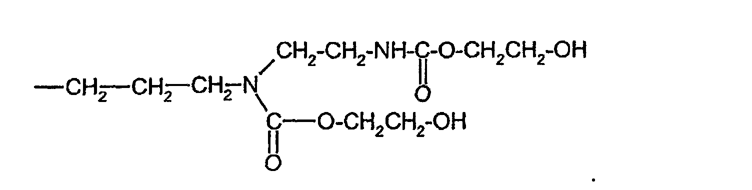

Geeignete Polyisocyanate zur Einführung der Struktureinheiten (5) in die als Ausgangsstoffe einzusetzenden Polysiloxane (mit Struktureinheiten (6) und (7)) sind beispielsweise organische Polyisocyanate, die mindestens zwei freie NCO-Gruppen pro Molekül aufweisen. Bevorzugt sind Diisocyanate X(NCO)₂, wobei X für einen zweiwertigen aliphatischen Kohlenwasserstoffrest mit 4 bis 12 C-Atomen, einen zweiwertigen cycloaliphatischen Kohlenwasserstoffrest mit 6 bis 15 C-Atomen oder einen zweiwertigen aromatischen Kohlenwasserstoffrest mit 6 bis 15 C-Atomen oder einen araliphatischen Kohlenwasserstoffrest mit 7 bis 15 C-Atomen steht.

Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanatomethyl-4-methyl-4-isocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanato-diphenylmethan, p-Xylylendiisocyanat, Nonyltriisocyanat sowie aus diesen Verbindungen bestehende Gemische, Dimeryldiisocyanat, Bis-1,4-(1-isocyanato-2,2-dimethyl-ethyl-2)benzol, Bis-1,4-(1-isocyanato-1,1-dimethyl-ethyl-2)benzol (TMXDI).

Es ist selbstverständlich auch möglich, die in der Polyurethanchemie an sich bekannten höherfunktionellen Polyisocyanate oder auch an sich bekannten modifizierte, beispielsweise Carbodiimidgruppen, Allophanatgruppen, Isocyanuratgruppen, Urethangruppen und/oder Biuretgruppen aufweisende Polyisocyanate alleine oder anteilig (mit)zuverwenden.

Weiterhin geeignete Polyisocyanate sind solche Verbindungen, die Oxadiazintrion-Struktureinheiten (i) oder Uretdion-Struktureinheiten (ii) 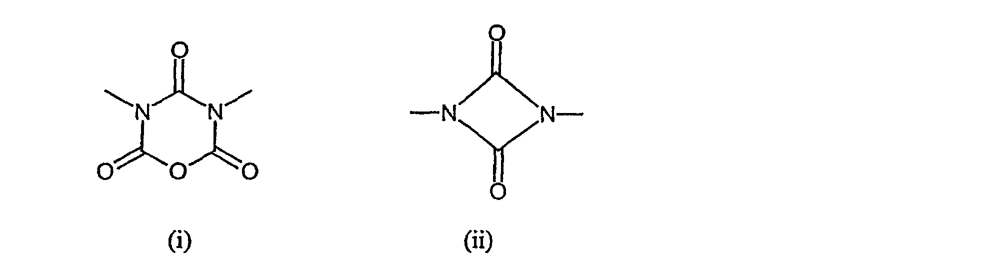 enthalten.

Als Aufbaukomponenten zur Einführung der Oxadiazintrion und/oder Uretdion-Struktureinheiten der Formeln (i) bzw. (ii) eignen sich Diisocyanate der Formeln (iii) und/oder (iv) 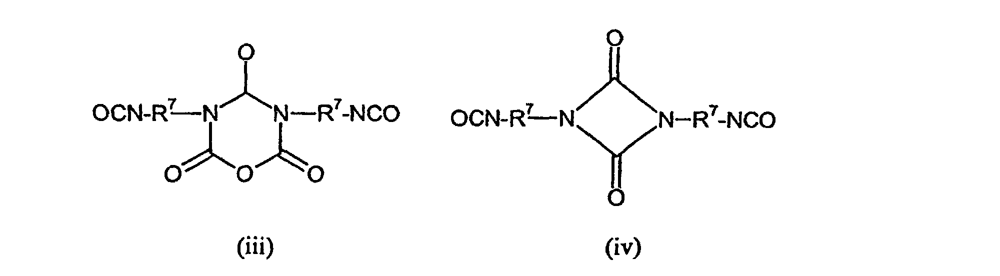 worin
- R⁷: unabhängig voneinander für den zweiwertigen Rest eines aliphatischen Kohlenwasserstoffs mit 1 bis 15 C-Atomen eines cycloaliphatischen Kohlenwasserstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen steht.

Beispiele für derartige Polyisocyanate sind 1,3-Bis-(5-isocyanato-1,3,3-trimethylcyclohexyl-methylen)-2,4-dioxo-1,3-diazetidin; 1,3-Bis-(3-isocyanato-4-methylphenyl)-2,4-dioxo-1,3-diazetidin; 1,3-Bis-(6-isocyanato-hexyl)-2,4-dioxo-1,3-diazetidin; 3,5-Bis-(5-isocyanato-1,3,3,-trimethyl-cyclohexyl-methylen)-2,4,6-trioxotetrahydro-1,3,5-oxadiazin; 3,5-Bis-(4-isocyanato-cyclohexyl)-2,4,6-trioxo-tetrahydro-1,3,5-oxadiazin und 3,5-Bis-(6-isocyanato-hexyl)-2,4,6-trioxo-tetrahydro-1,3,5-oxadiazin (Desmodur® LB 202, Bayer AG).

Von den Isocyanaten der Formeln (iii) und (iv) werden diejenigen der Oxadiazintrion-Reihe (iii) bevorzugt eingesetzt, besonders bevorzugt 3,5-Bis-(6-isocyanatohexyl)-2,4,6-trioxo-tetrahydro-1,3,4-oxadiazin.

Besonders bevorzugte Rohstoffe sind Aminopolysiloxane die Struktureinheiten (6) enthalten, die durch Umsetzung von nicht funktionalisierten Polysiloxanen wie Polydimethylpolysiloxanen vorzugsweise mit einer Viskosität von 500 bis 12500 mPas bei 20°C, mit einem Aminosilan der Formel 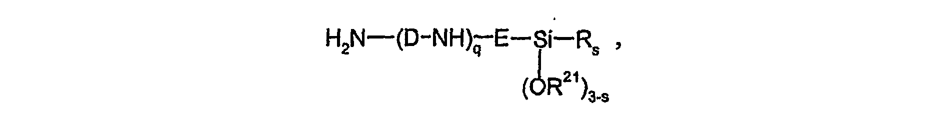 in der
- s: für 0 oder 1 steht,
und wobei
- E, D, R und q: die oben genannte Bedeutung haben und
- R²¹: für Methyl oder Ethyl steht,
vorzugsweise mit N-(2-Aminoethyl)-3-aminopropyl-dimethoxymethylsilan oder N-(2-Aminoethyl)-3-aminopropyl-diethoxymethylsilan oder 3-Aminopropyldi(m)ethoxymethylsilan in Gegenwart von basischen Katalysatoren vorzugsweise NaOH, KOH, Trialkylammoniumhydroxide oder starke basische Ionenaustauscher, erhalten werden. Dimethylpolysiloxane mit einer Viskosität zwischen 500 und 6000 mPas bei 20°C sind als Rohstoffe zur Herstellung der genannten Aminopolysiloxane besonders bevorzugt.

Vorzugsweise werden Dimethylpolysiloxane und das entsprechende Aminosilan in einer solchen Menge eingesetzt, dass Aminogruppen enthaltende Polysiloxane gebildet werden, deren Basen-N-Gehalt 0,1 % bis 2,0 Gew-% beträgt, bevorzugt 0,2 bis 1,0 Gew.-% und besonders bevorzugt 0,25 bis 0,8 Gew.-%. Die Viskosität der Aminopolysiloxane liegt vorzugsweise bei 20°C (D = 100 s⁻¹) bei 50 bis 2000 mPas, bevorzugt bei 50 bis 1000, besonders bevorzugt bei 50 bis 500, weiter bevorzugt bei 50 bis 200 mPas.

Weiterhin bevorzugte Rohstoffe zur Herstellung von isocyanatgruppenhaltigen Polysiloxanen mit Struktureinheiten (5) sind auch Hydroxypolysiloxane mit Struktureinheiten (7), die durch Umsetzung von oben genannten Aminopolysiloxanen mit Struktureinheiten (6) mit C₂-C₁₂-Alkylenoxiden und/oder Lactonen, bevorzugt Butyrolacton oder Caprolacton, und/oder cyclischen Carbonaten, bevorzugt Ethylencarbonat oder Propylencarbonat hergestellt werden. Die Umsetzungsprodukte der Aminopolysiloxane mit Alkylenoxiden können ihrerseits mit Lactonen und/oder cyclischen Carbonaten weiter umgesetzt sein. Die Umsetzung mit dem Lacton und/oder cyclischem Carbonat erfolgt vorzugsweise bei 30 bis 180°C; gegebenenfalls in einem inerten Lösemittel wie Aceton, Toluol, Ethylacetat, Chloroform, Methylethylketon. Bevorzugt sind Ethylacetat und Aceton.

Geeignet sind auch hydroxyfunktionelle Polysiloxane, die durch Hydrolyse bekannter epoxyfunktioneller Polysiloxane (wie Epoxypropoxy-propyl substituierter Polysiloxane) erhältlich sind. Geeignet sind weiter hydroxyfunktionelle Polysiloxane, die durch Umsetzung entsprechender SiH-funktioneller Polysiloxane mit ungesättigten Alkoholen wie Allylalkohol, oder den Trimethylsilylethern dieser Alkohole und nachfolgende Hydrolyse des Trimethylsiloxy-Restes unter Freisetzung der Hydroxylgruppe erhältlich sind.

Vorzugsweise besitzen die hydroxyfunktionellen Polysiloxane einen Hydroxylgehalt von 0,1 bis 3 Gew.-%, bevorzugt 0,1 bis 1 Gew.-%, besonders bevorzugt 0,25 bis 0,8 Gew.-%. Die Viskosität solcher Hydroxypolysiloxane liegt je nach Kettenlänge der Seitenkette zwischen 100 und 100 000 mPa·s (20°C, D = 100 s⁻¹), bevorzugt 100 bis 10 000 mPa·s.

Die genannten isocyanatgruppenhaltigen Polysiloxane mit Struktureinheiten (5) sind auch dadurch erhältlich, dass man ein aminofunktionalisiertes Polysiloxan das Struktureinheiten (6) enthält, mit Di-tert.-Butylpyrokohlensäureester (= Di-tert.-butyltricarbonat) umsetzt, wobei t-Butanol und CO₂ abgespalten werden. Geeignete aminofunktionelle Polysiloxane für diese Reaktion sind insbesondere solche, die primäre Aminogruppen enthalten. Bevorzugt sind Polysiloxane mit Amino-(C₂-C₁₂-Alkyl)-Substituenten, die nach an sich bekannten Methoden, wie oben beschrieben, zugänglich sind.

Eine andere Möglichkeit zur Herstellung isocyanatgruppenhaltiger Polysiloxane ist, dass man ein Polydimethylsiloxan mit einem Alkoxysilan in Gegenwart von basischen Katalysatoren (wie bereits genannt) umsetzt, das durch eine Isocyanatoalkylgruppe, vorzugsweise in blockierter Form, z.B. als Addukt mit Malonester, Butanonoxim, Caprolactam, t-Butanol, substituiert ist.

Die Erfindung betrifft auch ein weiteres Verfahren zur Herstellung der erfindungsgemäßen Polysiloxane, das dadurch gekennzeichnet ist, dass man ein Polyisocyanat zunächst mit Cyanamid und einem Neutralisationsmittel für die Cyanamidgruppen, vorzugsweise mit einem aus Cyanamid und Neutralisationsmittel gebildeten Salz partiell umsetzt, so dass das so erhaltene Reaktionsprodukt bevorzugt eine freie Isocyanatgruppe aufweist und dieses anschließend mit einem Polysiloxan umsetzt, das Struktureinheiten (6) und/oder (7) in der Polysiloxankette enthält. Die geeigneten Polyisocyanate sind vorzugsweise die bereits genannten Diisocyanate, insbesondere solche, deren NCO-Gruppen sich in ihrer Reaktivität unterscheiden. Besonders bevorzugte Polyisocyanate sind Isophorondiisocyanat, 1-Isocyanatomethyl-4-methyl-4-isocyanato-cyclohexan oder Isocyanate mit einer primären und einer sekundären bzw. tertiären NCO-Gruppe. Geeignete Polysiloxane mit Hydroxyl- und/oder Aminogruppen sind z.B. die bereits genannten Polysiloxane.

Die Erfindung betrifft weiterhin wässrige Dispersionen der erfindungsgemäßen Polysiloxane. Bevorzugt enthalten diese Dispersionen 1 bis 60 Gew.-% Polysiloxan und 40 bis 99 Gew.-% Wasser.

Vorzugsweise sind die Dispersionen der erfindungsgemäßen Polysiloxane durch einen Festgehalt (= Wirkstoff) von 10 bis 50 Gew.-%, eine Viskosität bei 20°C von unter 1 000 mPas, bevorzugt unter 500, besonders bevorzugt unter 100 mPas, eine mittlere Teilchengröße zwischen 50 und 1 000 nm, bevorzugt zwischen 100 und 500 nm, besonders bevorzugt zwischen 100 und 250 nm, einen pH-Wert von 6 bis 8, bevorzugt 6,5 bis 7,5 sowie einen Gehalt an Cyanharnstoffgruppen oder deren Salzen von 0,05 bis 5 mMol pro Gramm Polysiloxan-Wirkstoff charakterisiert.

Die Polysiloxan-Dispersionen können zudem auch weitere Zusätze wie beispielsweise anionische Emulgatoren, die beim Auftrocknen ihre Hydrophilie durch Reaktion ihrer anionischen Gruppen verlieren, paraffinische Komponenten oder gegebenenfalls weitere übliche Emulgatoren enthalten, die ihre Hydrophilie nicht verlieren. Letztgenannte übliche Emulgatoren sind aber nicht bevorzugt.

Wenn Emulgatoren eingesetzt werden, sind solche Emulgatoren bevorzugt, die beim Auftrocknen ihre anionischen Gruppen verlieren. In diesem Fall werden vorzugsweise 0 bis 30 Gew.-%, insbesondere 0,1 bis 20 Gew.-%, besonders bevorzugt 0,1 bis 15 Gew.-% Emulgatoren oder deren Gemische, bezogen auf Polysiloxan-Wirkstoff, eingesetzt. Besonders bevorzugt sind Dispersionen von Polysiloxanen ohne zusätzlichen Emulgator.

Die wässrige Polysiloxan Dispersion kann auch zusätzliche Paraffine, Öle und/oder Wachse enthalten. Geeignete Paraffine können fest oder flüssig sein, z.B. solche mit einem Schmelzpunkt von 10 bis 90°C, Paraffmöle, Mineralöle, Weißöle, natürliche Öle oder Fette wie Fischöle, natürliche oder synthetische Wachse wie Polyethylenwachse, oxidierte Polyethylenwachse, Polyisobuten-Wachse, Karnaubawachs oder Bienenwachs.

Die Menge der Paraffine, Öle und Wachse in der Dispersion kann 0 bis 70 %, insbesondere 0 bis 40 % betragen.

Unter üblichen Emulgatoren sind im Prinzip alle oberflächenaktiven Verbindungen mit nichtionischen oder anionischen, kationischen oder amphoterem Charakter zu verstehen, die sich zur Emulgierung der Polysiloxane sowie der Paraffine, Öle und Wachse eignen, und die die Hydrophobierung möglichst wenig beeinträchtigen.

Insbesondere geeignet sind Dimethyldodecylamin-N-oxid, Dimethyltetradecylamin-N-oxid, sowie N-(C₈-C₃₀)Acylaminosäuren wie N-Oleylsarcosin, N-Lauroylsarcosin, N-Stearylsarcosin, N-Oleyl-asparaginsäure, N-Hexadecyl-asparaginsäure, N-Stearylasparaginsäure oder die entsprechenden Derivate der Glutaminsäure, weiterhin Fettsäuren wie Ölsäure, Laurinsäure, Talgfettsäure und deren Ethoxylierungsprodukte sowie die Schwefelsäurehalbester der Fettalkohole und der Ethoxylierungsprodukte der Fettalkohole. Die Säuren liegen meist in Form der Alkalimetall-, Ammonium-, Trialkylammonium-, Mono-, Di-, Trialkanolammonium-Salze vor.

Gegenstand der Erfindung ist weiterhin ein Verfahren zur Herstellung der wässrigen Dispersionen, das dadurch gegennzeichnet ist, dass man das erfindungsgemäße cyanharnstoffgruppenhaltige Polysiloxan, wobei die Cyanharnstoff-Gruppen durch Basen neutralisiert sind und in der Salzform vorliegen, gegebenenfalls in Gegenwart eines geeigneten Lösemittels, in Wasser dispergiert und anschließend das gegebenenfalls vorhandene Lösemittel abdestilliert.

Die Dispergierung in Wasser erfolgt in der Weise, dass man das neutralisierte Reaktionsprodukt aus cyanharnstoffgruppenhaltigem Polysiloxan und Base vorlegt, vorzugsweise in einem Lösemittel löst und bei 20°C bis 90°C, vorzugsweise bei 20°C bis 70°C Wasser in einer Geschwindigkeit zudosiert, dass stets eine homogene Durchmischung erreicht wird. Es ist vorteilhaft, das Wasser am Anfang besonders langsam zuzugeben. Im Laufe der Dosierung kann die Geschwindigkeit der Zugabe gesteigert werden. Bei zu schneller Wasserzugabe kann es zu einer irreversiblen Abscheidung des hydrophoben Polysiloxan kommen, während eine zu langsame Zugabe keine Probleme bereitet. Die Viskosität ist bei Zugabe von 30 bis 60 % der Gesamtmenge des Wassers am höchsten. Bei hochviskosen Polysiloxanen ist es zweckmäßig, vor dem Start der Wasserzugabe ein Lösemittel zuzusetzen, das nach der Dispergierung leicht destillativ entfernt werden kann. Als Lösemittel eignen sich besonders Tetrahydrofuran, Isopropanol, Aceton, Methylethylketon, Ethanol, Cyclohexanol, Isobutanol. Besonders bevorzugt sind Aceton und Isopropanol sowie Gemische aus Aceton und Cyclohexanol und Gemische aus Aceton und Isopropanol. Es ist auch möglich, vor der Emulgierung mit Wasser paraffinische Komponenten zum Polysiloxan zuzugeben und anschließend zu emulgieren. Es kann vorteilhaft sein, Dispergiermaschinen oder Spalthomogenisatoren sowie Hochdruckdüsen einzusetzen, um eine Erhöhung der Scherkraft zu bewirken. Bevorzugt ist aber eine Emulgierung mit einem normalen Rühraggregat, da sich die Produkte in Wasser problemlos einarbeiten lassen.

Es ist auch möglich, das Polysiloxan invers zu dispergieren, indem man das Wasser vorlegt und den neutralisierten Polysiloxan-Wirkstoffbei 20 bis 90°C in der Wasserphase dispergiert. Die Inversdispergierung ist jedoch nicht bevorzugt.

Es ist weiter möglich, dem erfindungsgemäßen Polysiloxan vor der Dispergierung weitere Komponenten, insbesondere die nachfolgend beschriebenen Paraffine (Komponente B₃) oder Polyisocyanat-Additionsprodukte (Komponente B₄) zuzusetzen.

Gegenstand der Erfindung ist weiterhin ein Hydrophobiermittelsystem, enthaltend
a) wenigstens ein erfindungsgemäßes Polysiloxan und
b) wenigstens eine Komponente aus der Gruppe B₁ bis B₄, wobei
   - B₁: ein anionisches Copolymerisat ist,
   - B₂: Polyasparaginsäure oder ein Derivat davon ist,
   - B₃: ein Paraffin ist und
   - B₄: ein Isocyanat-Additionsprodukt ist.

Unter "Hydrophobiermittelsystem" versteht man im Rahmen dieser Erfindung, dass die Komponenten als Einzelkomponenten beispielsweise in Form ihrer wässrigen Lösungen oder Dispersionen eingesetzt werden, oder in beliebiger Kombination miteinander vorliegen. Bevorzugt ist es, die Komponenten des Hydrophobiermittelsystems als Einzelkomponenten gleichzeitig oder nacheinander einzusetzen. Bevorzugt wird das Polysiloxan als letzte Komponente nach einer oder mehreren Komponenten B₁ bis B₄ eingesetzt.

In einer bevorzugten Variante des Systems steht
- B₁: für ein anionisches Copolymerisat, hergestellt durch radikalisch initiierte Copolymerisation von (jeweils bezogen auf Monomergemisch)
α) 10-90 Mol-% des Esters einer monoethylenisch ungesättigten C₃-C₅-Carbonsäure auf Basis eines Alkohols mit 4 bis 40 C-Atomen
β) 90-10 Mol-% einer monoethylenisch ungesättigten Carbonsäure
γ) 0-20 Mol-% eines monoethylenisch ungesättigten C₄-C₆-Dicarbonsäureanhydrids
δ) 0-30 Mol-% eines C₂-C₈-Olefins (Isobuten, Diisobutylen) und
ε) 0-10 Mol-% eines weiteren Comonomers aus der Gruppe Styrol, alpha-Methylstyrol, Vinylester von C₁-C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁-C₁₈-Alkyl- oder Alkenylresten, mit der Maßgabe, dass mindestens 20 Mol-% der den Anhydridgruppen entsprechenden Carboxylgruppen nicht mit Alkohol und/oder Amin umgesetzt werden, sondern mit einer Base neutralisiert werden,
wobei wenigstens 50 Mol-% der Carboxylgruppen der Komponente b) neutralisiert werden. Bevorzugt liegt die Komponente B₁ als wässrige Dispersion vor.

### Beschreibung der Komponente B₁

Geeignete Copolymerisate der Komponente B₁ sind an sich bekannt und werden hergestellt durch radikalische Polymerisation in Lösung oder Emulsion in Gegenwart von Polymerisationsinitiatoren, gegebenenfalls Emulgatoren, Kettenreglern sowie üblichen Additiven wie Komplexbildnern.

Beispielsweise sind geeignete Copolymerisate bekannt aus der US-A 5,316,860. Besonders bevorzugt sind Polyacrylate, hergestellt durch Polymerisation einer Monomermischung aus
B₁-a) 50-90 % eines hydrophoben Monomers, wie C₁₂-C₃₀-Ester der (Meth)Acrylsäure, insbesondere Cetyl-eicosyl(meth)acrylat oder Stearyl(meth)acrylat und
B₁-b) 10-50 % eines hydrophilen Monomers, wie Acrylsäure oder Methacrylsäure.

Weiterhin geeignete Copolymerisat-Dispersionen sind bekannt aus der DE-A 43 34 796. Besonders bevorzugt sind Umsetzungsprodukte aus
B₁-A) Terpolymerisaten mit einer mittleren Molmasse Mₙ von 5000 bis 60000 aus
   B₁-c) Maleinsäureanhydrid,
   B₁-d) 80-120 Mol-%, bezogen auf Komponente B₁-c), Diisobuten und
   B₁-e) 1-12 Mol-%, bezogen auf Komponente B₁-c), mindestens einem Monomeren der Formel 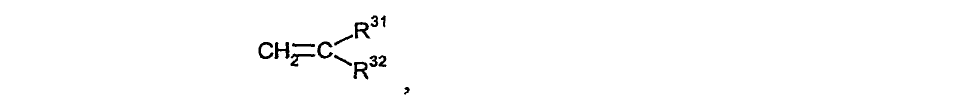 in der
      - R³¹: Wasserstoff oder Methyl bedeutet,
      - R³²: Wasserstoff, Methyl, Ethyl, -OR³³, 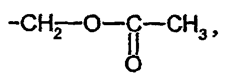 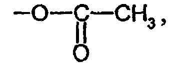 gegebenenfalls durch C₁-C₄-Alkyl substituiertes Phenyl oder Hydroxymethyl und R³³ C₁-C₄-Alkyl bedeuten,
mit
B₁-B) aliphatischen Fettalkoholen mit der Kettenlänge C₆ bis C₂₄
   und
B₁-C) anschließende Umsetzung mit einer Base, bevorzugt KOH, NaOH, NH₃, Aminen.

Besonders bevorzugt sind auch Terpolymerisate aus Maleinsäureanhydrid, Diisobuten und Styrol, die mit C₁₂-C₂₂-Fettalkoholen und NaOH umgesetzt wurden.

Weiterhin geeignet sind anionische Copolymerisat-Dispersion, hergestellt durch radikalisch initiierte Copolymerisation von
B₁-f) 30-85 Mol-% des Esters einer monoethylenisch ungesättigten C₃-C₅-Carbonsäure auf Basis eines Alkohols mit 4 bis 40 C-Atomen
B₁-g) 70-15 Mol-% einer monoethylenisch ungesättigten Carbonsäure
B₁-h) 0-20 Mol-% eines monoethylenisch ungesättigten C₄-C₆-Dicarbonsäureanhydrids
B₁-i) 0-30 Mol-% eines C₂-C₈-Olefins (Isobuten, Diisobutylen) und
B₁-j) 0-10 Mol-% eines weiteren Comonomers aus der Gruppe Styrol, alpha-Methylstyrol, Vinylester von C₁-C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁-C₁₈-Alkyl- oder Alkenylresten, mit der Maßgabe, dass mindestens 20 Mol-% der den Anhydridgruppen entsprechenden Carboxylgruppen nicht mit Alkohol und/oder Amin umgesetzt werden, sondern mit einer Base neutralisiert werden, wobei wenigstens 50 Mol-% der Carboxylgruppen neutralisiert werden.

Geeignete Monomere zur Herstellung der Komponente B₁ sind beispielsweise: Methacrylsäure, Acrylsäure, Methylmethacrylat, Methylacrylat, Butylacrylat, Ethylacrylat, 2-Ethylhexylacrylat, Octylmethacrylat, Octylacrylat, Talgfettalkohol-methacrylat, Talgfettalkohol-acrylat, Stearylmethacrylat, Stearylacrylat, Hexadecylmethacrylat, Hexadecylacrylat, Dodecylmethacrylat, Dodecylacrylat, Eicosanylmethacrylat, Eicosanylacrylat, Ester der Guerbetalkohole mit Methacrylsäure oder Acrylsäure, Styrol, alpha-Methylstyrol, Maleinsäureanhydrid, Diisobutylen oder Isobuten, Vinylacetat, Vinylpropionat.

Bevorzugte Komponenten B₁ sind amphiphile Copolymerisate aus einem hydrophoben Monomer aus der Gruppe Stearyl(meth)acrylat, Hexadecyl(meth)acrylat, Eicosanyl(meth)acrylat, Dodecyl(meth)acrylat, Octyl(meth)acrylat, 2-Ethylhexyl(meth)acrylat, und einem hydrophilen Monomer aus der Gruppe Methacrylsäure, Acrylsäure, Maleinsäureanhydrid sowie gegebenenfalls weiteren Comonomeren wie Styrol, Diisobutylen, Isobuten, Vinylacetat.

Die Carboxylgruppen im Copolymerisat können in Form der freien Säuren oder als Salze vorliegen. Zur Neutralisation können Basen wie NaOH, KOH, Soda, Ammoniak oder Amine wie Triethylamin, Ethanolamin, Triethanolamin, Diisopropylamin, Diethanolamin, N-Methyldiethanolamin, Octylamin usw. eingesetzt werden. Bezogen auf die Carboxylgruppen werden bevorzugt 0,5 bis 1,0 Äquivalente an Base zur Neutralisation eingesetzt.

Besonders bevorzugt sind Copolymerisate, die hergestellt werden durch Copolymerisation einer Monomermischung von
20 - 90 Gew.-% eines hydrophoben Monomers, insbesondere Stearylmethacrylat, Hexadecylmethacrylat, Eicosanylmethacrylat, Dodecylmethacrylat, Octylmethacrylat, 2-Ethylhexylmethacrylat, und
80 - 10 Gew.-% eines hydrophilen Monomers, insbesonders Methacrylsäure, Acrylsäure, Maleinsäuranhydrid, und
0 - 30 Gew.-% eines weiteren Comonomers aus der Gruppe Styrol, alpha-Methylstyrol, Diisobutylen.

In einer besonders bevorzugten Ausführungsform werden Polyacrylat-Dispersionen eingesetzt, die durch radikalische Polymerisation in Gegenwart eines Kettenreglers hergestellt wurden und deren Carboxylgruppen mit einer Base neutralisiert wurden, wobei die eingesetzte Monomermischung aus 60 bis 85 Gew.-% Stearylmethacrylat oder C_{17,4}-Methacrylat und 15-40 Gew.-% Acrylsäure besteht. Bevorzugt sind auch Dispersionen, die durch Dispergierung in Gegenwart der unten beschriebenen Komponente B₃ hergestellt werden. Als Komponente B₃ ist in dieser Ausführungsform insbesondere Weißöl oder ein flüssiges C₁₄-C₁₇-Paraffin-Öl oder ein bei 30-40°C schmelzendes Wachs besonders bevorzugt. Der Anteil der Komponente B₃, bezogen auf den Feststoff aus B₁ und B₃ liegt bevorzugt zwischen 30 und 80 Gew.-%, der Anteil Festharz B₁ zwischen 20 und 70 Gew.-%.-

Besonders bevorzugte Polyacrylat-Dispersionen haben eine mittlere Molmasse von 2000 bis 50000 g/mol, vorzugsweise 2000 bis 20000 g/mol. Solche Dispersionen können zum Beispiel nach EP-A 579 267, EP-A 498 634, US-A 5,348,807 hergestellt werden.

Bevorzugt haben die Dispersionen B₁ einen Festgehalt von 10 bis 60 Gew.-%, vorzugsweise 20 bis 50 Gew.-%.

Geeignete Polyacrylat-Dispersionen sind an sich bekannt. Beispiele für besonders geeignete Polyacrylat-Dispersionen sind die von Rohm and Haas zu beziehenden Produkte der LUBRITAN®/LEUKOTAN®-Reihe, insbesondere Lubritan® WP, Leukotan® NS3, Lubritan® XE/XE 3, Lubritan® AS, Lubritan® SP.

Überraschenderweise wurde gefunden, dass die Polyacrylate (Komponente B₁) in Kombination mit den Komponenten B₃ dem Leder eine wesentlich bessere Hydrophobie und einen weicheren Griff verleihen als die Polyacrylat-Dispersionen allein, wenn sie im Hydrophobiermittelsystem gemeinsam mit einem Polysiloxan a) eingesetzt werden.

Die Erfindung betrifft daher auch eine Mischung enthaltend ein anionisches Copolymerisat und ein Paraffin, die vor oder zusammen mit dem Polysiloxan a) appliziert wird.

Eine bevorzugte Komponente B₂ ist ein Polyasparaginsäure-Derivat mit einem als Zahlenmittel bestimmten Molekulargewicht von 700 bis 30 000, vorzugsweise 1 300 bis 16 000 g/mol, erhältlich durch Umsetzung von
B₂-A) Polysuccinimid mit einem als Zahlenmittel bestimmten Molekulargewicht von 500 bis 10 000, vorzugsweise 500 bis 6 000, insbesondere 1 000 bis 4 000, vorzugsweise erhältlich durch Umsetzung von Maleinsäureanhydrid und NH₃-Lösung und anschließende Kondensation, mit
B₂-B) 5 bis 90, vorzugsweise 20 bis 80 Mol-%, bezogen auf Succinimideinheiten des Polysuccinimids, primärem und/oder sekundärem Amin, dessen Stickstoffsubstituenten 1 bis 60, vorzugsweise 1 bis 36 Kohlenstoffatome enthalten, die durch Hydroxylgruppen substituiert und/oder durch Sauerstoffatome, unterbrochen sein können, wobei mindestens 2,5 Mol-%, vorzugsweise mindestens 15 Mol-%, insbesondere mindestens 30 Mol-% der Stickstoffsubstituenten des Amins mindestens 12 Kohlenstoffatome enthalten, und mit
B₂-C) 95 bis 10 Mol-%, vorzugsweise 80 bis 20 Mol-% ringöffnender Base in Gegenwart von Wasser.

Geeignete Komponenten B₂ sind an sich bekannt und in der DE-A 195 28 782 bzw. EP-A 842 300 beschrieben.

### Beschreibung der Komponente B₂

Das als Ausgangsprodukt für die erfindungsgemäß zu verwendenden Polyasparaginsäureamide dienende Polysuccinimid B₂-A) ist aus der EP-A 842 300 z.B. bekannt.

Ein geeignetes Verfahren geht beispielsweise von Maleinsäureanhydrid und Ammoniak aus, bei dem das Umsetzungsprodukt aus Maleinsäureanhydrid und Ammoniak in Gegenwart eines Lösemittels thermisch kondensiert wird (EP-A 842 300). Das dabei gebildete Polysuccinimid liegt dann gelöst vor.

Man kann das als Ausgangsverbindung dienende Polysuccinimid B₂-A) auch durch thermische Dehydratisierung von Polyasparaginsäure herstellen.

Die Polyasparaginsäure-Derivate enthalten in einer bevorzugten Ausführungsform im wesentlichen wiederkehrende Asparaginsäure-Einheiten folgender Strukturen

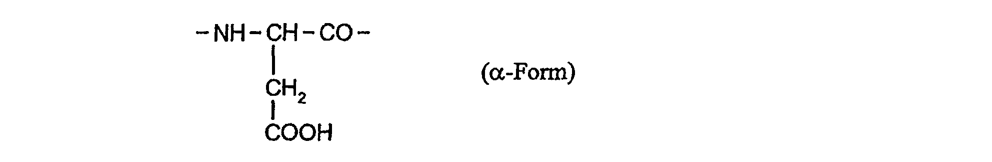

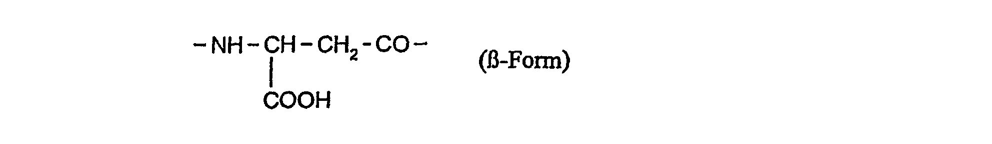

Im allgemeinen liegt der Anteil der β-Form bei mehr als 50 %, insbesondere mehr als 70 %, bezogen auf die Summe α- und β-Form.

Zusätzlich zu diesen wiederkehrenden Asparaginsäureeinheiten können weitere wiederkehrende Einheiten enthalten sein, z.B.
Äpfelsäureeinheiten der Formel 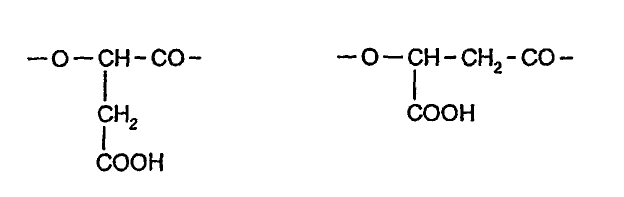 Maleinsäureeinheiten der Formel 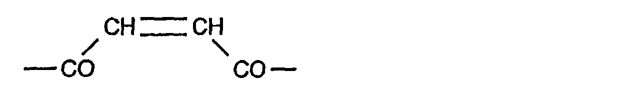 Fumarsäureeinheiten der Formel

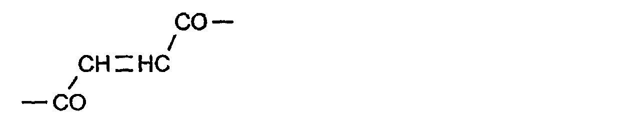

Die "weiteren" wiederkehrenden Einheiten können in Mengen bis zu 100 Gew.-%, bezogen auf die Summe aus α- und β-Form der in den Polyasparaginsäure-Einheiten enthalten sein.

Bevorzugte Polyasparaginsäuren besitzen als Gewichtsmittel durch Gelpermeationschromatographie (geeicht mit Polystyrol) bestimmte Molekulargewichte von 500 bis 10.000, vorzugsweise 1.000 bis 5.000, insbesondere 2.000 bis 4.000.

Die Dehydratisierung von Polyasparaginsäure zu Polysuccinimid kann bei erhöhter Temperatur, vorzugsweise bei 100 bis 240°C, gegebenenfalls in Gegenwart eines Katalysators, z.B. in Gegenwart von 0,01 bis 1 Gew.-%, bezogen auf Polyasparaginsäure, eines sauren Katalysators wie Schwefelsäure, Phosphorsäure, Methansulfonsäure, erfolgen.

Bevorzugte Amine B₂-B) für die Umsetzung mit dem Polysuccinimid B₂-A) umfassen sekundäre und - vorzugsweise - primäre Amine, wie z.B. monofunktionelle Polyetheramine mit einer primären oder sekundären Aminogruppe wie α-Methyl-ω-amino-polyoxyethylen, N,N-Dimethylethylendiamin, Methylamin, Diethylamin, Butylamin, Stearylamin, Talgfettamin, Oleylamin, Undecylamin, Dodecylamin, Octylamin, Hexylamin, Eicosanylamin, Hexadecylamin, 2-Ethyl-hexylamin, Morpholin, Ethanolamin, Diethanolamin, Bis-2-hydroxy-propylamin, Bis-3-hydroxypropylamin, 2- oder 3-Hydroxypropylamin, Ethoxy-ethylamin, Ethoxy-ethoxyethylamin, Butoxy-ethoxy-ethoxy-ethylamin, 2-Methoxy-ethyl-amin, Tetrahydrofurfurylamin, 5-Aminopentanol, Benzylamin, 4-Aminocyclohexylamin, N-Methylaminoethyl-sulfonsäure-Na-Salz, Dehydroabietylamin, Stearoyloxypropylamin,

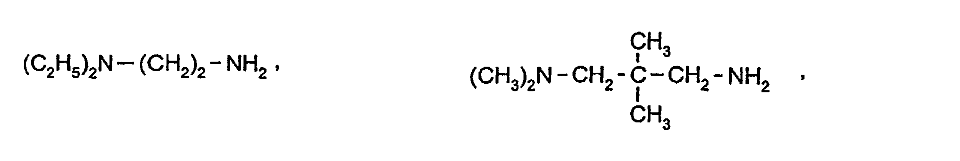

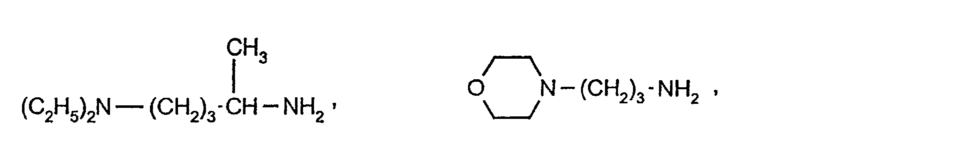

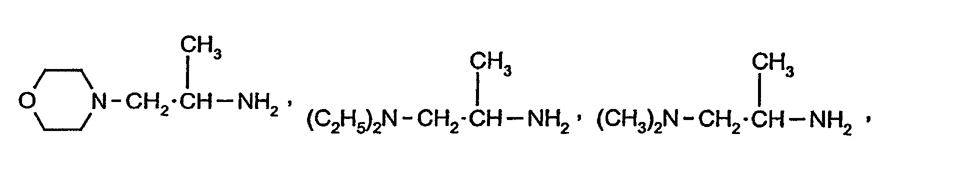

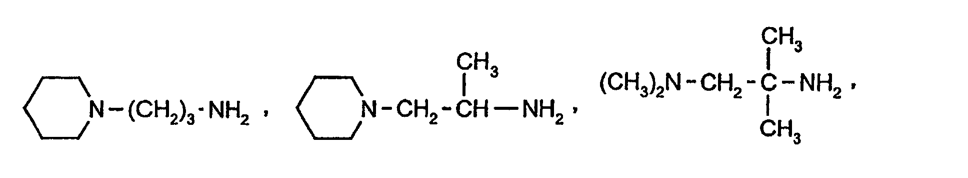

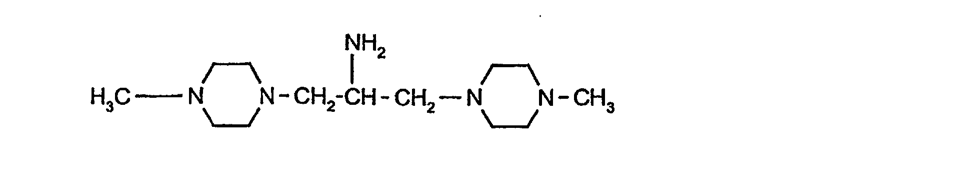

Die Umsetzung des Polysuccinimids mit dem Amin ist aus EP-A 842 300 bekannt und wird vorzugsweise in organischen Lösungsmitteln durchgeführt, die unter Reaktionsbedingungen inert sind. Als solche eignen sich beispielsweise Lactame wie Caprolactam, Pyrrolidon, N-Methylpyrrolidon, N-Methylcaprolactam, Polyalkylendiole und deren Mono- und Diether, wie Ethylenglykol, Diethylenglykol, Triethylenglykol, Ethylenglykoldimethyl- und -diethylether und Diethylenglykolmonoethylether, sowie Dimethylformamid und Dimethylsulfoxid. Der Lösungsmittelgehalt wird in der Regel 30 Gew.-%, bezogen auf die gesamte Reaktionsmischung, nicht überschreiten.

Die Reaktion wird in einem Temperaturbereich von 20 bis 160°C durchgeführt, wobei die Reaktionszeiten zwischen 2 bis 72 Stunden liegen. Das Produkt kann durch destillatives Entfernen des Lösungsmittels oder durch Ausfällen des Produktes in einem Nichtlösemittel wie Aceton, Methanol, Ethanol, Wasser, Isopropanol isoliert und danach, falls gewünscht, getrocknet werden.

Aus dem Umsetzungsprodukt aus B₂-A) und B₂-B) lassen sich die erfindungsgemäß zu verwendenden Polyasparaginsäureamide durch Öffnung der verbliebenen eingebauten Succinimidringe herstellen.

Als ringöffnende Basen B₂-C) kommen sowohl Alkalihydroxide, -carbonate und -hydrogencarbonate, insbesondere Natrium- und Kaliumhydroxid und Natriumcarbonat, als auch Ammoniak und Amine- einschließlich der Amine B₂-B)- in Frage.

Nach einer besonderen Ausführungsform kann man Maleinsäure bzw. Maleinsäureanhydrid und wässrigen Ammoniak im Molverhältnis 1:0,75 bis 1:1,5 mischen und Wasser abdestillieren. Wenn das Polysuccinimid, gegebenenfalls unter Mitverwendung eines organischen Lösemittels wie Diethylenglykol, Pyrrolidon, N-Methylpyrrolidon das gewünschte Molekulargewicht erreicht hat, wird Amin B₂-B) zudosiert und bei 130 bis 160°C umgesetzt. Eine Reaktionszeit von 3 bis 18, vorzugsweise von 4 bis 8 Stunden ist in der Regel für die Umsetzung mit dem Amin B₂-B) ausreichend. Gegebenenfalls kann ein organisches Lösungsmittel zugesetzt werden. Es entsteht direkt das erfindungsgemäß zu verwendende Polyasparaginsäureamid, das sich unter gleichzeitiger Öffnung der verbliebenen eingebauten Succinimidringe mit ringöffnender Base B₂-C) leicht in Wasser dispergieren lässt, wobei die Mitverwendung von üblichen Dispergiermitteln vorteilhaft ist.

Die erfindungsgemäß zu verwendenden Polyasparaginsäureamide enthalten in einer idealisierten Form wiederkehrende Struktureinheiten der Formeln 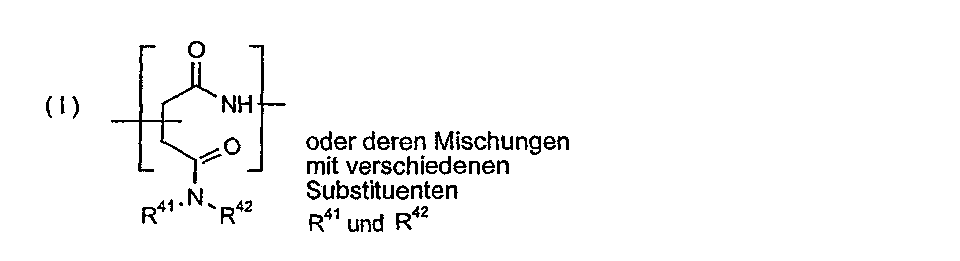 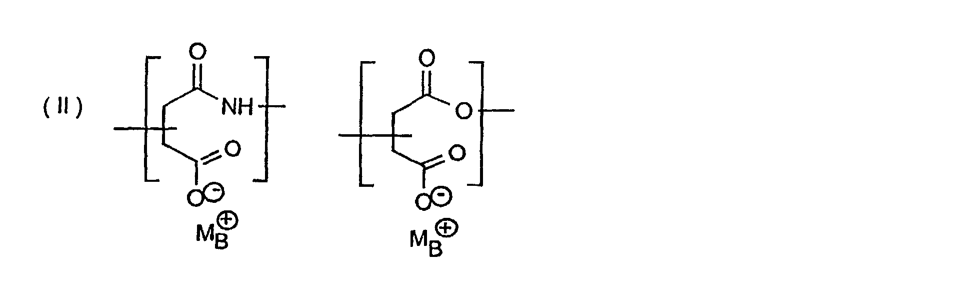 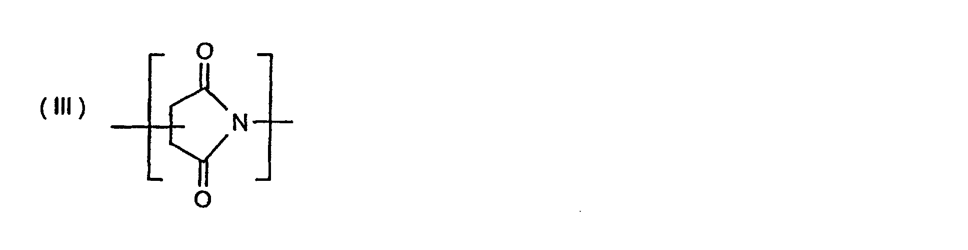 worin
- R⁴¹, R⁴²: Wasserstoff oder einen der oben als Stickstoffsubstituenten bezeichneten Reste bedeuten mit der Maßgabe, dass mindestens einer der beiden Reste ungleich Wasserstoff ist, und
- M_{B}^{⊕}: für H^{⊕} oder ein Alkaliion, ein NH₄-Ion oder einen primären, sekundären oder tertiären aliphatischen Ammoniumrest, der vorzugsweise mindestens eine C₁-C₂₂-Alkyl- oder -Hydroxyalkylgruppe trägt, steht.

Geeignete Reste M_{B}^{⊕} sind beispielsweise Hydroxyethylammonium, Dihydroxyethylammonium, Trishydroxyethylammonium, Tristhylammonium, Ammonium, Butylammonium, Benzyltrimethylammonium, Morpholinium, Stearylammonium, Oleylammonium.

Die Struktureinheiten I sind im Polymer vorzugsweise in einer Menge von 5 bis 90, insbesondere 20 bis 80 Mol-%, bezogen auf sämtliche wiederkehrende Einheiten, enthalten. Bevorzugte Polyasparaginsäureamide enthalten durchschnittlich pro Struktureinheit I mindestens einen C₁₂-C₂₂-Alkyl- und/oder -Alkylenrest.

Die Struktureinheiten II sind im Polymer vorzugsweise in einer Menge von 95 bis 10, insbesondere 80 bis 20 Mol-%, bezogen auf sämtliche wiederkehrende Einheiten, enthalten. Besonders bevorzugt sind Polyasparaginsäureamide, deren Carboxylgruppen in teilneutralisierter Form vorliegen. Der bevorzugte Neutralisationsgrad beträgt 10 bis 80, vorzugsweise 20 bis 60 %.

Die Struktureinheiten III sind im Polymer in einer Menge von 0 bis 5 Mol-%, bezogen auf sämtliche wiederkehrende Einheiten, enthalten. Bevorzugte Polyasparaginsäureamide enthalten weniger als 1 Mol-% der Struktureinheiten III.

Bevorzugte Stickstoffsubstituenten R⁴¹ und R⁴² umfassen unabhängig voneinander beispielsweise gegebenenfalls Hydroxyl-substituierte C₁-C₂₂-Alkyl- oder C2-C22-Alkenylgruppen wie Hydroxyethyl, Hydroxypropyl, Methyl, Ethyl, Butyl, Hexyl, Octyl, Octenyl, Decyl, Undecyl, Undecenyl, Dodecyl, Tetradecyl, Hexadecyl, Oleyl, Octadecyl, 12-Hydroxy-octadecenyl, C₅-C₁₀-Cycloalkylreste wie Cyclohexyl, durch Sauerstoffatome unterbrochene C₁₂-C₃₀-Reste wie Stearyloxyethoxyethyl und leiten sie von den genannten Aminen B₂-B) ab.

Durch Sauerstoffatome unterbrochene Stickstoffsubstituenten werden am besten durch Verwendung entsprechender Aminoether B₂-B) eingeführt.

Die erfindungsgemäß zu verwendenden Polyasparaginsäureamide sind selbstdispergierend, besonders wenn der Anteil der Struktureinheiten I unter 50 Mol-% liegt. Es können aber auch externe Dispergatoren mitverwendet werden.

Bevorzugte Dispergatoren umfassen beispielsweise C₈-C₁₈-n-Alkylsulfate, C₈-C₁₈n-Alkyl-benzolsulfonate, C₈-C₁₈-n-Alkyl-trimethyl-ammoniumsalze, n-Di-C₈-C₁₈alkyl-dimethyl-ammoniumsalze, C₈-C₁₈-n-Alkyl-carboxylate, C₈-C₁₈-n-Alkyl-dimethylaminoxide, C₈-C₁₈-n-Alkyl-dimethylphosphinoxide und - vorzugsweise - Oligoethylenglykol-mono-C₆-C₁₈-alkylether mit durchschnittlich 2 bis 30 Ethoxygruppen pro Molekül. Die n-Alkylreste können auch durch teilweise ungesättigte lineare aliphatische Reste ersetzt sein. Besonders bevorzugte Dispergatoren sind Oligoethylenglykolmono-C₁₀-C₁₄-alkylether mit durchschnittlich 4 bis 12 Ethoxygruppen pro Molekül, insbesondere Oligoethylenglykol-mono-C₁₂-alkylether mit durchschnittlich 8 Ethoxygruppen pro Molekül.

Bevorzugte Dispergatoren umfassen weiterhin Ölsäure, Ölsäuresarcoside, Ricinolsäure, Stearinsäure, Fettsäurepartialester von Polyolen wie Glycerin, Trimethylolpropan oder Pentaerythrit und deren Acylierungs-, Ethoxylierungs- und Propoxylierungsprodukte, z.B. Glycerinmonostearat und -monooleat, Sorbitanmonostearat und -monooleat, Sorbitantristearat und -trioleat und deren Umsetzungsprodukte mit Dicarbonsäureanhydriden wie Bemsteinsäureanhydrid, Maleinsäureanhydrid, Phthalsäureanhydrid oder Tetrahydrophthalsäureanhydrid, Umsetzungsprodukte aus Bis-(hydroxymethyl)-tricyclodecan und Maleinsäureanhydrid oder Bernsteinsäureanhydrid und deren Derivate, vorzugsweise in Form ihrer Alkali- oder Ammoniumsalze.

Besonders bevorzugte Dispergatoren sind Salze aus langkettigen Fettsäuren, vorzugsweise Ölsäure und einem Aminoalkohol, vorzugsweise Hydroxyethylamin, Bishydroxyethylamin oder Trishydroxyethylamin.

Die Bildung der Dispersion der erfindungsgemäß zu verwendenden Polyasparaginsäureamide kann so geschehen, dass man die Polyasparaginsäureamide in einer wässrigen Dispergatorlösung, vorzugsweise unter Erwärmen auf Temperaturen von 40 bis 95°C, unter Rühren dispergiert.

Im allgemeinen ist zu empfehlen, die erfindungsgemäß zu verwendenden Polyasparaginsäureamide ohne Zwischenisolierung direkt aus dem Reaktionsgemisch heraus, das gegebenenfalls organisches Lösungsmittel enthält, zu dispergieren. So kann man beispielsweise dem Dispergator zum Reaktionsgemisch hinzufügen und eine wässrige Lösung der ringöffnenden Base B₂-C) unter Rühren bei Temperaturen von 70 bis 130°C zudosieren, so dass sich eine Mischtemperatur von 70 bis 95°C einstellt, und gegebenenfalls das organische Lösungsmittel abdestillieren. Umgekehrt kann man natürlich auch das Reaktionsgemisch invers in wässrige Dispergatorlösung oder eine Mischung von Reaktionsgemisch und Dispergator in Wasser dispergieren. Man kann auch auf die Entfernung des Lösungsmittels verzichten.

Bevorzugt ist auch die Verwendung von ringöffnenden Basen B₂-C) zur Einstellung des pH-Wertes nach der Dispergierung. Besonders bevorzugt sind pH-Werte von 5,5 bis 11, vorzugsweise von 6,0 bis 9. Weiterhin ist es bevorzugt, die Dispersion einer Bleiche mit Oxidationsmitteln zu unterziehen. Besonders geeignet ist Wasserstoffperoxid, Ammoniumpersulfat, Natriumsulfat. Nach beendeter Bleiche wird nicht verbrauchtes Oxidationsmittel mit einem Reduktionsmittel oder durch enzymatische Zersetzung desaktiviert. Geeignete Reduktionsmittel sind NaHSO₃, Na₂S₂O₄, sowie die entsprechenden Kalium- oder Lithiumsalze oder ein enzymatisches Reduktionsmittel wie BAYREDUKT®EPK (Bayer).

Der Dispergatorgehalt beträgt im allgemeinen nicht mehr als 30, vorzugsweise 3 bis 15 Gew.-%, bezogen auf fertige Dispersion.

Der Festgehalt der Dispersionen beträgt im allgemeinen 5 bis 70 Gew.-%, bevorzugt 20 bis 50 Gew.-%. Die mittlere Teilchengröße der dispergierten Polyasparaginsäureamide beträgt im allgemeinen 50 bis 1000, vorzugsweise 50 bis 700 und insbesondere 50 bis 400 nm.

Die Dispersionen können insbesondere bei Feststoffgehalten oberhalb von 45 Gew.-% in Form von Pasten vorliegen, die sich aber mit Wasser leicht verdünnen lassen. Bevorzugte Dispersionen mit einem Feststoffgehalt unterhalb von 30 bis 40 Gew.-% liegen in der Regel als dünnflüssige Emulsionen vor, die bei 20°C eine Viskosität <1000 mPas aufweisen. Der pH-Wert der Dispersionen liegt zwischen 5 und 10, vorzugsweise im pH-Bereich zwischen 5 und 9.

Eine besonders bevorzugte Komponente B₂ ist dadurch erhältlich, dass man
B₂-a) Maleinsäureanhydrid, gegebenenfalls in einem inerten Lösemittel mit Ammoniak im Molverhältnis 1:1,0 bis 1:1,3 umsetzt und danach thermisch kondensiert, wobei das gebildete Wasser abdestilliert wird,
B₂-b) das Produkt aus B₂-a) mit mindestens einem Amin oder Ammoniak der Formel 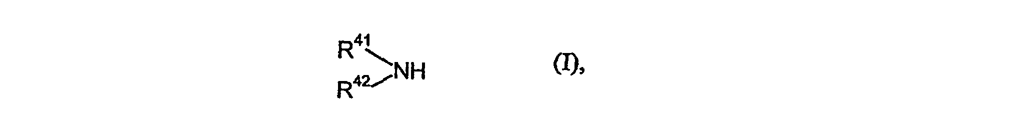 in der R⁴¹ und R⁴² die angegebene Bedeutung haben, umsetzt, wobei bezogen auf 1 Mol Maleinsäurehydrid 0,2 bis 0,5 mol Amin(I) eingesetzt werden,
   und
B₂-c) das Reaktionsprodukt gegebenenfalls in Gegenwart eines Dispergators in einer wässrigen Phase, die eine Base enthält, dispergiert und das Produkt in Festgehalt, Viskosität, pH-Wert, Teilchengröße und Farbe je nach Verwendungszweck einstellt, und gegebenenfalls einer Bleiche unterzieht

Eine bevorzugte Komponente B₃ ist ein paraffinischer Kohlenwasserstoff, der gegebenenfalls durch Hydroxyl- und/oder Carboxylgruppen substituiert sein kann, beispielsweise (Weißöl 285, Paraffinöl, Paraffinwachs, Montanwachs, Carnaubawachs, oxidiertes Polyethylen, langkettige Fettalkohole wie Guerbet-Alkohole, Fettsäuren, Fettsäureester, Phospholipide, wobei der paraffinische Kohlenwasserstoff vorzugsweise gemeinsam mit der Komponente B₁ und/oder B₂ eine stabile Dispersion ergibt.

### Beschreibung der Komponente B₃

Als geeignete Komponenten B₃ sind beispielsweise paraffinische Kohlenwasserstoffe wie C₁₀-C₆₀-Paraffine, besonders C₁₄-C₁₇-Paraffin-Öle, Weißöl, Wachse, Fettalkohole wie Stearylalkohol, Oleyalkohol, oder Gemische daraus wie Talgfettalkohol, darüber hinaus auch handelsüblicher Wollwachsalkohol, handelsübliches Carnaubawachs, handelsübliches Polyethylenwachs, Montanwachs, Guerbetalkohole, sowie Umsetzungsprodukrte der Fettalkohole mit Dicarbonsäure-anhydriden, bevorzugt Maleinsäureanhydrid oder Bernsteinsäureanhydrid, Fettsäuren wie handelsübliche Dimerfettsäure zu nennen, wobei die in den Wachsen enthaltenen Carboxylgruppen in freier Form vorliegen können oder in neutralisierter Form als Salze. Besonders bevorzugt sind C₁₄-C₁₇-Paraffin-Öle, Weißöl und Wachse mit einem Erweichungspunkt zwischen 25 und 60°C.

Zur Neutralisation der Carboxylgruppen in B₃ eignen sich Basen wie NaOH, KOH, Soda, Ammoniak, oder primäre, sekundäre, tertiäre Amine oder Aminoalkohole. Besonders bevorzugt sind KOH, NaOH, Ammoniak, Ethanolamin, Morpholin, Diethanolamin, Triethylamin, Triethanolamin.

Vorzugsweise liegen die Komponenten B₃ als wässrige Dispersionen vor. Der Festgehalt solcher Dispersionen beträgt 5 bis 60 Gew.-%, bevorzugt 10 bis 35 Gew.-%.

Besonders bevorzugt ist es weiterhin, die Komponente B₃ gemeinsam mit den Komponenten B₁ und/oder B₂ einzusetzen. Vorzugsweise wird dazu die Komponente B₃ zu Komponente B₁ und/oder B₂ hinzugegeben und durch Anwendung hoher Scherkräfte mit Hilfe von üblichen Dispergiermaschinen, Dissolvern, Homogenisatoren oder Ultraschallgeräten in eine stabile Dispersion überführt.

Vorzugsweise weisen solche Dispersionen die folgende Zusammensetzung auf:
1 bis 50 Gew.-% Komponente B₁ (jeweils als Festgehalt gerechnet) und/oder Komponente B₂,
0 bis 50 Gew.-% Komponente B₃ (jeweils als Festgehalt gerechnet),
0 bis 99 Gew.-% Wasser.

Besonders bevorzugt sind Mischungen aus Komponente B₃ und B₁.

Besonders bevorzugt sind solche Mischungen aus Komponente B₁ und Komponente B₃, die folgende Zusammensetzung aufweisen:
3 bis 30 Gew.-% (auf Festgehalt bezogen) B₁,
10 bis 40 Gew.-% (auf Festgehalt bezogen) B₃,
30 bis 87 Gew.-% Wasser
   (Summe = 100 %)

Ganz besonders bevorzugt sind Mischungen aus Komponente B₁ und Komponente B₃ mit einem Festgehalt von 10 bis 70 Gew.-%, bevorzugt 20 bis 50 Gew.-%.

Es ist auch bevorzugt, die Komponente B₃ als solche zu einer Komponente B₁ und/oder B₂ hinzuzugeben, wobei eine vorherige Dispergierung der Komponente B₂ in Wasser nicht erforderlich ist.

Eine bevorzugte Komponente B₄ ist ein Umsetzungsprodukt aus
B₄-a) einem organischen Polyisocyanat
B₄-b) pro Äquivalent in B₄-a) enthaltenem NCO oder latentem NCO 0,0 bis 0,9 Äquivalente C₆-C₂₄, vorzugsweise C₁₂-C₁₈-Alkohol,
B₄-c) pro Äquivalent in B₄-a) enthaltenem NCO oder latentem NCO 0,1 bis 1,0 Mol Cyanamid und
B₄-d) Ammoniak oder flüchtigem Amin.

Bei Verwendung der Komponente B₄ entstehen sehr weiche Leder mit hervorragendem Griff, insbesondere in Kombination mit einem erfindungsgemäßen Polysiloxan (Komponente a)).

Ein wesentlicher Vorteil der Komponente B₄ besteht darin, dass sie im Leder zu einem wasserunlöslichen (nicht hydrophilen) Dimerisat oder Oligomerisat reagiert und folglich weder ausgewaschen wird noch nennenswert migriert, sobald diese Reaktion abgeschlossen ist, und ihre emulgierende Wirkung verliert.

### Beschreibung der Komponente B₄

Die Komponente B₄ ist beispielsweise aus DE-A 43 30 378 bekannt und wird vorzugsweise durch Umsetzung von NCO-Gruppen in Polyisocyanaten mit einem C₆-C₂₄-Alkohol und anschließend mit Cyanamid und anschließende Neutralisation mit Ammoniak oder flüchtigen Basen hergestellt. Die Reaktionsprodukte enthalten keine freien NCO-Gruppen mehr und sind in Wasser löslich oder in Wasser emulgierbar. Die Umsetzung mit dem C₆-C₂₄-Alkohol kann gegebenenfalls auch entfallen.

Die anionischen Polyisocyanat-Additionsprodukte besitzen vorzugsweise mittlere Molmassen (Zahlenmittel) von unter 5000 g/mol, vorzugsweise von 300 bis 3000 g/mol.

Geeignete Polyisocyanate sind insbesondere aliphatische Polyisocyanate mit mindestens 2 freien Isocyanatgruppen pro Molekül. Vorzugsweise werden Diisocyanate T (NCO)₂ eingesetzt, wobei T für einen zweiwertigen aliphatischen Kohlenwasserstoffrest mit 4 bis 12 Kohlenstoffatomen oder einen cycloaliphatischen oder aromatischen Rest mit 6 bis 15 Kohlenstoffatomen oder einen araliphatischen Rest mit 7 bis 15 Kohlenstoffatomen steht. Beispielsweise seien genannt:
Butylendiisocyanat, Hexamethylendiisocyanat (HDI), Isophorondiisocyanat (IPDI), Diisocyanato-cyclohexan, 4-Isocyanato-4-methyl-1-isocyanatomethyl-cyclohexan, Bis-cyclohexylmethan-4,4'-diisocyanat (H₁₂-MDI), Nonyltriisocyanat, 1,4-Diisocyanatobenzol, 2,4-Diisocyanatotoluol (2,4-TDI), 2,6-Diisocyanatotoluol (2,6-TDI), p-Xylylendiisocyanat, 4,4'-, 2,2'-, 2,4'-Diisocyanato-diphenylmethan (MDI) sowie deren Gemische.

Vorzugsweise werden auch die in der Polyurethanchemie an sich bekannten üblichen höherfunktionellen Polyisocyanate eingesetzt, die z.B. durch Trimerisierung von Hexamethylendiisocyanat oder Isophorondiisocyanat oder deren Gemischen erhältlich sind und die Isocyanurat-Einheiten als zusätzliche Struktureinheiten enthalten und eine NCO-Funktionalität von 2 bis 3,5 aufweisen können. Solche Trimetisate sind handelsüblich (BAYER AG, Produkte der DESMODUR®-Reihe).

Weiter geeignet sind auch an sich bekannte und handelsübliche modifizierte Polyisocyanate, die durch katalytische Dimerisierung von Hexamethylendiisocyanat erhalten werden und zusätzliche Uretdion-Struktureinheiten (i) 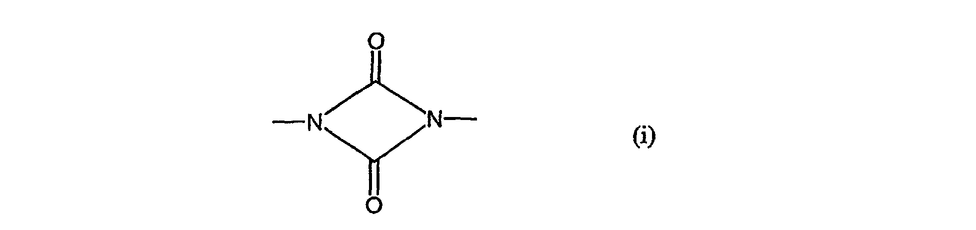 und gegebenenfalls auch Isocyanuratstrukturen enthalten. Weiter geeignet sind Oxadiazintrion-Struktureinheiten (ii) 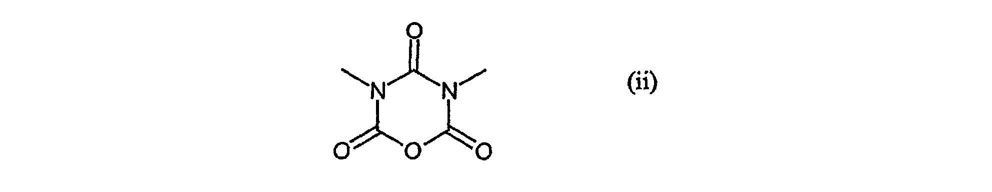 enthaltende Polyisocyanate, die sich von Hexamethylendiisocyanat ableiten. Weiter geeignet sind an sich bekannte modifizierte Polyisocyanate, die Carbodiimid-, Harnstoff-, Urethan-, Allophanat-, Biuret-Gruppen enthalten und eine NCO-Funktionalität zwischen 2,0 und 3,5 aufweisen können und sich von Hexamethylendiisocyanat ableiten.

Besonders bevorzugte Biuretgruppen enthaltende Polyisocyanate sind solche, die eine NCO-Funktionalität von 2,5 bis 3,5 aufweisen, beispielsweise Desmodur® N 3200 (Bayer AG).

Die oben beschriebenen Polyisocyanate können auch als Mischung eingesetzt werden.

Als Aufbaukomponenten zur Einführung der Oxadiazintrion- und/oder Uretdion-Struktureinheiten der Formeln (i) bzw. (ii) eignen sich ihrerseits Diisocyanate der Formeln (iii) und/oder (iv) 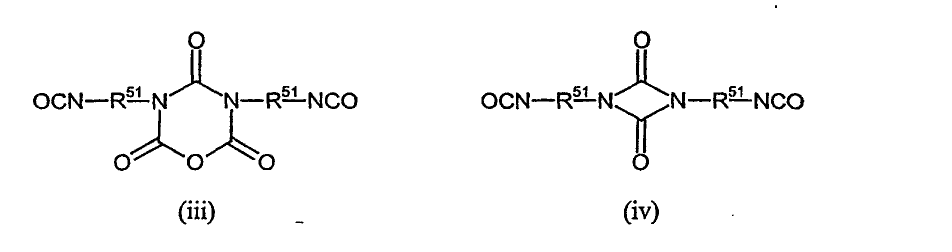 worin die Reste
- R⁵¹: unabhängig voneinander für den zweiwertigen Rest eines aliphatischen Kohlenwasserstoffs mit 1 bis 15 C-Atomen, eines cycloaliphatischen Kohlenwasserstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen stehen.

Beispiele für derartige Polyisocyanate B₄-a) sind 1,3-Bis-(5-isocyanato-1,3,3-trimethylcyclohexyl-methylen)-2,4-dioxo-1,3-diazetidin; 1,3-Bis-(3-isocyanato-4-methylphenyl)-2,4-dioxo-1,3-diazetidin; 1,3-Bis-(6-isocyanato-hexyl)2,4-dioxo-1,3-diazetidin; 3,5-Bis-(5-isocyanato-1,3,3-trimethyl-cyclohexyl-methylen)-2,4,6-trioxotetrahydro-1,3,5-oxadiazin; 3,5-Bis-(4-isocyanato-cyclohexyl)-2,4,6-trioxo-tetrahydro-1,3,5-oxadiazin und 3,5-Bis-(6-isocyanato-hexyl)-2,4,6-trioxo-tetrahydro-1,3,5-oxadiazin (Desmodur® LB 202, Bayer AG).

Von den Isocyanaten der Formeln (iii) und (iv) werden diejenigen der Oxadiazintrion-Reihe (iii) bevorzugt eingesetzt, besonders bevorzugt 3,5-Bis-(6-isocyanatohexyl)-2,4,6-trioxo-tetrahydro-1,3,5-oxadiazin.

Da man durch Umsetzung mit dem Alkohol B₄-b) Isocyanatgruppen verliert, sind Polyisocyanate mit mehr als 2 Isocyanatgruppen ganz besonders bevorzugt. Zu diesen Isocyanaten zählen die Isocyanurate, Biurete, Trisurethane (und deren höherfunktionelle Analoga) des TDI, IPDI, MDI, HDI, H12-MDI, 1,4-Diisocyanatocyclohexans etc. Wegen der besseren Lichtechtheiten sind auch hier die aliphatischen Polyisocyanate ganz besonders bevorzugt.

Beispiele für geeignete Polyisocyanate sind Trimerisate von Hexamethylendiisocyanat, 1,3-Bis-(6-isocyanatohexyl)-2,4-dioxo-1,3-diazetidin, 3,5-Bis-(6-Isocyanatohexyl)-2,4,6-trioxo-tetrahydro-1,3,5-oxadiazin (DESMODUR® LB 202). Falls die Umsetzung mit einem C₆-C₂₄-Alkohol erfolgt, werden die Polyisocyanate mit einer Funktionalität größer 2 bevorzugt, weil durch die Umsetzung mit dem Alkohol ein Teil der NCO-Funktionalität verloren geht.

Geeignete C₆-C₂₄-Alkohole sind Alkanole wie n-Hexanol, n-Octanol, 2-Ethylhexanol, Dodecanol, Cetylalkohol, Stearylalkohol, hydrierte Talgfettalkohole, Guerbetalkohole oder Alkenole wie Oleylalkohol, Talgfettalkohol, Cyclohexenol, Butenol, Hexenol, Hexadecenol, Octadecenol.

Geeignete Basen B₄-d) sind Ammoniak und flüchtige Amine, vorzugsweise tertiäre Amine mit Alkylresten mit bis zu 12 Kohlenstoffatomen, wie Triethylamin, Trimethylamin, Triisopropylamin, Tri-n-butylamin, N,N-Dimethylaminoethanol, N-Methylmorpholin, Pyridin, Triisopropanolamin. Besonders bevorzugt ist Ammoniak und Triethylamin.

Die Herstellung der Komponente B₄ erfolgt in der Weise, dass man ein Polyisocyanat B₄-a) gegebenenfalls partiell mit einem C₆-C₂₄-Fettalkohol B₄-b) umsetzt und das so erhaltene Produkt beziehungsweise das nicht modifizierte Polyisocyanat B₄-a) in Wasser in Gegenwart von Cyanamid B₄-c) und Base B₄-d) oder in Gegenwart eines zuvor mit einer Base B₄-d) neutralisierten Cyanamids zum gewünschten Endprodukt umsetzt.

Die Reaktionstemperatur beträgt im allgemeinen zwischen 20 und 100°C, vorzugsweise zwischen 30 und 60°C. Die Reaktion ist abgeschlossen, wenn das Endprodukt keine freien NCO-Gruppen mehr aufweist. In einer bevorzugten Ausführungsform werden 0 bis 0,7 mol, besonders bevorzugt 0 bis 0,3 mol Alkohol B₄-b) pro NCO-Äquivalent des Polyisocyanats B₄-a) eingesetzt. Die restlichen NCO-Gruppen werden dann mit Cyanamid B₄-c) und Base B₄-d) weiter umgesetzt. Es ist möglich, Cyanamid und Base im Unterschuss einzusetzen. In diesem Fall reagieren die übrigen NCO-Gruppen mit dem Alkohol bzw. Wasser ab.

Man erhält Dispersionen oder Lösungen B₄, je nach Anwesenheit bzw. Art und/oder Anteil der Fettalkohol-Komponente. Der Feststoffgehalt dieser Lösung bzw. Dispersion beträgt bevorzugt 5 bis 70 Gew.-%, besonders bevorzugt 20 bis 60 Gew.-%. Der Rest ist Wasser.

Besonders bevorzugt ist ein Umsetzungsprodukt aus einem Isocyanuratgruppen enthaltenden Trimerisat von Hexamethylendiisocyanat (Desmodur® N 3300, N 3600) oder ein von Hexamethylendiisocyanat abgeleitetes Trimer mit Biuretstruktur (Desmodur N 3200)und 1 mol Cyanamid pro Äquivalent NCO und 1 mol Triethylamin pro Äquivalent Cyanamid. Das Produkt wird in Wasser dispergiert, wobei eine 50 - 60 %ige Lösung erhalten wird.

Bevorzugt liegt die Komponente B₄ als wässrige Dispersion oder Lösung vor.

Die Komponente B₄ besitzt folgende Eigenschaften:
- beim Auftrocknen und Abgeben ihres Gegenions dimerisieren oder oligomerisieren die Verbindungen und verlieren ihren ionischen Charakter;
- damit verlieren sie auch ihre dispergierenden Eigenschaften; damit dispergierte Polymere werden ausgefällt;
- sofern sie Reste längerkettiger Alkohole B₄-b) besitzen, können sie hydrophobe Eigenschaften besonders unterstützen;
- sofern die Produkte B₄ eine Funktionalität größer 2 besitzen, wirken sie als Vemetzer.

Sie eignen sich insbesondere zur
- weichmachenden und gegebenenfalls hydrophobierenden Nachgerbung von Leder;
- Verstärkung der Hydrophobierwirkung beim Einsatz der Komponenten B₁ bis B₄ in Kombination mit Polysiloxanen a);
- als Dispersionsstabilisator für andere übliche Lederhilfsmittel;
- als Emulgator für Silicone.

Werden die Komponenten B₄ in Kombination mit Komponente a) (cyanharnstoffgruppenhaltiges Polysiloxan) eingesetzt, können sie in Mengen von 0,1 bis 100 Gew.-% (festes Umsetzungsprodukt) bezogen auf die Menge des Polysiloxan-Wirkstoff eingesetzt werden. Es genügt im allgemeinen die Verwendung von 0,1 bis 50, vorzugsweise 0,1 bis 10 Gew.-% (festes Umsetzungsprodukt) bezogen auf die Menge des Polysiloxan-Wirkstoffs.

Die mit den Komponenten B₄ versetzten Mischungen können in einfacher Weise (durch Rühren oder Eingießen in die Anwendungsflotte) in eine Dispersion überführt werden. Komponente B₄ wird im allgemeinen in die Nachgerbflotte bzw. die Hydrophobierflotte, die das Polysiloxan a) enthält, gegossen; durch die Drehbewegung des Fasses oder der Gerbmaschinen wird die Dispersion aufgenommen. Der pH-Wert der Nachgerbflotte bzw. des Leders sollte 4 bis 7,5, besser 5 bis 7 betragen. Selbstverständlich kann man noch synthetische Gerbstoffe, Polymergerbstoffe oder mineralische Gerbstoffe, Fettungsmittel und Farbstoffe hinzufügen. Durch Zugabe von Säure kann man die Komponente B₄ gezielt dimerisieren bzw. oligomerisieren.

Besonders bevorzugt ist es ebenfalls, die Komponente B₄ als selbstinhibierenden Emulgator in Mischung mit Komponente a) und/oder in Mischung mit den Komponenten B₁ bis B₃ oder deren Mischungen einzusetzen.

Ganz besonders bevorzugt ist es, die Komponente B₄ in Kombination mit Komponente a) einzusetzen.

Vorzugsweise haben diese Mischungen folgende Zusammensetzung:
0,1 bis 20 Gew.-% Komponente B₄ (bezogen auf Festgehalt)
0,01 bis 40 Gew.-% Komponente a) (bezogen auf Wirkstoff/Festgehalt)
40 bis 99,89 Gew.-% Wasser (Summe = 100 %)

Die Herstellung solcher Mischungen erfolgt beispielsweise durch Lösen einer Dispersion oder Lösung der Komponente B₄ in einer Emulsion der Komponente a) bei 10 bis 60°C. Es ist auch möglich, den Wirkstoff der Komponente B₄ in dem Polysiloxan zu lösen oder zu dispergieren und die erhaltene Mischung gemeinsam in Wasser zu dispergieren, wie dies bei der Herstellung der Polysiloxan-Emulsion (Komponente a) bereits beschrieben wurde.

Bevorzugt sind Hydrophobiermittelsysteme, bestehend aus (bezogen auf das System):
1) 1 bis 60 % einer Dispersion bestehend aus (jeweils als Festgehalt gerechnet) 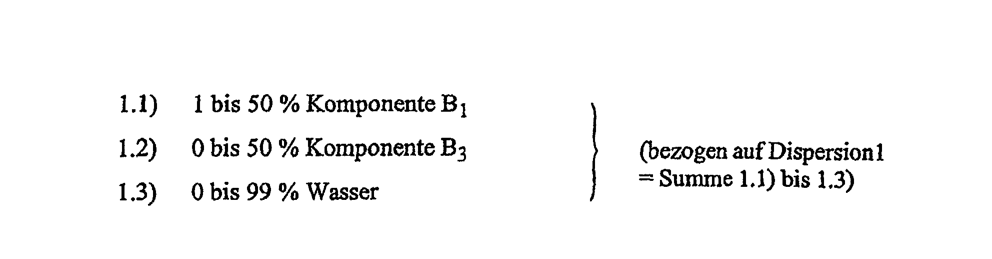 und
2) 0,1 bis 40 % einer Polysiloxan-Emulsion aus (jeweils als Festgehalt gerechnet) 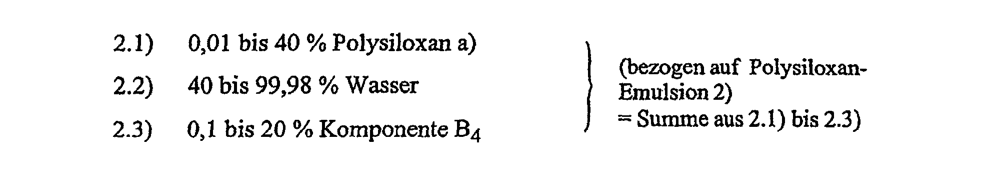 und Wasser zur Ergänzung auf 100 %.

Besonders bevorzugt sind Hydrophobiermittelsysteme, bestehend aus
1) 1 bis 60 % einer Dispersion, bestehend aus 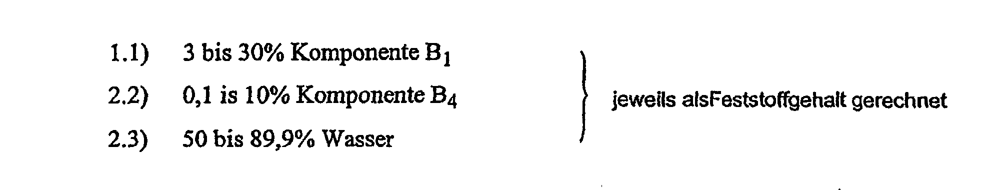 und Wasser zur Ergänzung auf 100%
   1.1) 3 bis 30 % Komponente B (jeweils als Festgehalt gerechnet)
   1.2) 10 bis 40 % Komponente B₃ (jeweils als Festgehalt gerechnet)
   1.3) 30 bis 87 % Wasser
   und
2) 0,1 bis 40 % einer Polysiloxan-Emulsion aus 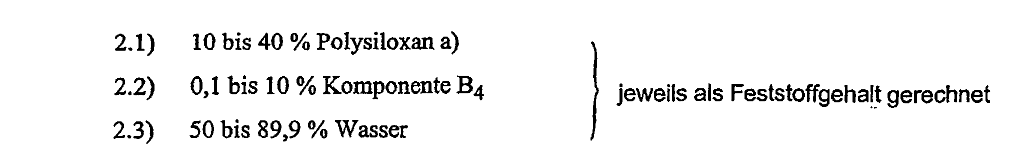 und Wasser zur Ergänzung auf 100 %.

Weiterhin wurde gefunden, dass die Leder, die durch Einsatz der Komponenten B₁ und B₃ sowie B₂ und B₃ und eine anschließende Top-Hydrophobierung mit Komponente a) (Polysiloxan a), gegebenenfalls mit Zusatz der Komponente B₄, hergestellt werden, ein besonders gutes Ergebnis liefern und das Spektrum der gestellten Aufgaben in seiner Gesamtheit am besten erfüllen.

Gegenstand der Erfindung ist auch ein Verfahren zur Hydrophobierung von Substraten, vorzugsweise solcher mit flexibler, insbesondere faseriger Struktur, das dadurch gekennzeichnet ist, dass man das Substrat mit dem erfindungsgemäßen Polysiloxan, insbesondere mit dem erfindungsgemäßen Hydrophobiermittelsystem behandelt.

Geeignete Substrate können sein: cellulosehaltige Materialien wie Papier, Pappe, Karton, Vliese, textile Gebilde wie Wolle- oder Baumwollartikel, Leder, Pelze, Ledersubstitutionsprodukte, vorzugsweise Leder und Pelze.

Die weichmachende Hydrophobierung der Substrate erfolgt vorzugsweise durch Behandeln der Substrate mit einer wässrigen Flotte, die das erfindungsgemäße Polysiloxan bzw. erfindungsgemäße Hydrophobiermittelsystem enthält. Dazu wird das Substrat mit der Flotte durch Auftrag mittels Walzen oder in einem Behälter, bei Leder vorzugsweise in einem Gerbfass, in Kontakt gebracht. Nach der Behandlung wird das Substrat getrocknet. Dabei entweicht das flüchtige Amin oder Ammoniak und das Polysiloxan wird unter Reaktion mit sich selbst permanent fixiert.

Die weichmachende Hydrophobierung von Leder, Pelzen und Lederfasermaterial (Lefa) besteht aus mehreren Einzelschritten, wobei man vorzugsweise von Wet blue, d.h. chromgegerbten Fellen und Häuten, ausgeht. Es ist aber auch möglich, vegetabil gegerbtes Leder mit dem erfindungsgemäßen Polysiloxan zu hydrophobieren. Die Verfahrensschritte sollen für Wet blue im einzelnen erläutert werden:
1. Neutralisieren des chromgegerbten Leders, bevorzugt auf pH-Werte von 5 bis 7,0, vorzugsweise 5,5 bis 7,0
2. Nachgerbung und gegebenenfalls Färbung
3. Zugabe des erfindungsgemäßen Polysiloxans, insbesondere in Form des Hydrophobiermittelsystems (Dosierung der Komponenten a) und b) entweder gemeinsam oder vorzugsweise nacheinander).

In einer bevorzugten Ausführungsform werden eine oder mehrere der Komponenten aus der Gruppe B₁, B₂, B₃ oder B₄ unabhängig voneinander im Verfahrensschritt 3 dosiert und nach einer Einwirkdauer von 0,1 bis 5 Stunden die Komponente a) (Polysiloxan) gegebenenfalls in Kombination mit Komponente B₄ zugegeben. Nach weiteren 0,1 bis 5 Stunden wird mit Verfahrensschritt 4 wie weiter unten angegeben fortgesetzt:

Nach Schritt 4 kann sich eine Metallsalzfixierung bzw. mit Cr(III)-Salzen anschließen. Bevorzugt ist aber eine alleinige Fixierung mit Ameisensäure oder einer anorganischen Säure, die vorzugsweise während des unten angegebenen Verfahrensschritts 4 erfolgt.
4. Verminderung des pH-Wertes durch Zugabe einer Carbonsäure, bevorzugt Ameisensäure auf pH-Werte < 4,5, vorzugsweise auf 3,0 bis 4,5
5. Waschen
6. übliches Fertigstellen (Ausstoßen oder Abwelken, Hängetrocknung, Stollen, vakuumieren (1 Minute, 70°C)).

In einer ebenfalls bevorzugten Auführungsform wird im Verfahrensschritt 3 die Komponente B₁ oder B₂ oder eine Mischung der Komponenten B₁ und B₃ oder eine Mischung der Komponenten B₂ und B₃ dosiert, und nach einer Einwirkdauer von 0,1 bis 5 Stunden die Komponente a) oder eine Mischung der Komponenten a) und B₄ zugegeben. Nach einer weiteren Einwirkdauer von 0,1 bis 5 Stunden wird mit Verfahrensschritt 4 fortgefahren.

Vorteile des erfindungsgemäßen Verfahrens sind:
- Es werden keine Chromsalze oder andere Mineralsalze zur Fixierung benötigt.
- Zusätzliche Fettungsmittel zur Einstellung eines weichen Griffs können eingesetzt werden, sind aber nicht notwendig.
- Die Anwendung kann auch in einer sogenannten Kompaktarbeitsweise erfolgen:
   - Dabei werden vorzugsweise die Komponenten B₁ + B₂ oder B₁ + B₃ oder B₂ + B₃ oder B₁ + B₂ + B₃ von b) des Hydrophobiermittelsystems nach der Neutralisation des Leders zum Beispiel als Mischung zugegeben und nach einer bestimmten Laufzeit, vorzugsweise nach 1 bis 5 Stunden bei 20-60°C, ohne Ablassen der Flotte oder einen Waschvorgang die Komponente a) und gegebenenfalls die Komponente B₄ im Gemisch mit a) zugegeben. Nach einer Laufzeit von a) bzw. B₄ + a) von ca. 1 bis 2 Stunden bei 20-60°C wird Ameisensäure zur Flotte zugegeben und die Produkte a) und b) fixiert. Durch diese Arbeitsweise und die gute Flottenauszehrung fallen kaum Abwässer an.
   - Zur Fixierung der erfindungsgemäßen Polysiloxan-Dispersionen genügt eine Verminderung des pH-Werts durch Zugabe einer Carbonsäure mit einem pKs-Wert unter 5 nach ausreichender Laufzeit mit dem Hydrophobiermittelsystem. Die Flottenauszehrung ist in der Regel so gut, dass eine Zugabe der Säure in das Fass auch ohne Ablassen der Hydrophobierflotte möglich ist. Bevorzugte pH-Werte sollten kleiner als 4,5 sein, um eine ausreichende Fixierung in der Hautsubstanz zu erreichen. Besonders bevorzugt ist der Bereich zwischen 3,0 und 4,5. Bevorzugte Carbonsäure ist Ameisensäure. Es ist auch möglich eine anorganische Säure zu verwenden, wobei darauf zu achten ist, dass der pH-Wert zwischen 3,0 und 4,5 eingestellt wird. Die Laufzeit mit der Säure beträgt in der Regel 0,1 bis 5 Stunden.

Statt einer Fixierung mit einer Carbonsäure kann auch eine Zugabe von polyvalenten Metallverbindungen, wie Aluminium-, Titan-, Zirkon- oder Chromsalzen oder -Carboxylaten oder -Alkoxiden, vorzugsweise in Kombination mit einer Säurefixierung zur Flotte erfolgen. Aus ökologischen Gründen wird aber im allgemeinen darauf verzichtet. Zumindest bringt eine Fixierung mit einem Mineralsalz keinen anwendungstechnischen Vorteil mehr gegenüber der Fixierung mit Säure.

Beispielsweise werden im erfindungsgemäßen Verfahren folgende Mengen (Angaben in Festgehalt, bezogen auf Falzgewicht des Leders bzw. Nassgewicht der Pelze) der Komponenten des Hydrophobiermittelsystems eingesetzt:

| | | |
|---|---|---|
| 0 bis 30 Gew.-% | Komponente B₁, | vorzugsweise 0,1 - 15 Gew.-% B₁ |
| 0 bis 30 Gew.-% | Komponente B₂, | vorzugsweise 0 - 15 Gew.-% B₂ |
| 0 bis 50 Gew.-% | Komponente B₃, | vorzugsweise 0,1- 20 Gew.-% B₃ |
| 0 bis 20 Gew.-% | Komponente B₄, | vorzugsweise 0 - 5 Gew.-% B₄ |
| 0,1 bis 25 Gew.-% | Komponente a),, | vorzugsweise 0,1 - 10 Gew.-% a) |

wobei die Mengen unabhängig voneinander eingesetzt werden und die Einsatzmengen der Komponenten B₁ bis B₄ vorzugsweise nicht gleichzeitig Null Gew.-% betragen.

Der pH-Wert der Flotte beträgt zu Beginn der Hydrophobierung vorzugsweise 5 bis 7, insbesondere 5,5 bis 7, ganz besonders bevorzugt 6 bis 7. Der pH-Wert kann gegebenenfalls vor Zugabe des Hydrophobiermittelsystems durch Zusatz von Basen wie Ammoniak oder Natriumbicarbonat korrigiert werden.

Zur Erzielung einer ausreichenden Hydrophobwirkung sind nach dem erfindungsgemässen Verfahren vorzugsweise bis zu 10 Gew.-%, insbesondere bis zu 8 Gew-%, an Wirksubstanz des erfindungsgemässen Polysiloxans a), bezogen auf Falz- bzw. Fellgewicht ausreichend. Die Behandlung erfolgt bei einer Temperatur zwischen 20 und 60°C, vorzugsweise zwischen 35 und 50°C. Nach der Behandlung stellt sich in der Flotte ein pH-Wert von etwa 5 bis 6 ein. Durch Zugabe einer Carbonsäure wird der pH-Wert auf 3 bis 4,5 vermindert. Bevorzugte Carbonsäure zur Ansäuerung ist Ameisensäure. Die Ansäuerung läuft vorzugsweise bis zu einer halben Stunde bei 20-60°C. Dann wird das Leder gründlich mit Wasser gewaschen und wie üblich fertiggestellt.

In einer besonders bevorzugten Ausführungsform wird das Verfahren zur Herstellung hydrophobierter Leder wie folgt durchgeführt (die Mengenangaben beziehen sich auf Wirksubstanz bzw. Festgehalte bezogen auf Falzgewicht des Leders bzw. Nassgewicht der Pelze):

### 1. Neutralisation

Wet-blue wird zunächst mit einer Flotte, enthaltend 1 % Natriumbicarbonat und 1 % Natriumformiat, bei 20-60°C neutralisiert (Laufzeit 2 bis 24 Stunden), so dass ein pH zwischen 5,0 und 7,0, vorzugsweise 5,0 und 5,5 resultiert. Flottenlänge 100 bis 400 %. Anschließend wird das Leder gespült.

### 2. Nachgerbung/Färbung

Es wird eine frische Flotte zugegeben, enthaltend einen Nachgerbstoff, z.B. einen Vegetabil-Gerbstoff wie Kastanienrindenextrakt (Kastanie gesüßt) und einen synthetischen Gerbstoff wie TANIGAN QF, und einen Farbstoff (zum Beispiel BAYGENAL Braun CGG). Man lässt das Fass 1 bis 5 Stunden bei 20-60°C, vorzugsweise bei 30-45°C laufen. Zum Schluss wird die Flotte abgelassen und gewaschen.

### 3. Hydrophobierung

Es wird eine Flotte, die 0,1-0,5 % Ammoniak oder 0,3-0,5 % NaHCO₃ enthält, in das Gerbfass gegeben und 10 -60 Minuten nachneutralisiert, danach wird die Flotte abgelassen. Anschließend werden 2-8 Gew.-% der Komponente B₁ und/oder B₂, oder 2 - 8 Gew.-% einer fertigen Formulierung aus Komponente B₁ und/oder Komponente B₂ und Komponente B₃ und 100 % Wasser zugegeben (Flottenlänge 50-200 %). Nach einer Walkzeit von 1-3 Stunden bei 20-60°C und vollständiger Auszehrung der Flotte werden 0,5 - 2,5 % der Komponente a) oder einer Mischung aus a) + B₄ ohne weiteren Wasserzusatz zugegeben und 30-120 Minuten weiter bei 20-60°C gewalkt.

### 4. Fixieren

Dann werden ohne Flottenwechsel 0,3-2 % Ameisensäure (85%ig, 1:10) zugegeben und das Leder auf pH 3,0-4,5, vorzugsweise auf pH 3,5-4,0, abgesäuert. Dann wird die Flotte abgelassen.

### 5. Fertigstellen

Es wird zunächst mit warmem Wasser gespült (30-50°C), ausgestoßen oder abgewelkt und das Leder wie üblich fertiggestellt (Hangetrocknung, stollen, Vakuumieren 1 Minute bei 50-70°C).

Das erfindungsgemäße Verfahren ergibt Leder mit einer hervorragenden Hydrophobie und einem weichen und vollen Griff.

Besonderer Vorteil der erfindungsgemäßen Polysiloxan-Emulsionen bzw. des Hydrophobierungsmittelsystems ist, dass die anionischen Gruppen, die die Dispergierbarkeit des hydrophoben Wirkstoffs ermöglichen, nach dem Aufziehen des Hydrophobiermittels auf das Leder dadurch eliminiert werden, dass man die Flotte ansäuert und/oder die Leder trocknet.

Überraschenderweise sind die so erhaltenen Leder den mit bekannten Polysiloxanen ausgerüsteten Ledern überlegen. Insbesondere wird die gewünschte Hydrophobie ohne Zusatz von Mineralsalzen erzielt. Die erfindungsgemäßen Produkte verlieren ihren hydrophilen Charakter beim Auftrocknen und Abgeben des Gegenions und oligomerisieren dabei. Gegenüber den herkömmlichen Hydrophobiermitteln werden sie nicht ausgewaschen und migrieren nicht. Die Permanenz der Hydrophobierung ist deutlich gegenüber dem Stand der Technik verbessert.

Der gegebenenfalls eingesetzte Emulgator B₄ hat darüberhinaus die Eigenschaft, mit dem Polysiloxan unter Vernetzung zu reagieren, wobei er ebenfalls seine Hydrophilie verliert.

Weiter vorteilhaft ist die verbesserte Zurichtbarkeit der erfindungsgemäß ausgerüsteten Leder.

### Herstellungsbeispiele

### Polyacrylat-Dispersion 1 (PAC 1)

### Herstellung des Polyacrylats (Komponente B₁)

In einem 50 L-Rührbehälter werden 2500 g Xylol vorgelegt und auf 140-145°C erhitzt. Eine Lösung von 18750 g C17,4-Methacrylat (Fa. Röhm) bzw. Stearylmethacrylat, 6250 g Acrylsäure und 1250 g Mercaptoethanol in 3750 Xylol und eine Lösung von 750 g Di-tert-Butylperoxid in 2500 g Xylol werden unter Rühren innerhalb von 2 Stunden getrennt und gleichzeitig zu der Vorlage zugetropft. Dann wird 2 Stunden bei 140-145°C nachgerührt. Die Polymerlösung wird über eine beheizte Leitung in einen 200 L-Reaktor, der mit 125 L Wasser mit der Temperatur von 80-90°C gefüllt ist, mit Vakuum eingezogen. Dabei wird das Xylol azeotrop abdestilliert, wobei das Polymer ausfällt. Die Zugabe der Polymerlösung in den Fällreaktor erfolgt mit einer solchen Geschwindigkeit, dass die abdestillierende Xylolmenge ungefähr dem Zulauf entspricht. Nach beendeter Destillation wird noch 1 Stunde bei vollem Vakuum destilliert. Nach der vollständigen Entfernung des Xylols hat sich ein heterogenes, leicht rührbares Gemisch gebildet, das aus dem ausgefällten Polymerisat und Wasser besteht. Zur Herstellung der Dispersion wird unter Rühren eine Lösung aus 6900 g 50%iger NaOH-Lösung und 12500 g Wasser zugepumpt. Es wird bei 80-90°C eine Stunde nachgerührt. Zur Entfernung von Xylolresten wird im Vakuum bei 50-60°C entgast. Man erhält eine lösemittelfreie, weiße Dispersion mit folgenden Eigenschaften:

| | |
|---|---|
| Festgehalt | 33 Gew.-% |
| pH-Wert | 13,5 |
| mittlere Teilchengröße | 250 nm |
| Viskosität | ca. 2000 mPas (20°C, 100 s⁻¹) |

### Polvacrvlat-Dispersion 2 (PAC 2)

### Formulierung mit C14-C17-Paraffinöl (Komponente B₁ und B₃)

Die oben beschriebene Polyacrylat-Dispersion 1 (Komponente B₁) wird mit Wasser auf einen Festgehalt von 30 Gew.-% eingestellt. 1000 g dieser 30%igen Emulsion werden mit 500 g C14-C17-Paraffinöl (Komponente B₃) am Dissolver 10 Minuten dispergiert. Anschließend wird gegebenenfalls mit einem Strahldispergator (Dispergierdüse) oder einen Ultraschallhomogenisator nachdispergiert, um die Teilchengröße auf den Anwendungszweck einzustellen. Man erhält die stabile Polyacrylat-Dispersion 2.
Festgehalt: 53,0 Gew.-%

### Polyacrylat-Dispersion 3 (PAC 3)

### Formulierung mit Weißöl 285 (Komponente B₁ und B₃)

Die oben beschriebene Polyacrylat-Dispersion 1 (Komponente B₁) wird mit Wasser auf 30% Festgehalt eingestellt. Dann werden 1000 g dieser 30%igen Emulsion mit 500 g Weißöl 285 (Komponente B₃) am Dissolver 10 Minuten dispergiert. Anschließend wird gegebenenfalls mit einem Strahldispergator (Dispergierdüse) oder einen Ultraschallhomogenisator nachdispergiert, um die Teilchengröße auf den Anwendungszweck einzustellen.
Festgehalt: 53,0 Gew.-%
mittlere Teilchengröße: 200 nm - 1 000 nm

### Polyacrylat-Dispersion 4 (PAC 4)

### Formulierung aus LEUKOTAN® NS 3 und Weißöl 285 (Komponente B₁ und B₃)

LEUKOTAN® NS 3 (Rohm and Haas) ist eine pastöse Polyacrylat-Dispersion (Festgehalt 34-38 Gew.-%, pH 7,0-8,0, Dichte 1,05 g/cm³).

In einem Rührbehälter werden 240 g Wasser vorgelegt. Dann werden bei 20-25°C unter Rühren 460 g der Polyacrylat-Dispersion LEUKOTAN® NS 3 (Rohm and Haas) (= Komponente B₁) eingetragen. Der Ansatz wird 30 Minuten bei dieser Temperatur gerührt, bis das LEUKOTAN® NS 3 homogen verteilt ist. Anschließend werden bei 20-25°C unter Rühren 300 g Weißöl 285 (Komponente B₃) innerhalb von 10 Minuten zudosiert. Das Gemisch wird noch 60 Minuten bei 20-25°C nachgerührt und anschließend mit Hilfe eines Dissolvers 10 Minuten bei 20-30°C dispergiert. Dann wird auf ≤30°C abgekühlt und gegebenenfalls unter Verwendung eines 100 µm-Filters filtriert. Man erhält eine lagerstabile, weiße Dispersion mit folgenden Eigenschaften:

| | |
|---|---|
| Feststoffgehalt | 46,6 Gew.-% |
| pH-Wert | 6,4 (unverdünnt, potentiometrisch) |
| Viskosität | 2100 mPas (20°C, D = 100 sec⁻¹) |

### Polvacrvlat-Dispersion 5 (PAC 5)

### Formulierung aus LEUKOTAN® NS 3 und Weißöl 285 (Komponente B₁ und B₃) (20:80)

In einem Rührbehälter werden 376 g Wasser vorgelegt. Dann werden bei 20-25°C unter Rühren 256 g der Polyacrylat-Dispersion LEUKOTAN® NS 3 (Rohm and Haas) (=Komponente B₁) eingetragen. Der Ansatz wird 30 Minuten bei dieser Temperatur gerührt, bis das LEUKOTAN® NS 3 homogen verteilt ist. Anschließend werden bei 20-25°C unter Rühren 368 g Weißöl 285 (Komponente B₃) innerhalb von 10 Minuten zudosiert. Das Gemisch wird noch 60 Minuten bei 20-25°C nachgerührt und anschließend mit Hilfe eines Dissolvers 10 Minuten bei 20-30°C dispergiert. Dann wird auf ≤30°C abgekühlt und gegebenenfalls unter Verwendung eines 100 µm-Filters filtriert. Man erhält eine lagerstabile, weiße Dispersion mit folgenden Eigenschaften:

| | |
|---|---|
| Feststoffgehalt | 46,6 Gew.-% |
| pH-Wert | 6,4 (unverdünnt, potentiometrisch) |
| Viskosität | 510 mPas (20°C, D = 100 sec⁻¹) |

### Polyacrylat-Dispersion 6 (PAC 6)

### Formulierung aus LEUKOTAN NS® 3 und Weißöl 285

### (Komponente B₁ und B₃)

In einem Rührbehälter (Dissolver) werden 585 g einer auf 40°C erwärmten Polyacrylat-Dispersion LUKOTAN® NS 3 (Rohm and Haas) (= Komponente B₁) eingetragen. Anschließend werden 715 g Weißöl 285 (Komponente B₃) hinzugegeben und 1 bis 2 Minuten mit dem Dissolver vermischt. Dabei wird gekühlt. Bei stehendem Dissolver werden 715 g Wasser zudosiert. Dann wird 15 bis. 20 Minuten bei maximaler Geschwindigkeit unter Kühlung (30°C ca.) dispergiert. Unter Verwendung eines 100 µm-Filters wird filtriert. Man erhält eine lagerstabile, weiße mittelviskose Dispersion mit folgenden Eigenschaften:

| | |
|---|---|
| Feststoffgehalt | 46,0 Gew.-% |
| pH-Wert | 6,5 (unverdünnt, potentiometrisch) |

### Dispersion eines Polyasparaginsäure-Derivats (PAS 1)

### (Komponente B₂)

In einem Reaktionskessel werden unter Rühren 16,61 kg Maleinsäureanhydrid in 13,22 kg Diethylenglykol eingetragen. Dann wird auf 10-20°C gekühlt und unter Kühlung 13,84 kg wäßrige Ammoniak-Lösung (25 %) so eindosiert, dass die Temperatur unterhalb von 60°C gehalten wird. Nach beendeter Zugabe wird noch 1 Stunde bei 70°C nachgerührt. Dann wird in 2,5 Stunden auf 140-145°C geheizt und Wasser abdestilliert. Danach wird bei 700-900 mbar weiter destilliert, um die Kondensationsreaktion zu vervollständigen. Es werden 13,44 kg Destillat entnommen. Nach beendeter Destillation werden bei 140-145°C 11,43 kg eines technischen Gemischs von Hexadecylamin und Octadecylamin (hydriertes Talgfettamin) zudosiert. Der Ansatz wird 6 Stunden bei 140-145°C nachgerührt. Anschließend wird der Ansatz abgekühlt und beginnend bei 110°C 2,85 kg Ölsäure zudosiert. Nach 10 Minuten werden 0,14 kg eines siliconhaltigen Entschäumers (z.B. RESPUMIT®S, Bayer AG) zugegeben und 10 Minuten verrührt. Innerhalb von 5 bis 30 Minuten wird eine Lösung von 1,23 kg Monoethanolamin in 47,19 kg Wasser eingerührt, wobei die Temperatur zwischen 80°C und 95°C gehalten wird. Nach beendeter Zugabe wird auf 60-70°C gekühlt, innerhalb von 60 Minuten 2,92 kg Natronlauge 50 % eingezogen und 1 Stunde bei 60-70°C nachgerührt. Anschließend werden 4,01 kg WasserstoffperoxidLösung (35 %) in 30 Minuten zugepumpt. Es wird ca. 3 Stunden bei 60-70°C nachgerührt. Dann wird unter Rühren auf ≤35°C abgekühlt. Gegebenenfalls wird portionsweise ein Reduktionsmittel, z.B. 0,1 bis 0,5 kg BAYREDUKT®EPK (Bayer AG) zugegeben und 1 Stunde verrührt und das Produkt über ein 30 µm-Filter filtriert.

| | |
|---|---|
| Feststoffgehalt | 34 Gew.-% |
| pH-Wert | 6,5 - 7,5 (1 Teil Probe + 4 Teile Wasser) |
| Viskosität | 100 - 500 mPas bei 20°C (D=100 sec⁻¹) |
| Teilchengröße | d₅₀ = 100-300 nm |

### Cyanamid-Polyisocyanat-Reaktionsprodukt 1 (Komponente B₄) (PUR 1)

20 g Cyanamid werden in 50 g Tetrahydrofuran gelöst. Unterhalb von 25°C werden unter Kühlung 48,2 g Triethylamin zugegeben. Direkt anschließend werden 95,25 g eines durch Trimerisierung *von* Hexamethylendiisocyanat erhaltenen und Isocyanuratgruppen aufweisenden Polyisocyanats, gekennzeichnet durch eine mittlere NCO-Funktionalität von ca. 3,3 (NCO-Gehalt = 22,5 Gew.-%) und eine Viskosität von 800 mPas bei 20°C (DESMODUR®N3600, BAYER AG), zugetropft. Anschließend werden 125 g Wasser eingerührt. Dann wird bei 80°C unter Rühren das Lösemittel aus dem Reaktionsgemisch abdestilliert. Der Festgehalt der klaren, wässrigen Lösung beträgt ca. 64 Gew.-%. Durch Wasserzugabe wird der Festgehalt auf 57 Gew.-% eingestellt.

### Isocyanat-Polyadditionsprodukt 2 (PUR2) (Komponente B₄)

587 g Cyanamid (10 %ig in Wasser) werden bei 20°C vorgelegt. Unter Kühlung werden 147,2 g Triethylamin in 30 Minuten bei 20-25°C zugegeben. Direkt anschließend werden 800 g Aceton zugegeben. Danach werden innerhalb von 60 Minuten 265,8 g eines durch Trimerisierung von Hexamethylendiisocyanat erhaltenen und Biuretgruppen aufweisenden Polyisocyanats, gekennzeichnet durch eine mittlere NCO-Funktionalität von 3,5 (NCO-Gehalt = 23 Gew.-%) und einer Viskosität von 2500 mPas bei 20°C (DESMODUR® N 3200, Bayer AG) gelöst in 200 g Aceton bei 20-30°C zugetropft. Dann wird 30 Minuten nachgerührt. Das Lösemittel wird bei 40°C und 150-600 mbar aus dem Reaktionsgemisch abdestilliert. Man erhält eine klare, wässrige Lösung mit ca. 47 Gew.-% Festgehalt (pH-Wert 7,7, Viskosität 60 mPas).

### Silicon-Emulsion 1 (Komponente a) (SIL1)

In einem Rührbehälter werden 2 000 g Trimethylsilyl-terminiertes Polydimethylsiloxan (Viskosität 5 000 mm² /s, 25°C) (z.B. BAYSILONE® Öl M 5000, Bayer AG) vorgelegt. Dann werden bei Raumtemperatur unter Rühren 218,7 g (3-Aminopropyl)-methyl-diethoxysilan und anschließend 2,0 g Natronlauge (50 %ig) zugegeben. Der Kesselinhalt wird im Verlauf von 2 Stunden auf 160°C erwärmt. Es wird 7 Stunden bei 160°C gerührt, wobei ein leichter N₂-Strom übergeleitet wird. Dann wird noch 3 Stunden unter Vakuum bei 900 bis 130 hPa/160°C gerührt. Während dieser Kondensation werden 107,1 g Destillat abgenommen. Nach beendeter Ethanol-Abspaltung wird der Ansatz unter Rühren auf 20-30°C abgekühlt. Man erhält ein mit 3-Aminopropyl-Seitenketten funktionalisiertes Polysiloxan (Gehalt Basen-N = 0,76 Gew.-%, Viskosität bei 20°C / 100 s⁻¹ = 35 mPas).

Dann werden 50 g des oben genannten 3-Aminopropyl-funktionalisierten Polysiloxans (0,0271 mol N) in 50 g Tetrahydrofuran bei 20 bis 30°C mit 7,5 g Bis-(t-butyl)-tricarbonat (0,0286 mol) umgesetzt. Nach Ende der CO₂-Entwicklung ist im IR-Spektrum die Isocyanat-Bande bei 2 200 cm⁻¹ leicht zu identifizieren. Das erhaltene 3-Isocyanatopropyl-funktionalisierte Polysiloxan wird mit 1,14g Cyanamid (0,0271) mol) und 2,74 g Triethylamin (0,0271 mol) bei 10 bis 20°C umgesetzt und 10 Minuten bei dieser Temperatur nachgerührt. Das so hergestellte Polysiloxan, das Seitenketten mit funktionellen Gruppen der Formel 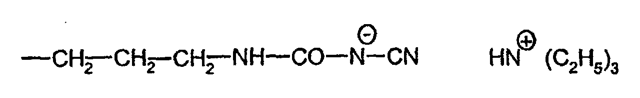 enthält, wird mit 50 g Isopropanol versetzt. Im Verlauf von 2 Stunden werden bei 20 bis 30°C 390 g VE-Wasser zudosiert und 15 Minuten nachgerührt. Nach beendeter Zugabe werden bei 50°C und 150 bis 260 hPa das Lösemittel-Wasser-Gemisch abdestilliert. Man erhält eine weiße Emulsion. Zuletzt wird auf Raumtemperatur (≤30°C) abgekühlt und über ein 20 µm-Sieb filtriert.

| | |
|---|---|
| Feststoffgehalt | 13-14 Gew.-% |
| pH-Wert | ca. 7 (unverdünnt) |
| mittl. Teilchengröße | 300 nm |
| Viskosität | 20 mPas bei 100 sec⁻¹, 20°C |

### Silicon-Emulsion 2 (Komponente a) (SIL 2)

In einem Rührbehälter werden 253 g Trimethylsilyl-terminiertes Polydimethylsiloxan (Viskosität 5000 mm² /s, 25°C) (z.B. BAYSILONE® Öl M 5000, Bayer AG) vorgelegt. Dann werden bei Raumtemperatur unter Rühren 11,3 g (2-Aminoethyl-3-aminopropyl)-methyl-dimethoxysilan (Dynasilan 1411, Fa. Hüls) und anschließend 0,15 g Natronlauge (50%ig) zugegeben. Der Kesselinhalt wird im Verlauf von 2 Stunden auf 115°C erwärmt. Es wird 5,25 Stunden bei 115°C gerührt, wobei ein leichter N₂-Strom übergeleitet wird. Dann wird noch 0,75 Stunden unter Vakuum bei 100-150 hPa gerührt. Während dieser Kondensation (6 Stunden) werden 0,6 g Destillat abgenommen. Nach beendeter Methanol-Abspaltung wird der Ansatz unter Rühren auf 20-30°C abgekühlt. Man erhält ein mit 2-Aminoethyl-3-aminopropyl-Seitenketten funktionalisiertes Polysiloxan (Gehalt Basen-N = 0,56 Gew.-%, Viskosität bei 20°C / 100 s⁻¹ = 95 mPas).

Bei 10°C werden 125 g des erhaltenen Polysiloxans unter Rühren zu einer Lösung von 33,3 g Isophorondiisocyanat in 100 g Tetrahydrofuran zudosiert und 30 Minuten bei 20°C nachgerührt. Diese Lösung wird bei 20°C zu einer Lösung, die aus 10,5 g Cyanamid, 100 g Tetrahydrofuran und 25,3 g Triethylamin hergestellt wurde, unter Kühlung zugetropft, so dass die Reaktionstemperatur unterhalb von 30°C bleibt Dann wird 1 Stunde nachgerührt und dabei langsam auf 50°C erwärmt. Dann werden 100 g Isopropanol eingerührt. Bei 50-55°C werden unter schnellem Rühren 452,9 g Wasser (Raumtemperatur) im Verlauf von ca. 2 Stunden zudosiert. Nach beendeter Zugabe wird bei 50-55°C und 150-250 hPa das Lösemittel-Wasser-Gemisch abdestilliert. Man erhält eine weiße, feinteilige Emulsion. Zuletzt wird auf Raumtemperatur (≤30°C) abgekühlt und über ein 20 µm-Sieb filtriert.

| | |
|---|---|
| Feststoffgehalt | 30 Gew.- % |
| pH-Wert | ca. 7 (unverdünnt) |
| mittl. Teilchengröße | 250 nm |
| Viskosität | 300 mPas bei 100 sec⁻¹, 20°C |

### Silicon-Emulsion 3 (SIL 3) (Komponente a) und B₄))

5,3 g des Cyanamid-Polyisocyanat-Reaktionsprodukts 1 (PUR 1) (entspricht Komponente B₄) und 100 g der Silicon-Emulsion 1 (SIL 1) werden bei Raumtemperatur 30 Minuten verrührt. Man erhält die Silicon-Emulsion 3 (SIL 3).

| | |
|---|---|
| Festgehalt | 16 Gew.-% |
| mittlere Teilchengröße | 300 nm |
| Viskosität | 25 mPas (20°C) |

### Silicon-Emulsion 4 (Komponente a) (SIL 4)

In einem Rührbehälter werden 500 g Trimethylsilyl-terminiertes Polydimethylsiloxan (Viskosität 5000 mm²/s, 25°C) (z.B. BAYSILONE® Öl M 5000, Bayer AG) vorgelegt. Dann werden bei Raumtemperatur unter Rühren 38,3 g 3-Aminopropylmethyl-diethoxysilan und anschließend 0,5 g Natronlauge (50 %ig) zugegeben. Der Kesselinhalt wird im Verlauf von 2 Stunden auf 115°C erwärmt. Es wird 8 Stunden bei 115-150°C gerührt, wobei ein leichter N₂-Strom übergeleitet wird. Dann wird noch 2 Stunden unter Vakuum bei 800 hPa/150°C gerührt. Während dieser Kondensation werden ca. 20 g Destillat abgenommen. Nach beendeter Ethanol-Abspaltung wird der Ansatz unter Rühren auf 20-30°C abgekühlt. Man erhält ein mit 3-Aminopropyl-Seitenketten funktionalisiertes Polysiloxan (Gehalt Basen-N = 0,56 Gew.-%, Viskosität bei 20°C/100 s⁻¹ = 75 mPas).

Zu einer Vorlage aus 15,6 g Isophorondiisocyanat in 100 g Tetrahydrofuran wird bei 15°C eine Lösung, die aus 2,94 g Cyanamid, 100 g Tetrahydrofuran und 7,08 g Triethylamin hergestellt wurde, in 35 Minuten zudosiert und 25 Minuten bei 20°C nachgerührt. Dann werden 181,5 g des oben genannten 3-Aminopropyl-funktionalisierten Polysiloxans bei 20°C rasch zugegeben und eine Stunde nachgerührt, wobei die Temperatur von 20 auf 50°C erhöht wird. Bei 50-55°C werden 100 g Isopropanol eingerührt und unter schnellem Rühren 381,5 g Wasser (Raumtemperatur) mit einer Pumpe im Verlauf von ca. 2 Stunden zudosiert. Nach beendeter Zugabe werden bei 50-55°C und 150-250 hPa das Lösemittel-Wasser-Gemisch abdestilliert. Man erhält eine weiße Emulsion. Zuletzt wird auf Raumtemperatur (≤30°C) abgekühlt und über ein 20 µm-Sieb filtriert.

| | |
|---|---|
| Feststoffgehalt | 35 Gew.-% |
| pH-Wert | ca. 7 (unverdünnt) |
| mittl. Teilchengröße | 300 nm |
| Viskosität | 50 mPas bei 100 sec⁻¹, 20°C |

### Silicon-Emulsion 5 (SIL 5) (Komponente a) und B₄)

5,3 g des Cyanamid-Polyisocyanat-Reaktionsprodukts 2 (PUR 2) und 100 g der Silicon-Emulsion 1 (SIL 1) werden bei Raumtemperatur 30 Minuten verrührt.

| | |
|---|---|
| Feststoffgehalt | 35 Gew.-% |
| pH-Wert | ca. 7 |

### Anwendungsbeispiele: Herstellung vom hydrophobiertem Leder

Die Dispersionen wurden als Hilfsmittel zur Herstellung hydrophobierter Leder geprüft. Die folgende Rezeptur eignet sich für hydrophobierte Oberleder.
Material: chromgegerbte Rind-Wet-blue, Narbenleder, enthält 2,5 % Cr₂O₃
Falzstärke: 2 mm
Die folgenden %-Angaben beziehen sich jeweils auf das Falzgewicht.
Die Einsatzmengen der Hilfsmittel in der folgenden Rezeptur beziehen sich auf das Wirkstoff-Angebot bzw. den Festgehalt.

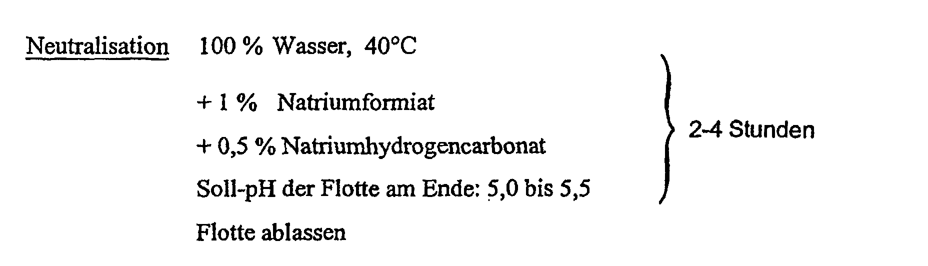

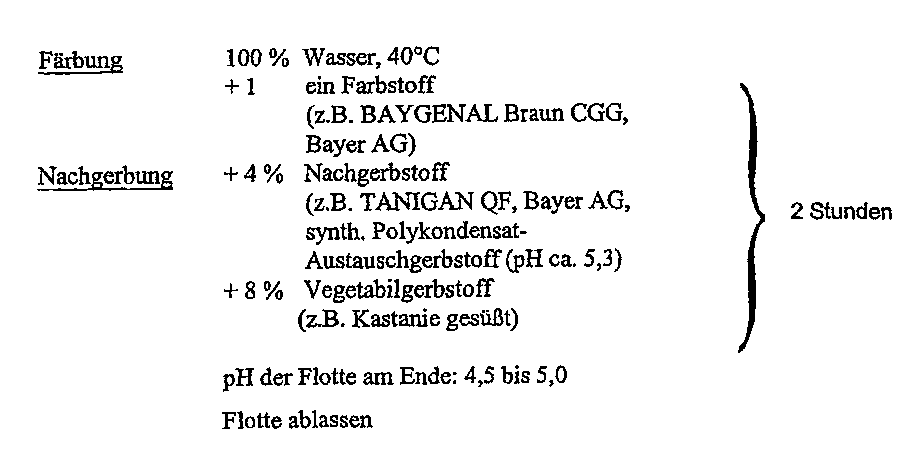

| | | |
|---|---|---|
| Waschen | 200 % Wasser, 50°C | 10 Minuten |
| | Flotte ablassen | |

| | | |
|---|---|---|
| Hydrophobierung | + 0,2 % NH₄OH (10%ige Lösung) pH der Flotte 5 bis 6 Flotte ablassen | 30 Minuten |
| | | |
| | + 100 % Wasser, 50°C | |
| | + x % Dispersion b) (Komponente B1, B2, B3) | 3 Stunden |
| | + y % Polysiloxan-Emulsion a) (Komponente a) oder a) + B4) | 1 Stunde |
| | | |
| | pH der Flotte am Ende: 4,9 bis 5,0 Flotte ablassen | |

| | | |
|---|---|---|
| Fixierung | + 0,5 % HCOOH pH der Flotte am Ende 3,5-4,0 Flotte ablassen (klar und farblos). | 0,5 Stunden |

| | |
|---|---|
| Fertigstellen | gründlich spülen, Leder über Nacht auf Bock ablegen, ausrecken, hängetrocknen, stollen, vakuumieren (1 Minute bei 70°C). |

Die Mengen x % und y % in oben genannter Rezeptur beziehen sich auf die Einsatzmengen, wie in nachstehender Tabelle angegeben.

Es wurden weiche, festnarbige Leder mit angenehmem vollem Griff erhalten. Die Narbenseite war sehr glatt. Die Wasseraufnahme betrug bei dem nach oben beschriebenen Verfahren hergestellten Leder nach 24 Stunden weniger als 30 %.

Zur Bestimmung der Hydrophobwirkung eignen sich folgende Prüfungen:
*1. Wasseraufnahme nach 24 Stunden an einer Lederprobe [IUP 7* / *DIN 53330 (Kubelka-Nemec)]*
*2. Bally-Penetrometer in Anlehnung an DIN 53338* / *IUP 10 der Internationalen Union der Leder-Chemiker-Verbände (s. Das Leder 12, Seite 36 bis 40 (1961))*
*3. Maeser-Test (in Anlehnung an ASTM D 2099-70)*

Besonders geeignet zur Bewertung der Hydrophob-Wirkung bei dynamischer Beanspruchung ist der Maeser-Test.

In der folgenden Tabelle sind die Prüfergebnisse bei Einsatz der erfindungsgemäßen Produkte und der Vergleichsprodukte dargestellt (falls nichts anderes angegeben ist, Fixierung mit 0,5 % HCOOH):

| Bsp. Nr. | Probenbezeichnung Komp. b). | X % | Typ der Komp. b) | Probenbezeichnung Komp. a) | Y % | Maeser Flexe | Oberfl. Griff 1=rauh 5=glatt | Griff 1=hart 5=weich | Fülle 1=schlecht 5=sehr gut | Egalität |
|---|---|---|---|---|---|---|---|---|---|---|
| 1 | PAC 1 | 4 | B₁ | SIL 1 | 2 | > 44000 | 5 | 4 | 5 | 5 |
| 2 | PAC 2 | 4 | B₁ + B₃ | SIL 1 | 2 | > 60000 | 5 | 5 | 5 | 5 |
| 3 | PAC 3 | 4 | B₁ + B₃ | SIL 1 | 2 | > 55000 | 5 | 5 | 5 | 5 |
| 4 | PAC 4 | 4 | B₁ + B₃ | SIL 1 | 2 | > 50000 | 5 | 5 | 5 | 5 |
| 5 | PAC 5 | 4 | B₁ + B₃ | SIL 1 | 2 | > 53000 | 5 | 5 | 5 | 5 |
| 6 | PAC 2 | 4 | B₁ + B₃ | SIL2 | 2 | > 60000 | 5 | 5 | 5 | 5 |
| 7 | PAC 1 | 4 | B₁ | -- | -- | 1380 | 5 | 4 | 4 | 5 |
| 8 | PAC 2 | 4 | B₁ + B₃ | -- | -- | 2200 | 5 | 5 | 5 | 5 |
| 9 | PAC 3 | 4 | B1 + B3 | -- | -- | 3300 | 5 | 5 | 5 | 5 |
| 10 | PAC 4 | 4 | B₁ + B₃ | -- | -- | 2500 | 5 | 5 | 5 | 5 |
| 11 | PAS 1 | 4 | B₂ | SIL 1 | 2 | 52000 | 5 | 5 | 4 | 5 |
| 12 | PAC 3 | 4 | B₁ + B₃ | SIL 3 [a)+B4] | 2 | 65000 | 5 | 5 | 5 | 5 |
| 13 | PAC 4 | 4 | B₁ + B₃ | SIL 3 [a)+B₄] | 2 | 70000 | 5 | 5 | 5 | 5 |
| 14 | - | - | - | SIL 1 | 2 | 38000 | 5 | 3 | 4 | 5 |
| 15 | - | - | - | SIL3 [a)+B₄] | 2 | 65000 | 5 | 4 | 4 | 5 |
| 16 | - | - | - | SIL 4 | 2 | 50000 | 5 | 3 | 4 | 5 |
| 17 | PAC 6 | 4 | B₁+B₃ | SIL 5 | 2 | >50000 | 5 | 5 | 5 | 5 |
| V 1 *) | | | | | | 10800 | 3 | 3 | 4 | 3 |
| V 2 *) | | | | | | 31000 | 5 | 5 | 5 | 4 |

| | | | | | | | | | | |
|---|---|---|---|---|---|---|---|---|---|---|
| *) Vergleichsbeispiele: V1 = 8 % Densodrin EN + 2% Polysiloxan-Emulsion gemäß Beispiel 5 der DE-C 19646916, Fixierung mit Ameisensäure V2 = 8 % Densodrin EN + 2% Polysiloxan-Emulsion gemäß Beispiel 5 der DE-C 19646916, Fixierung mit CHROMOSAL B, einem basischen Chrom(III)-Sulfat | | | | | | | | | | |

Mit dem erfindungsgemäßen Hydrophobiermittelsystem werden Leder erhalten, die den Stand der Technik (V 1 und V 2) hinsichtlich Hydrophobie, ausgedrückt als Anzahl der Knickungen im Maeser-Test und hinsichtlich Weichheit, Oberfächengriff, Farbegalität, Zurichtbarkeit und Wasserdampfdurchlässigkeit übertreffen oder zumindest erreichen. Insbesondere gilt das für Hydrophobierungen, die mit einer Kombination von Komponenten b) (B₁ bis B₄) und Komponenten a) durchgeführt werden. Besonderer Vorteil des erfindungsgemäßen Hydrophobiermittelsystems ist, dass das hohe Eigenschaftsniveau auch ohne eine Fixierung mit Mineralsalzen erzielt wird und das Hydrophobiermittelsystem selbstvernetzend ist (Permanenz verbessert).

Die Vergleichsbeispiele 1 und 2 (V1 und V2) zeigen, dass mit den Silicon-Dispersionen nach dem Stand der Technik mit einer Ameisensäurefixierung wesentlich schlechtere Werte erhalten werden und diese einer Fixierung mit Chromsalzen bedürfen, um das Niveau der Maeser-Werte anzuheben.

Außerdem zeichnet sich das erfindungsgemäße Hydrophobiermittelsystem durch eine bessere Zurichtbarkeit und Wasserdampfdurchlässigkeit der Leder gegenüber den Ledern aus, die mit Hydrophobiermitteln nach dem Stand der Technik hergestellt wurden.

Insbesondere ist die Haftung der aufzubringenden Zurichtungsprodukte auf organischer oder wässriger Basis (BAYDERM Vorgrund APV, dann zum Beispiel BAYDERM Finish 65UD oder BAYDERM Finish DLF) nach dem Trocknen der Beschichtungen deutlich besser als nach dem Stand der Technik. Vor allem Polyurethan-Dispersionen, die als Grundierungen eingesetzt werden, zeigen gegenüber dem erfindungsgemäßen Hydrophobiermittelsystem überraschend eine verbesserte Affinität. Dadurch wird insgesamt ein wesentlich verbesserter Verbund zwischen Lederoberfläche und den aufgetragenen Zurichtfilmen erzielt.

Ein weiterer Vorteil ist, dass die Einsatzmengen des erfindungsgemäßen Hydrophobiermittelsystems sehr gering sind, so dass die Wasserdampfdurchlässigkeit der ausgerüsteten Leder und somit die Atmungsaktivität des gesamten Substrats nicht beeinträchtigt wird.

## Patentansprüche

1. Cyanharnstoffgruppen-haltiges Polysiloxan, das **dadurch gekennzeichnet ist, dass** die Polysiloxankette mindestens eine Struktureinheit der Formel (1)
[BR_{b}SiO_{(3-b)/2}]ₘ (1)
und gegebenenfalls mindestens eine Struktureinheit der Formel
[ARₐSi O_{(3-a)/2}]ₖ (2)
und/oder mindestens eine Struktureinheit der Formel (3)
[R_{c}SiO_{(4-c)/2}]ₙ (3)
und gegebenenfalls mindestens eine Endgruppe ausgewählt aus den Formeln
R₃SiO_{1/2} (4a)
BR₂SiO_{1/2} (4b)
und
AR₂SiO_{1/2} (4c)
enthält, wobei
B für einen cyanharnstoffgruppenhaltigen Rest der Formel 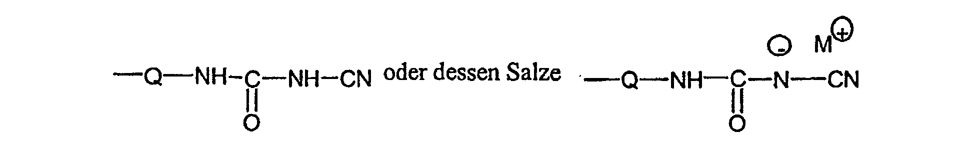 steht, in der
Q einen bivalenten, Kohlenwasserstoffrest bedeutet, der bevorzugt 2 bis 60 C-Atome besitzt und gegebenenfalls eine oder mehrere Ether-, Imino-, Ester-, Amid-, Urethan-, Harnstoff- oder Carbonatgruppen, Biuret-, Isocyanurat-, Uretdion-, Allophanat-, 2,4,6-Trioxo-tetrahydro1,3,5-oxadiazin-Struktureinheiten oder Kombinationen daraus enthält und der gegebenenfalls durch eine oder 2 weitere Cyanhamstoffgruppen substituiert ist,
wobei
M für Na⁺, K⁺, Li⁺, NH⁺₄ oder 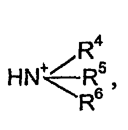 bevorzugt für NH₄^{⊕} oder HN^{⊕}(C₂H₅)₃ steht,
wobei R⁴, R⁵ und R⁶ unabhängig voneinander für C₁-C₁₈-Alkyl, insbesondere C₁-C₄-Alkyl oder substituiertes C₁-C₁₈-Alkyl, insbesondere Hydroxyalkyl, oder Aralkyl, insbesondere Benzyl, stehen,
A für einen C₁-C₇₀-Kohlenwasserstoffrest steht, der gegebenenfalls durch Hydroxy-, Carboxy-, Epoxy-, (Meth)Acrylat- oder Aminogruppen substituiert ist und der gegebenenfalls durch nicht benachbarte Ether-, Ester-, Amid-, Imino-, Urethan-, Harnstoff- oder Carbonatgruppen unterbrochen ist,
R für einen C₁ bis C₁₂-Alkylrest oder einen Phenylrest steht,
a für 0 oder 1 steht,
b für 0 oder 1 steht,
k für 0 bis 50 steht
c für 1 oder 2 steht,
m für 0 bis 50 steht, und
n für 10 bis 1000 steht,
mit der Maßgabe, dass mindestens eine Endgruppe der Formel (4b) vorhanden ist für den Fall, dass die Polysiloxankette nur Struktureinheiten der Formel (2) und/oder (3) enthält.

2. Polysiloxan gemäß Anspruch 1, **dadurch gekennzeichnet, dass** Q für einen bivalenten Kohlenwasserstoffrest steht, der 2 bis 40 C-Atome besitzt und der gegebenenfalls eine oder mehrere Ether, Imino-, Ester-, Amid-, Urethan-, Harnstoff- oder Carbonatgruppen, Biuret-, Uretdion-, Isocyanurat-, Allophanatgruppen, 2,4,6-Trioxo-tetrahydro-1,3,5-oxadiazin-Struktureinheiten oder Kombinationen daraus enthält,
und M^{⊕} für NH₄^{⊕} oder 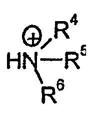 steht,
wobei R⁴ bis R⁶ unabhängig voneinander für C₁-C₄-Alkyl stehen.

3. Polysiloxan gemäß wenigstens einem der Ansprüche 1 und 2, **dadurch gekennzeichnet, dass**
A für einen Rest der Formel 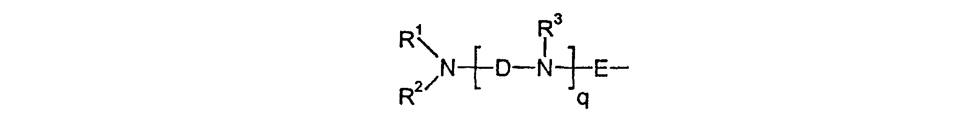 steht, worin
R¹ bis R³ unabhängig voneinander für Wasserstoff oder für einen einwertigen C₂-C₆₀-Kohlenwasserstoffrest stehen, der gegebenenfalls eine oder mehrere nicht benachbarte Ether-, Imino-, Amid-, Harnstoff-, Urethan-, Ester-, oder Carbonatgruppen enthält und gegebenenfalls mit einer oder zwei Carboxylgruppen -COOH bzw. deren Salze COO^{⊖}M₁^{⊕} und/oder einer oder zwei Hydroxylgruppen substituiert ist,
wobei
R¹ und R² nicht gleichzeitig über eine Carbonylgruppe mit dem Stickstoffatom verknüpft sind,
D und E unabhängig voneinander für einen zweiwertigen C₂-C₂₀-Kohlenwasserstoffrest stehen, der durch Hydroxyl substituiert oder durch nicht benachbarte O-Atome unterbrochen sein kann,
wobei
M₁^{⊕} das Gegenion der neutralisierten Carboxylgruppen (-COO^{⊖}M₁^{⊕}) bedeutet und für Na⁺, K⁺, Li⁺, NH⁺₄, 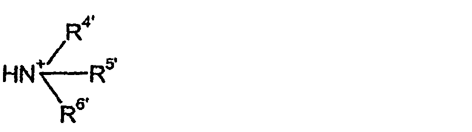 steht, wobei R^{4'} bis R^{6'} unabhängig voneinander für gegebenenfalls durch Hydroxy substituiertes C₁-C₁₈-Alkyl stehen, und
q für 0 bis 3 steht.

4. Polysiloxan gemäß wenigstens einem der Ansprüche 1 bis 3, daduch gekennzeichnet, dass es
- eine mittlere Molmasse (Mw) von 1000 bis 100000 g/Mol, aufweist,
- einen Gehalt an Cyanhamstoffgruppen in Formel (1) von 0,05 bis 5 mMol pro Gramm Polysiloxan-Wirkstoff aufweist und
- einen Gehalt an funktionellen Gruppen in Formel (2) von 0 bis 2 mMol pro Gramm Polysiloxan-Wirkstoff aufweisen, wobei unter "funktionellen Gruppen" bevorzugt Hydroxy und/oder Carboxygruppen zu verstehen sind.

5. Polysiloxan gemäß mindestens einem der Ansprüche 1 bis 4, **dadurch gekennzeichnet, dass** sie aus Struktureinheiten der Formeln (1) und (3) und gegebenenfalls (4a) und/oder (4b) bestehen.

6. Verfahren zur Herstellung der Polysiloxane gemäß Anspruch 1, **dadurch gekennzeichnet, dass** man ein Polysiloxan, das Struktureinheiten der Formel (5)
[B' R_{b} SiO_{(3-b)/2}]ₘ (5)
und gegebenenfalls der Formel (2)
[ARₐSiO_{(3-a)/2}]ₖ (2)
und/oder der Formel (3)
[R_{c}SiO_{(4-c)/2}]ₙ (3)
und gegebenenfalls mindestens eine Endgruppe ausgewählt aus der Formeln
R₃SiO_{1/2} (4a),
B'R₂SiO_{1/2} (4b')
und
AR₂SiO_{1/2} (4c)
enthält, in der
A, R, a, b, c, k, m und n die oben genannte Bedeutung haben und
B' für einen Rest der Formel
-Q-NCO steht,
worin
Q die oben angegebene Bedeutung hat,
mit Cyanamid und einem Neutralisationsmittel für die Cyanamidgruppen, vorzugsweise mit einem aus Cyanamid und Neutralisationsmittel gebildeten Salz umsetzt.

7. Wässrige Dispersionen, enthaltend mindestens ein Polysiloxan gemäß Anspruch 1.

8. Verfahren zur Herstellung der Dispersionen gemäß Anspruch 7, **dadurch gekennzeichnet, dass** man mindestens ein Polysiloxan gemäß Anspruch 1, dessen Cyanharnstoff-Gruppen durch Basen neutralisiert sind und in der Salzform vorliegen, gegebenenfalls in Gegenwart eines geeigneten Lösemittels, in Wasser dispergiert und anschließend das gegebenenfalls vorhandene Lösemittel abdestilliert.

9. Hydrophobiermittelsystem, enthaltend
a) wenigstens ein Polysiloxan gemäß Anspruch 1 und
b) wenigstens eine Komponente aus der Gruppe B ₁ bis B₄, wobei
B₁ ein anionisches Copolymerisat ist,
B₂ Polyasparaginsäure oder ein Derivat davon ist,
B₃ ein Paraffin ist und
B₄ ein Isocyanat-Additionsprodukt ist.

10. Hydrophobiermittelsystem gemäß Anspruch 9, **dadurch gekennzeichnet, dass** es sich bei der Komponente B1 um ein anionisches Copolymerisat handelt, hergestellt durch radikalisch initiierte Copolymerisation von (jeweils bezogen auf Monomergemisch)
α) 10-90 Mol-% des Esters einer monoethylenisch ungesättigten C₃-C₅-Carbonsäure auf Basis eines Alkohols mit 4 bis 40 C-Atomen
β) 90-10 Mol-% einer monoethylenisch ungesättigten Carbonsäure
γ) 0-20 Mol-% eines monoethylenisch ungesättigten C₄-C₆-Dicarbonsäureanhydrids
δ) 0-30 Mol-% eines C₂-C₈-Olefins (Isobuten, Diisobutylen) und
ε) 0-10 Mol-% eines weiteren Comonomers aus der Gruppe Styrol, alpha-Methylstyrol, Vinylester von C₁-C₈-Carbonsäuren
und gegebenenfalls anschließende partielle Umsetzung der Anhydridgruppen mit einem primären oder sekundären C₁-C₄₀-Alkohol und/oder einem primären oder sekundären Amin mit einem oder zwei C₁-C₁₈-Alkyl- oder Alkenylresten, mit der Maßgabe, dass mindestens 20 Mol-% der den Anhydridgruppen entsprechenden Carboxylgruppen nicht mit Alkohol und/oder Amin umgesetzt werden, sondern mit einer Base neutralisiert werden,
wobei wenigstens 50 Mol-% der Carboxylgruppen der Komponente b) neutralisiert werden.

11. Hydrophobiermittelsystem gemäß wenigstens einem der Ansprüche 9 und 10, **dadurch gekennzeichnet, dass** es sich bei der Komponente B2 um ein Polyasparaginsäure-Derivat mit einem als Zahlenmittel bestimmten Molekulargewicht von 700 bis 30 000, vorzugsweise 1 300 bis 16 000 g/mol, erhältlich durch Umsetzung von
B₂-A) Polysuccinimid mit einem als Zahlenmittel bestimmten Molekulargewicht von 500 bis 10 000, vorzugsweise 500 bis 6 000, insbesondere 1 000 bis 4 000, vorzugsweise erhältlich durch Umsetzung von Maleinsäureanhydrid und NH₃-Lösung und anschließende Kondensation, mit
B₂-B) 5 bis 90, vorzugsweise 20 bis 80 Mol-%, bezogen auf Succinimideinheiten des Polysuccinimids, primärem und/oder sekundärem Amin, dessen Stickstoffsubstituenten 1 bis 60, vorzugsweise 1 bis 36 Kohlenstoffatome enthalten, die durch Hydroxylgruppen substituiert und/oder durch Sauerstoffatome, unterbrochen sein können, wobei mindestens 2,5 Mol-%, vorzugsweise mindestens 15 Mol-%, insbesondere mindestens 30 Mol-% der Stickstoffsubstituenten des Amins mindestens 12 Kohlenstoffatome enthalten, und mit
B₂-C) 95 bis 10 Mol-%, vorzugsweise 80 bis 20 Mol-% ringöffnender Base in Gegenwart von Wasser,
handelt.

12. Hydrophobiermittelsystem gemäß wenigstens einem der Ansprüche 9 bis 11, **dadurch gekennzeichnet, dass** es sich bei der Komponente B₃ um einen paraffinischen Kohlenwasserstoff, der gegebenenfalls durch Hydroxylund/oder Carboxylgruppen substituiert sein kann, handelt.

13. Hydrophobiermetallsystem gemäß wenigstens einem der Ansprüche 9 bis 12, **dadurch gekennzeichnet, dass** es sich bei der Komponente B₄ um ein Umsetzungprodukt aus
B₄-a) einem organischen Polyisocyanat
B₄-b) pro Äquivalent in B₄-a) enthaltenem NCO oder latentem NCO 0,0 bis 0,9 Äquivalente C₆-C₂₄, vorzugsweise C₁₂-C₁₈-Alkohol,
B₄-c) pro Äquivalent in B₄-a) enthaltenem NCO oder latentem NCO 0,1 bis 1,0 Mol Cyanamid und
B₄-d) Ammoniak oder flüchtigem Amin handelt.

14. Verfahren zur Hydrophobierung von Substraten, **dadurch gekennzeichnet, dass** man das Substrat mit mindestens einem Polysiloxan gemäß mindestens einem der Ansprüche 1 bis 5 oder mindestens einer Polysiloxan-Dispersion gemäß Anspruch 7 oder mindestens einem Hydrophobiermittelsystem gemäß mindestens einem der Ansprüche 9 bis 13 behandelt.

15. Substrate, hydrophobiert mit einem Hydrophobiermittel enthaltend mindestens ein Polysiloxan gemäß Anspruch 1 oder mit mindestens einem Hydrophobiermittelsystem gemäß Anspruch 9.

16. Verwendung der Hydrophobiermittelsysteme gemäß wenigstens einem der Ansprüche 9 bis 13 zur Hydrophobierung von Leder und/oder Pelzen.

## Claims

1. Polysiloxane containing cyanourea groups, which is **characterized in that** the polysiloxane chain contains at least one structural unit of the formula (1)
[BR_{b}SiO_{(3-b)/2}]ₘ (1)
and optionally at least one structural unit of the formula
[ARₐSi O_{(3-a)/2}]ₖ (2)
and/or at least one structural unit of the formula (3)
[R_{c}SiO_{(4-c)/2}]ₙ (3)
and optionally at least one terminal group selected from the formulae
R₃SiO_{1/2} (4a)
BR₂SiO_{1/2} (4b)
and
AR₂SiO_{1/2} (4c)
B representing a radical containing a cyanourea group and of the formula 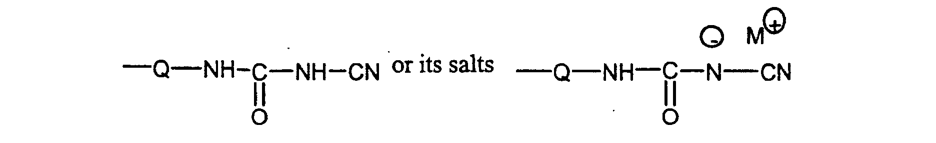 in which
Q denotes a bivalent hydrocarbon radical which preferably has 2 to 60 C atoms and optionally contains one or more ether, imino, ester, amide, urethane, urea or carbonate groups, biuret, isocyanurate, uretdione, allophanate or 2,4,6-trioxo-tetrahydro-1,3,5-oxadiazine structural units or combinations thereof and which is optionally substituted by one or 2 further cyanourea groups,
M representing Na⁺, K⁺, Li⁺, NH⁺₄ or 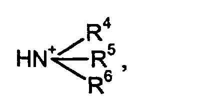 preferably NH₄^{⊕} or HN^{⊕} (C₂H₅)₃,
R⁴, R⁵ and R⁶, independently of one another, representing C₁-C₁₈-alkyl, in particular C₁-C₄-alkyl, or substituted C₁-C₁₈-alkyl, in particular hydroxyalkyl, or aralkyl, in particular benzyl,
A representing a C₁-C₇₀-hydrocarbon radical which is optionally substituted by hydroxyl, carboxyl, epoxy, (meth)acrylate or amino groups and which is optionally interrupted by non-neighbouring ether, ester, amide, imino, urethane, urea or carbonate groups,
R represents a C₁- to C₁₂-alkyl radical or a phenyl radical,
a represents 0 or 1,
b represents 0 or 1,
k represents 0 to 50,
c represents 1 or 2,
m represents 0 to 50 and
n represents 10 to 1000,
with the proviso that at least one terminal group of the formula (4b) is present where the polysiloxane chain contains only structural units of the formula (2) and/or (3).

2. Polysiloxane according to Claim 1, **characterized in that** Q represents a bivalent hydrocarbon radical which has 2 to 40 C atoms and which optionally contains one or more ether, imino, ester, amide, urethane, urea or carbonate groups, biuret, uretdione, isocyanurate or allophanate groups or 2,4,6-trioxo-tetrahydro-1,3,5-oxadiazine structural units or combinations thereof,
and M^{⊕} represents NH₄^{⊕} or 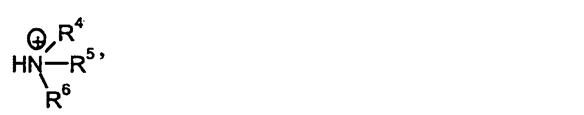 R⁴ to R⁶, independently of one another, representing C₁-C₄-alkyl.

3. Polysiloxane according to at least one of Claims 1 and 2, **characterized in that**
A represents a radical of the formula 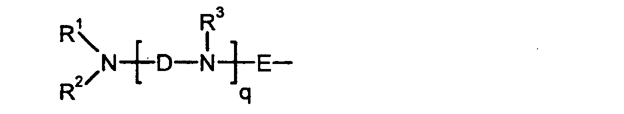 in which
R¹ to R³, independently of one another, represent hydrogen or a monovalent C₂-C₆₀-hydrocarbon radical which optionally contains one or more non-neighbouring ether, imino, amide, urea, urethane, ester or carbonate groups and is optionally substituted by one or two carboxyl groups -COOH or salts thereof COO^{⊖}M₁^{⊕} and/or one or two hydroxyl groups,
R¹ and R² not simultaneously being linked via a carbonyl group to the nitrogen atom,
D and E, independently of one another, representing a divalent C₂-C₂₀-hydrocarbon radical which may be substituted by hydroxyl or may be interrupted by non-neighbouring O atoms,
M₁^{⊕} denoting the opposite ion of the neutralized carboxyl groups (-COO^{⊖}M₁^{⊕}) and representing Na⁺, K⁺, Li⁺, NH⁺₄, 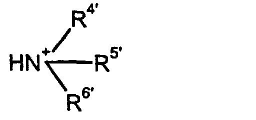 R^{4'} to R^{6'}, independently of one another, representing C₁-C₁₈-alkyl optionally substituted by hydroxyl, and
q representing 0 to 3.

4. Polysiloxane according to at least one of Claims 1 to 3, **characterized in that** it
- has an average molar mass (Mw) of 1000 to 100000 g/mol,
- has a content of cyanourea groups in formula (1) of 0.05 to 5 mmol per gram of polysiloxane active ingredient and
- has a content of functional groups in formula (2) of 0 to 2 mmol per gram of polysiloxane active ingredient, "functional groups" being understood as meaning hydroxyl and/or carboxyl groups.

5. Polysiloxane according to at least one of Claims 1 to 4, **characterized in that** it consists of structural units of the formulae (1) and (3) and optionally (4a) and/or (4b).

6. Process for the preparation of the polysiloxanes according to Claim 1, **characterized in that** a polysiloxane which contains structural units of the formula (5)
[B' R_{b} SiO_{(3-b)/2}]ₘ (5)
and optionally of the formula (2)
[ARₐSiO_{(3-a)/2}]ₖ (2)
and/or of the formula (3)
[R_{c}SiO_{(4-c)/2}]ₙ (3)
and optionally at least one terminal group selected from the formulae
R₃SiO_{1/2} (4a),
B'R₂SiO_{1/2} (4b')
and
AR₂SiO_{1/2} (4c)
in which
A, R, a, b, c, k, m and n have the abovementioned meaning and
B' represents a radical of the formula
-Q-NCO,
in which
Q has the abovementioned meaning,
is reacted with cyanamide and a neutralizing agent for the cyanamide groups, preferably with a salt formed from cyanamide and neutralizing agent.

7. Aqueous dispersions containing at least one polysiloxane according to Claim 1.

8. Process for the preparation of dispersions according to Claim 7, **characterized in that** at least one polysiloxane according to Claim 1, whose cyanourea groups have been neutralized by bases and are present in salt form, is dispersed in water, optionally in the presence of a suitable solvent, and any solvent present is then distilled off.

9. Water-repellent system containing
a) at least one polysiloxane according to Claim 1 and
b) at least one component from the group B₁ to B₄,
B₁ being an anionic copolymer,
B₂ being polyaspartic acid or a derivative thereof,
B₃ being a paraffin and
B₄ being an isocyanate adduct.

10. Water-repellent system according to Claim 9, **characterized in that** the component B₁ is an anionic copolymer prepared by free radical copolymerization of (based in each case on monomer mixture)
α) 10-90 mol % of the ester of a monoethylenically unsaturated C₃-C₅-carboxylic acid based on an alcohol having 4 to 40 carbon atoms
β) 90-10 mol % of a monoethylenically unsaturated carboxylic acid
γ) 0-20 mol % of a monoethylenically unsaturated C₄-C₆-dicarboxylic anhydride
δ) 0-30 mol % of a C₂-C₈-olefin (isobutene, diisobutylene) and
ε) 0-10 mol % of a further comonomer from the group consisting of styrene, alpha-methylstyrene and vinyl esters of C₁-C₈-carboxylic acids
and optionally subsequent partial reaction of the anhydride groups with a primary or secondary C₁-C₄₀-alcohol and/or a primary or secondary amine having one or two C₁-C₁₈-alkyl or alkenyl radicals, with the proviso that at least 20 mol % of the carboxyl groups corresponding to the anhydride groups are not reacted with alcohol and/or amine but are neutralized with a base,
at least 50 mol % of the carboxyl groups of component b) being neutralized.

11. Water-repellent system according to at least one of Claims 9 and 10, **characterized in that** the component B2 is a polyaspartic acid derivative having a molecular weight, determined as the number average, of 700 to 30000, preferably 1300 to 16000 g/mol, obtainable by reacting
B₂-A) polysuccinimide having a molecular weight, determined as the number average, of 500 to 10000, preferably 500 to 6000, in particular 1000 to 4000, preferably obtainable by reaction of maleic anhydride and NH₃ solution and subsequent condensation, with
B₂-B) 5 to 90, preferably 20 to 80, mol %, based on succinimide units of the polysuccinimide, of primary and/or secondary amine whose nitrogen substituents contain 1 to 60, preferably 1 to 36, carbon atoms which may be substituted by hydroxyl radicals and/or interrupted by oxygen atoms, at least 2.5 mol %, preferably at least 15 mol %, in particular at least 30 mol %, of the nitrogen substituents of the amine containing at least 12 carbon atoms, and with
B₂-C) 95 to 10 mol %, preferably 80 to 20 mol %, of ring-opening base in the presence of water.

12. Water-repellent system according to at least one of Claims 9 to 11, **characterized in that** the component B₃ is a paraffinic hydrocarbon which may optionally be substituted by hydroxyl and/or carboxyl groups.

13. Water-repellent system according to at least one of Claims 9 to 12, **characterized in that** the component B₄ is a reaction product of
B₄-a) an organic polyisocyanate
B₄-b) 0.0 to 0.9 equivalent of C₆-C₂₄-alcohol, preferably C₁₂-C₁₈-alcohol, per equivalent of NCO or latent NCO contained in B₄-a),
B₄-c) 0.1 to 1.0 mol of cyanamide per equivalent of NCO or latent NCO contained in B₄-a) and
B₄-d) ammonia or volatile amine.

14. Process for imparting water repellency to substrates, **characterized in that** the substrate is treated with at least one polysiloxane according to at least one of Claims 1 to 5 or with at least one polysiloxane dispersion according to Claim 7 or at least one water-repellent system according to at least one of Claims 9 to 13.

15. Substrate rendered hydrophobic with a water repellent containing at least one polysiloxane according to Claim 1 or with at least one water-repellent system according to Claim 9.

16. Use of the water-repellent systems according to at least one of Claims 9 to 13 for imparting water repellency to leather and/or hides.

## Revendications

1. Polysiloxane contenant des groupes cyanurée, **caractérisé en ce que** la chaîne de polysiloxane contient au moins un motif de structure de formule (1)
[BR_{b}SiO_{(3-b)/2}]ₘ (1)
et le cas échéant au moins un motif de structure de formule
[ARₐSi O_{(3-a)/2}]ₖ (2)
et/ou au moins un motif de structure de formule (3)
[R_{c}SiO_{(4-c)/2}]ₙ (3)
et le cas échéant au moins un groupe terminal choisi parmi ceux qui répondent aux formules
R₃SiO_{1/2} (4a)
BR₂SiO_{1/2} (4b)
et
AR₂SiO_{1/2} (4c)
dans lesquelles
B représente un radical contenant un groupe cyanurée de formule 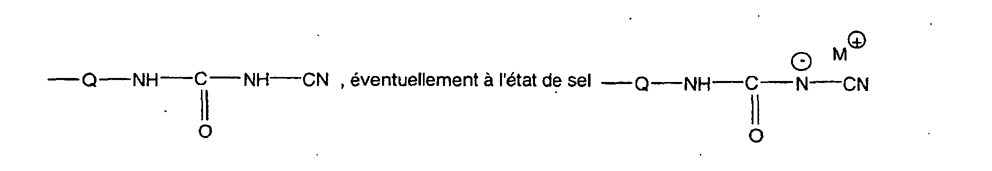 pour lesquels
Q représente un radical hydrocarboné bivalent contenant de préférence 2 à 60 atomes de carbone et le cas échéant un ou plusieurs groupes éther, imino, ester, amide, uréthane, urée ou carbonate, des motifs de structure biuret, isocyanurate, uret-dione, allophanate, 2,4,6-trioxo-tétrahydro-1,3,5-oxadiazine ou leurs combinaisons et qui porte le cas échéant un ou deux autres groupes cyanurée, les symboles des formules ci-dessus ayant les significations suivantes :
M représente Na⁺, K⁺, Li⁺, NH⁴⊕ ou 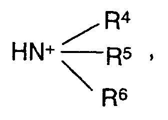 de préférence NH₄^{⊕} ou HN^{⊕} (C₂H₅)₃,
R⁴, R⁵ et R⁶ représentant chacun, indépendamment les uns des autres, un groupe alkyle en C₁-C₁₈, plus spécialement en C₁-C₄ ou un groupe alkyle en C₁-C₁₈ substitué, plus spécialement hydroxyalkyle, ou aralkyle, plus spécialement benzyle,
A représente un radical hydrocarboné en C₁-C₇₀ portant éventuellement des substituants hydroxy, carboxy, époxy, (méth)acrylate ou amino et qui peut le cas échéant être interrompu par des groupes éther, ester, amide, imino, uréthane, urée ou carbonate non voisins,
R représente un groupe alkyle en C₁-C₁₂ ou un groupe phényle,
a est égal à 0 ou 1,
b est égal à 0 ou 1,
k est un nombre allant de 0 à 50,
c est égal à 1 ou 2,
m est un nombre allant de 0 à 50 et
n est un nombre allant de 10 à 1 000,
sous réserve qu'il y a au moins un groupe terminal de formule (4b) lorsque la chaîne de polysiloxane ne contient que des motifs de structure de formule (2) et/ou (3).

2. Polysiloxane selon la revendication 1, **caractérisé en ce que** Q représente un radical hydrocarboné bivalent contenant de 2 à 40 atomes de carbone et le cas échéant un ou plusieurs groupes éther, imino, ester, amide, uréthane, urée ou carbonate, des groupes biuret, uretdione, isocyanurate, allophanate, des motifs de structure 2,4,6-trioxo-tétrahydro-1,3,5-oxadiazine ou leurs combinaisons, et M^{⊕} représente NH₄^{⊕} ou 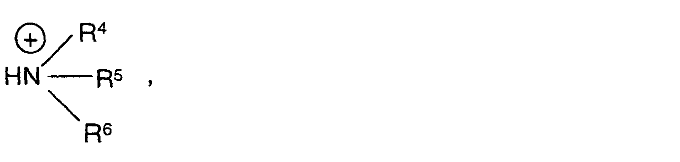 R⁴ à R⁶ représentant chacun, indépendamment les uns des autres, un groupe alkyle en C₁-C₄.

3. Polysiloxane selon au moins une des revendications 1 et 2, **caractérisé en ce que**
A représente un groupe de formule 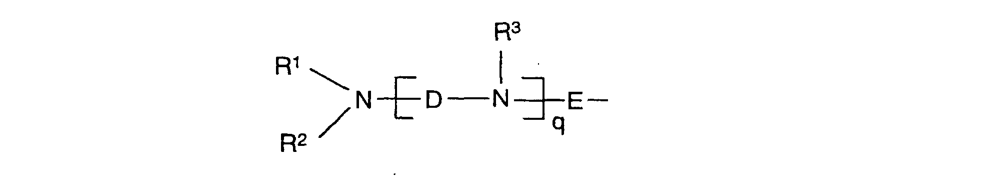 dans laquelle
R¹ à R³ représentent chacun, indépendamment les uns des autres, l'hydrogène ou un radical hydrocarboné monovalent en C₂-C₆₀ contenant le cas échéant un ou plusieurs groupes éther, imino, amide, urée, uréthane, ester ou carbonate non voisins et le cas échéant un ou deux substituants carboxyle -COOH ou leurs sels COO^{⊖}M₁^{⊕} et/ou un ou deux substituants hydroxyle, sous réserve que
R¹ et R² ne peuvent être reliés tous deux par un groupe carbonyle à l'atome d'azote,
D et E représentent chacun, indépendamment l'un de l'autre, un radical hydrocarboné bivalent en C₂-C₂₀ portant un substituant hydroxyle ou qui peut être interrompu par des atomes d'oxygène non voisins,
M₁^{⊕} représente l'ion complémentaire des groupes carboxyle neutralisés (-COO^{⊖}M₁^{⊕}), à savoir 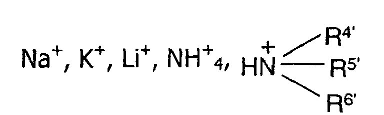 R^{4'} à R^{6'} représentant chacun, indépendamment les uns des autres, un groupe alkyle en C₁-C₁₈ portant éventuellement un substituant hydroxy,
et
q est un nombre allant de 0 à 3.

4. Polysiloxane selon au moins une des revendications 1 à 3, **caractérisé en ce que**
- il a une masse moléculaire moyenne (Mw) de 1 000 à 100 000 g/mol,
- le motif de structure de formule (1) a une teneur en groupes cyanurée de 0,05 à 5 mmol/g de polysiloxane actif et
- les motifs de structure de formule (2) contiennent de 0 à 2 mmol de groupes fonctionnels par gramme de polysiloxane actif, étant précisé que ces "groupes fonctionnels" consistent de préférence en groupes hydyroxy et/ou carboxy.

5. Polysiloxane selon au moins une des revendications 1 à 4, **caractérisé en ce qu'**il consiste en motifs de structure de formules (1) et (3) et le cas échéant (4a) et/ou (4b).

6. Procédé pour la préparation des polysiloxanes selon la revendication 1, **caractérisé en ce que** l'on fait réagir un polysiloxane contenant des motifs de structure de formule (5)
[B'R_{b}SiO_{(3-b)/2}]ₘ (5)
et le cas échéant de formule (2)
[ARₐSiO_{(3-a)/2}]ₖ (2)
et/ou de formule (3)
[R_{c}SiO_{(4-c)/2}]ₙ (3)
et le cas échéant au moins un groupe terminal choisi parmi ceux qui répondent aux formules
R₃SiO_{1/2} (4a),
B'R₂SiO_{1/2} (4b')
et
AR₂SiO_{1/2} (4c)
A, R, a, b, c, k, m et n ayant les significations indiquées ci-dessus et
B' représente un groupe de formule
-Q-NCO,
dans laquelle
q a les significations indiquées ci-dessus,
avec le cyanamide et un agent neutralisant des groupes cyanamide, de préférence avec un sel formé à partir du cyanamide et d'un agent neutralisant.

7. Dispersions aqueuses contenant au moins un polysiloxane selon la revendication 1.

8. Procédé pour la préparation des dispersions selon la revendication 7, **caractérisé en ce que** l'on disperse dans l'eau au moins un polysiloxane selon la revendication 1 dont les groupes cyanurée sont neutralisés par des bases et sont à l'état de sels, le cas échéant en présence d'un solvant approprié, puis on distille le solvant éventuellement présent.

9. Composition hydrofugeante contenant
a) au moins un polysiloxane selon la revendication 1 et
b) au moins un composant du groupe B₁ à B₄, à savoir
B₁ : un copolymère anionique,
B₂ : l'acide polyaspartique ou l'un de ses dérivés,
B₃ : une paraffine et
B₄ : un produit d'addition d'isocyanate.

10. Composition hydrofugeante selon la revendication 9, **caractérisée en ce que** le composant B1 est un copolymère anionique préparé par copolymérisation radicalaire de (les proportions indiquées se rapportant au poids du mélange de monomères).
α) 10 à 90 mol% de l'ester d'un acide carboxylique à insaturation monoéthylénique en C₃-C₅ et d'un alcool en C₄-C₄₀,
β) 90 à 10 mol% d'un acide carboxylique à insaturation monoéthylénique
γ) 0 à 20 mol% d'un anhydride d'acide dicarboxylique à insaturation monoéthylénique en C₄-C₆,
δ) 0 à 30 mol% d'une oléfine en C₂-C₈ (isobutène, diisobutylène) et
ε) 0 à 10 mol% d'un autre comonomère du groupe consistant en le styrène, l'α-méthylstyrène, les esters vinyliques d'acides carboxyliques en C₁-C₈,
suivie le cas échéant d'une réaction partielle des groupes anhydride avec un alcool primaire ou secondaire en C₁-C₄₀ et/ou une amine primaire ou secondaire contenant un ou deux groupes alkyle ou alcényle en C₁-C₁₈, sous réserve qu'au moins 20 mol% des groupes carboxyle correspondant aux groupes anhydrides n'ont pas réagi avec un alcool et/ou une amine mais sont neutralisés par une base, au moins 50 mol% des groupes carboxyle du composant b) étant neutralisés.

11. Composition hydrofugeante selon au moins une des revendications 9 et 10, **caractérisée en ce que** le composant B2 est un dérivé de l'acide polyaspartique ayant un poids moléculaire moyen, moyenne en nombre, de 700 à 300 000, de préférence de 1 300 à 16 000 g/mol, qu'on obtient en faisant réagir
B₂-A) un polysuccinimide au poids moléculaire moyen, moyenne en nombre, de 500 à 10 000, de préférence de 500 à 6 000, plus spécialement de 1 000 à 4 000, obtenu de préférence par réaction de l'anhydride maléique avec une solution d'ammoniac suivie d'une condensation, avec
B₂-B) 5 à 90, de préférence 20 à 80 mol%, par rapport aux motifs succinimides du polysuccinimide, d'une amine primaire et/ou secondaire dont les substituants de l'azote contiennent de 1 à 60, de préférence de 1 à 36 atomes de carbone et peuvent être substitués par des groupes hydroxy et/ou interrompus par des atomes d'oxygène, au moins 2,5 mol%, de préférence au moins 15 mol% et plus spécialement au moins 30 mol% des substituants de l'azote de l'amine contenant au moins 12 atomes de carbone, et avec
B₂-C) 95 à 10 mol%, de préférence de 80 à 20 mol%, d'une base provoquant l'ouverture du cycle en présence d'eau.

12. Composition hydrofugeante selon au moins une des revendications 9 à 11, **caractérisée en ce que** le composant B₃ est un hydrocarbure paraffinique éventuellement substitué par des groupes hydroxy et/ou carboxyle.

13. Composition hydrofugeante selon au moins une des revendications 9 à 12, **caractérisée en ce que** le composant B₄ est un produit de réaction de
B₄-a) un polyisocyanate organique
B₄-b) 0,0 à 0,9 équivalent d'un alcool en C₆-C₂₄, de préférence en C₁₂-C₁₈, par équivalent de NCO ou de NCO latent contenu dans B₄-a),
B₄-c) 0,1 à 1,0 mol de cyanamide par équivalent de NCO ou de NCO latent contenu dans B₄-a) et
B₄-d) l'ammoniac ou une amine volatile.

14. Procédé pour hydrofuger des substrats, **caractérisé en ce que** l'on traite le substrat par au moins un polysiloxane selon au moins une des revendications 1 à 5 ou au moins une dispersion de polysiloxane selon la revendication 7 ou au moins une composition hydrofugeante selon au moins une des revendications 9 à 13.

15. Substrats hydrofugés à l'aide d'un agent hydrofugeant contenant au moins un polysiloxane selon la revendication 1 ou d'une composition hydrofugeante selon la revendication 9

16. Utilisation des compositions hydrofugeantes selon au moins une des revendications 9 à 13 pour l'hydrofugeage du cuir et/ou des peaux.
